(19) Europäisches Patentamt
European Patent Office
Office européen des brevets

(11) EP 2 885 970 A1

# (12) EUROPEAN PATENT APPLICATION

(43) Date of publication:
**24.06.2015 Bulletin 2015/26**

(21) Application number: **13199261.2**

(22) Date of filing: **21.12.2013**

(51) Int Cl.:
***A01N 43/56*** (2006.01) ***A01N 45/02*** (2006.01)
***A01N 43/653*** (2006.01) ***A01N 43/40*** (2006.01)
***A01P 3/00*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bayer CropScience AG**
**40789 Monheim (DE)**

(72) Inventor: **The designation of the inventor has not yet been filed**

(74) Representative: **BIP Patents**
**c/o Bayer Intellectual Property GmbH**
**Creative Campus Monheim**
**Alfred-Nobel-Straße 10**
**40789 Monheim (DE)**

## (54) Fungicide compositions comprising compound I, at least one succinate dehydrogenase (SDH) inhibitor and at least one triazole fungicide

(57) The present invention relates to novel fungicide compositions comprising (A) N-[1-(2,4-dichlorophenyl)-1-methoxypropan-2-yl]-3-(difluoromethyl)-1-methyl-1H-pyrazole-4-carboxamide, (B) at least one further succinate dehydrogenase (SDH) inhibitor and optionally further (C) at least one triazole fungicide, whereas the invention especially comprises such novel fungicide compositions of (A) N-[1-(2,4-dichlorophenyl)-1-methoxypropan-2-yl]-3-(difluoromethyl)-1-methyl-1H-pyrazole-4-carboxamide, (B) bixafen and (C) at least one triazole fungicide, which is preferably prothioconazole. The present invention also relates to the use of such novel fungicide compositions for improving growth in crops, comprising preventively and/or curatively controlling pathogenic fungi and/or nematodes, resistance management, and improving plant physiology effects by enhancing root growth, improving greening, improving water use efficiency, improving nitrogen-use efficacy, delaying senescence and enhancing yield.

EP 2 885 970 A1

## Description

The present invention relates to novel fungicide compositions comprising (A) the compound according to formula (I)

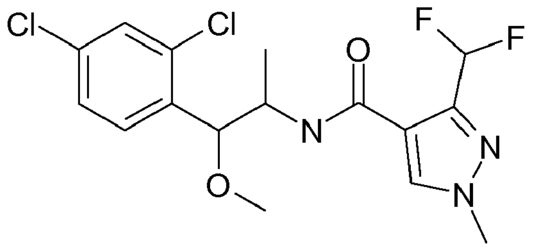

(I)

(IUPAC name N-[1-(2,4-dichlorophenyl)-1-methoxypropan-2-yl]-3-(difluoromethyl)-1-methyl-1H-pyrazole-4-carboxamide (B) one further succinate dehydrogenase (SDH) inhibitor as specified below and (C) one triazole fungicide as specified below.

The present invention also relates to the use of such novel fungicide compositions for improving growth in crops, comprising preventively and/or curatively controlling pathogenic fungi and/or nematodes, resistance management and improving plant physiology effects by enhancing root growth, improving greening, improving water use efficiency, improving nitrogen-use efficacy, delaying senescence and enhancing yield.

<u>INTRODUCTION AND PRIOR ART:</u>

International patent applications WO-A 2010/000612 and WO-A 2011/048120 generally disclose fungicides and compositions comprising Pyrazolyl-ethylphenylcarboxamide derivatives and compounds capable of inhibiting the transport of electrons of the respiratory chain in phytopathogenic fungal organisms. Object of these earlier inventions are mainly binary compositions referring inter alia to the binary combination of N-[1-(2,4-dichlorophenyl)-1-methoxypropan-2-yl]-3-(difluoromethyl)-1-methyl-1H-pyrazole-4-carboxamide and a second compound, e.g. Isopyrazam, Fluxapyroxad or N-[9-(Dichlormethylen)-1,2,3,4-tetrahydro-1,4-methanonaphthalen-5-yl]-3-(difluormethyl)-1-methyl-1H-pyrazol-4-carboxamid. Further it is generally stated therein, that such binary compositions may further comprise additional fungicides but no concrete ternary compositions are specified.

Furtheron the reference do not describe the use of specific ternary compositions for preventively and/or curatively controlling pathogenic fungi, comprising resistance management, in cereals and/or relating to selected pathogenic fungi.

Additionally, in any case the use of such compositions for improving plant physiology effects such as e.g. for enhanced root growth, improved greening, improved water use efficiency, improved nitrogen-use efficacy, delayed senescence and enhanced yield, either alone or in combination with one or more of the effects as described herein, has not been mentioned in such earlier prior art documents and is thus clearly new.

The beneficial effects and new use of the selected active ingredient compositions of the present invention have now been shown by the inventors of the present invention for the first time and were not obviously suggested by the mentioned documents.

An overview of molecular mechanisms and evolution of resistance to SDHI fungicides in phytopathogenic fungi is given in Avenot, H F et al., Crop Protection 29 (2010) 643-651. This article also describes cross-resistance relationships between the SDHI fungicides boscalid, penthiopyrad, and fluopyram. Assuming a positive cross-resistance pattern for fungicides acting in mitochondrial complex II, the sensitivity profile of selected *Alternaria alternata* boscalid-resistant mutants and wild-type isolates to penthiopyrad and fluopyram was determined. Whereas the *Alternaria alternata* boscalid-resistant isolates carrying SDH- mutations were not affected by penthiopyrad, fluopyram *in vitro* strongly inhibited the mycelial growth of *Alternaria alternata* SDH-mutants. The discrepancy of cross-resistance pattern of fluopyram with compounds from the same cross-resistance group probably results from the higher intrinsic activity observed for this fungicide and this also suggests that the binding site of fluopyram in complex II may slightly differ from that of other SDHI fungicides and that additional unique mechanism of resistance to fluopyram may arise. Another publication by the same author (Avenot, H F et al., Pest Manag Sci 2011, (wileyonlinelibrary.com) DOI 10.1002/ps.2311) pertains to the Molecular characterization of boscalid- and penthiopyrad-resistant isolates of *Didymella bryoniae* causing gummi stem blight and assessment of their sensitivity to fluopyram.

The use of a fungicidal composition comprising N-[1-(2,4-dichlorophenyl)-1-methoxypropan-2-yl]-3-(difluoromethyl)-1-methyl-1H-pyrazole-4-carboxamide and at least one further succinate dehydrogenase (SDH) inhibitor for improving growth in crops, wherein the improvement is characterized by at least one of the effects of the group consisting of preventively and/or curatively controlling pathogenic fungi and/or nematodes, resistance management, and improved

plant physiology effects selected from enhanced root growth, improved greening, improved water use efficiency, improved nitrogen-use efficiency, delayed senescence and enhanced yield is neither described nor suggested in these publications.

It is always of high interest in agriculture to provide novel pesticidal combinations or novel compositions with improved effects for use in protecting crops and improving plant growth and improving plant physiology effects. In this context special focus is put on improved fungicidal activity and synergistic effects of such novel active compound compositions as well as on the combination of a fast efficiency besides a long lasting efficiency to provide increased flexibility with regard to the time of application. In this context, one aim is to provide a new active compound composition, which allows application of the composition when the plant has already been infested with the pathogens and thus achieve a curative effect.

A further aspect with respect to improved efficiency of such novel compound compositions comprises minimization of the doses of chemical products spread in the environment and reduction of the costs of the treatment.

WO-A 2010/000612 and WO-A 2011/048120 describe compositions of N-[1-(2,4-dichlorophenyl)-1-methoxypropan-2-yl]-3-(difluoromethyl)-1-methyl-1H-pyrazole-4-carboxamide and SDH inhibitors (complex II inhibitors) which only refer to the treatment of *Rhizoctonia solani, Botrytis cinerea and Septoria tritici.*

PROBLEM TO BE SOLVED:

It was the object of the present invention to provide novel active compound compositions with superior effects in protecting crops and improving plant growth wherein the improvement is characterized by at least one of the effects of the group consisting of preventively and/or curatively controlling pathogenic fungi and/or nematodes, resistance management and improving plant physiology effects by enhancing root growth, improving greening, improving water use efficiency, improving nitrogen-use efficacy, delaying senescence and enhancing yield.

DESCRIPTION OF THE INVENTION:

The problem underlying the present invention has been solved by providing novel compositions as described below, wherein the improvement is characterized by at least one of the effects of the group consisting of preventively and/or curatively controlling pathogenic fungi, resistance management and improving plant physiology effects by enhancing root growth, improving greening, improving water use efficiency, improving nitrogen-use efficacy, delaying senescence and enhancing yield.

The mixtures according to the present invention are now described in detail:

The composition according to the present invention comprises

(A) the compound of the general formula (I)

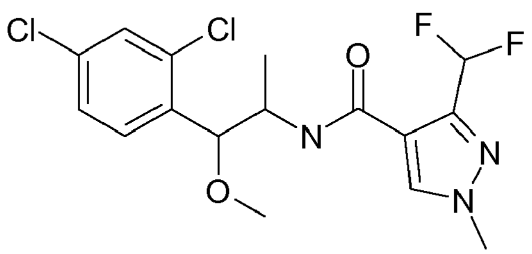

(I)

and agrochemically acceptable salts/isomers/enantiomers/tautomers/N-oxides of this compound,

B) one fungicide selected from the group of Succinate dehydrogenase inhibitors (SDHIs) consisting of bixafen (B.1), penflufen (B.2), sedaxane (B.3), isopyrazam (B.4), penthiopyrad (B.5), furametpyr (B.6), boscalid (B.7), fluxapyroxad (B.8), N-[1-(2,4-dichlorophenyl)-1-methoxypropan-2-yl]-3-(difluoromethyl)-1-methyl-1H-pyrazole-4-carboxamide (B.9), N-[9-(dichloromethylen)-1,2,3,4-tetrahydro-1,4-methanonaphthalen-5-yl]-3-(difluoromethyl)-1-methyl-1 H-pyrazol-4-carboxamide (benzovindiflupyr) (B.10),N-[(1S,4R)-9-(dichloromethylen)-1,2,3,4-tetrahydro-1,4-methanonaphthalen-5-yl]-3-(difluoromethyl)-1-methyl-1H-pyrazol-4-carboxamide (B.11), N-[(1R,4S)-9-(dichloromethylen)-1,2,3,4-tetrahydro-1,4-methanonaphthalen-5-yl]-3-(difluoromethyl)-1-methyl-1H-pyrazol-4-carboxamide (B.12), 3-(difluoromethyl)-1-methyl-N-[2-(1,1,2,2-tetrafluoroethoxy)phenyl]-1H-pyrazol-4-carboxamide (B.13), 3-(difluoromethyl)-N-[4-fluoro-2-(1,1,2,3,3,3-hexafluoropropoxy)phenyl] -1-methyl-1H-pyrazol-4-carboxamide (B. 14), 3-(difluoromethyl)-1-methyl-N-[2-(1,1,2,3,3,3-hexafluoropropoxy)phenyl]-1-methyl-1H-pyrazol-4-carboxamide (B.15), 3-(difluoromethyl)-1-methyl-N-[2-(3-Cl-1,1,2-trifluoroethoxy)phenyl]-1H-pyrazol-4-carboxamide (B.16),

C) one fungicide selected from the group of ergosterol biosynthesis inhibitors consisting of azaconazole (C.1), bitertanol (C.2), bromuconazole (C.3), cyproconazole (C.4), diclobutrazol (C.5), difenoconazole (C.6), diniconazole (C.7), diniconazole-M (C.8), epoxiconazole (C.9), etaconazole (C.10), fenbuconazole (C.11), fluquinconazole (C.12), flusilazole (C.13), flutriafol (C.14), furconazole (C.15), furconazole-cis (C.16), hexaconazole (C.17), imibenconazole (C.18), ipconazole (C.19), metconazole (C.20), myclobutanil (C.21), paclobutrazol (C.22), penconazole (C.23), propiconazole (C.24), prothioconazole (C.25), quinconazole (C.26), simeconazole (C.27), tebuconazole (C.28), tetraconazole (C.29), triadimefon (C.30), triadimenol (C.31), triticonazole (C.32), uniconazole (C.33), uniconazole-P (C.34), voriconazole (C.35), 1-(4-chlorophenyl)-2-(1H-1,2,4-triazol-1-yl)cycloheptanol (C.36).

The compound according to formula (I) (IUPAC name: N-[1-(2,4-dichlorophenyl)-1-methoxypropan-2-yl]-3-(difluoromethyl)-l-methyl-1H-pyrazole-4-carboxamide) is widely known as a fungicide (WO2010000612 and WO201104812), belonging to the group of succinate dehydrogenase (SDH) inhibitors.

The compounds of formula I comprise 4 stereoisomeric forms (2 diastereomer isomers and each diastereomer isomer comprises 2 enantiomers), with a ratio of the two anti forms to the two syn forms of preferably 10:1 1 to 1:10, even more preferably 3:1 to 1:3 and most preferably 3:1 to 1:1.

Each of the four stereoisomeric can be used either alone or in combination with any other the other stereoisomers in the compositions according to the invention.

The compound according to formula (I) includes its four stereoisomeric forms; the compound of formula I comprise 4 stereoisomeric forms: 2 diastereomer isomers (*syn*- and *anti*-) and each diastereomer isomer comprises 2 enantiomers; N-[(1S,2S)-1-(2,4-dichlorophenyl)-1-methoxypropan-2-yl]-3-(difluoromethyl)-1-methyl-1H-pyrazole-4-carboxamide (A.1), N-[(1R,2R)-1-(2,4-dichlorophenyl)-1-methoxypropan-2-yl]-3-(difluoromethyl)-1-methyl-1H-pyrazole-4-carboxamide (A.2), N-[(1R,2S)-1-(2,4-dichlorophenyl)-1-methoxypropan-2-yl]-3-(difluoromethyl)-1-methyl-1H-pyrazole-4-carboxamide (A.3), and N- [(1S,2R)-1-(2,4-dichlorophenyl)-1-methoxypropan-2-yl]-3-(difluoromethyl)-1-methyl-1H-pyrazole-4-carboxamide (A.4),

According to the invention, a "racemic compound" means a mixture of at least two enantiomers in a ratio of substantially 50 : 50. The compounds of formula I comprise 4 stereoisomeric forms (2 diastereomer isomers and each diastereomer isomer comprises 2 enantiomers).

A preferred compound according to the invention is the compound according to formula (Ia)

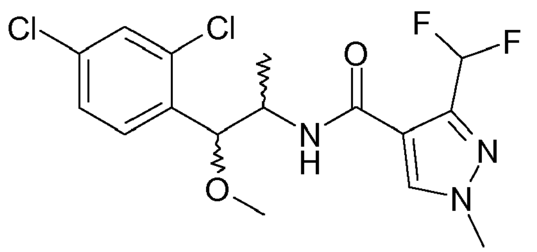

(Ia)

In the context of the present invention a succinate dehydrogenase (SDH) inhibitor refers to a compound which is capable of inhibiting succinate dehydrogenase in phytopathogenic fungal organisms, also being known as complex II inhibitor.

In this context it is noted that at present, the triazole fungicide prothioconazole is classified as a triazole fungicide according to the widely accepted so-called FRAC-classification (classification by the Fungicide Resistance Action Committee), although it is considered by the FRAC group to establish a new separate group of fungicides - "triazolinthiones" -, referring to triazole fungicides with a sulphur group such as e.g. prothioconazole. For reasons of clarification, the definition of triazole fungicides according to the present invention explicitly comprises prothioconazole.

Preferably, at least one SDH inhibitor is selected from the group consisting of bixafen (B.1), isopyrazam (B.4), penthiopyrad (B.5), boscalid (B.7) and fluxapyroxad (B.8), N-[9-(dichloromethylen)-1,2,3,4-tetrahydro-1,4-methanonaphthalen-5-yl]-3-(difluoromethyl)-1-methyl-1H-pyrazol-4-carboxamide (B.10). The most preferred SDH inhibitor is isopyrazam (B.4). Another most preferred SDH inhibitor is N-[9-(dichloromethylen)-1,2,3,4-tetrahydro-1,4-methanonaphthalen-5-yl]-3-(difluoromethyl)-1-methyl-1H-pyrazol-4-carboxamide (B.10).

Preferably the triazole fungicide is selected from the group consisting of cyproconazole (C.4), epoxiconazole (C.9), propiconazole (C.24), prothioconazole (C.25) and tebuconazole (C.28). The most preferred triazole fungicide is prothioconazole (C.25). Another most preferred triazole fungicide is epoxiconazole (C.9)

In this context it is noted that at present, the most preferred triazole fungicide prothioconazole is classified as a triazole fungicide according to the widely accepted so-called FRAC-classification (classification by the Fungicide Resistance Action Committee), although it is considered by the FRAC group to establish a new separate group of

fungicides - "triazolinthiones" -, referring to triazole fungicides with a sulphur group such as e.g. prothioconazole. For reasons of clarification, the definition of triazole fungicides according to the present invention explicitly comprises prothioconazole.

Thus the specific ternary compositions comprising

A) N-[1-(2,4-dichlorophenyl)-1-methoxypropan-2-yl]-3-(difluoromethyl)-1-methyl-1H-pyrazole-4-carboxamide,

B) N-[9-(Dichlormethylen)-1,2,3,4-tetrahydro-1,4-methanonaphthalen-5-yl]-3-(difluormethyl)-1-methyl-1H-pyrazol-4-carboxamid (benzovindiflupyr) or Isopyrazam

C) and a fungicide which is selected from the group of triazole fungicides selected from the group consisting of cyproconazole (C.4), epoxiconazole (C.9), propiconazole (C.24), prothioconazole (C.25) and tebuconazole (C.28). The most preferred triazole fungicide is prothioconazole (C.25).

Preferred is also the ternary composition comprising of

A) N-[1-(2,4-dichlorophenyl)-1-methoxypropan-2-yl]-3-(difluoromethyl)-1-methyl-1H-pyrazole-4-carboxamide,

B) N-[9-(Dichlormethylen)-1,2,3,4-tetrahydro-1,4-methanonaphthalen-5-yl]-3-(difluormethyl)-1-methyl-1H-pyrazol-4-carboxamid and

C) prothioconazole.

Preferred is also the ternary composition comprising

A) N-[1-(2,4-dichlorophenyl)-1-methoxypropan-2-yl]-3-(difluoromethyl)-1-methyl-1H-pyrazole-4-carboxamide,

B) N-[9-(Dichlormethylen)-1,2,3,4-tetrahydro-1,4-methanonaphthalen-5-yl]-3-(difluormethyl)-1-methyl-1H-pyrazol-4-carboxamid and

C) epoxiconazole.

Preferred is also the ternary composition comprising

A)N-[1-(2,4-dichlorophenyl)-1-methoxypropan-2-yl]-3-(difluoromethyl)-1-methyl-1H-pyrazole-4-carboxamide,

B) Isopyrazam and

C) Prothioconazole.

Preferred is also the ternary composition comprising

A) N-[1-(2,4-dichlorophenyl)-1-methoxypropan-2-yl]-3-(difluoromethyl)-1-methyl-1H-pyrazole-4-carboxamide,

B) Isopyrazam and

C) epoxiconazole.

Preference is given to the following ternary compositions selected from the group consisting of the mixing partners as described below:

(A)+(B.1)+(C.1), (A)+(B.1)+(C.2), (A)+(B.1)+(C.3), (A)+(B.1)+(C.4), (A)+(B.1)+(C.5), (A)+(B.1)+(C.6), (A)+(B.1)+(C.7), (A)+(B.1)+(C.8), (A)+(B.1)+(C.9), (A)+(B.1)+(C.10), (A)+(B.1)+(C.11), (A)+(B.1)+(C.12), (A)+(B.1)+(C.13), (A)+(B.1)+(C.14), (A)+(B.1)+(C.15), (A)+(B.1)+(C.16), (A)+(B.1)+(C.17), (A)+(B.1)+(C.18), (A)+(B.1)+(C.19), (A)+(B.1)+(C.20), (A)+(B.1)+(C.21), (A)+(B.1)+(C.22), (A)+(B.1)+(C.23), (A)+(B.1)+(C.24), (A)+(B.1)+(C.25), (A)+(B.1)+(C.26), (A)+(B.1)+(C.27), (A)+(B.1)+(C.28), (A)+(B.1)+(C.29), (A)+(B.1)+(C.30), (A)+(B.1)+(C.31), (A)+(B.1)+(C.32), (A)+(B.1)+(C.33), (A)+(B.1)+(C.34), (A)+(B.1)+(C.35), (A)+(B.1)+(C.36), (A)+(B.2)+(C.1), (A)+(B.2)+(C.2), (A)+(B.2)+(C.3), (A)+(B.2)+(C.4), (A)+(B.2)+(C.5), (A)+(B.2)+(C.6),

(A)+(B.2)+(C.7), (A)+(B.2)+(C.8), (A)+(B.2)+(C.9), (A)+(B.2)+(C.10), (A)+(B.2)+(C.11), (A)+(B.2)+(C.12), (A)+(B.2)+(C.13), (A)+(B.2)+(C.14), (A)+(B.2)+(C.15), (A)+(B.2)+(C.16), (A)+(B.2)+(C.17), (A)+(B.2)+(C.18), (A)+(B.2)+(C.19), (A)+(B.2)+(C.20), (A)+(B.2)+(C.21), (A)+(B.2)+(C.22), (A)+(B.2)+(C.23), (A)+(B.2)+(C.24), (A)+(B.2)+(C.25), (A)+(B.2)+(C.26), (A)+(B.2)+(C.27), (A)+(B.2)+(C.28), (A)+(B.2)+(C.29), (A)+(B.2)+(C.30), (A)+(B.2)+(C.31), (A)+(B.2)+(C.32), (A)+(B.2)+(C.33), (A)+(B.2)+(C.34), (A)+(B.2)+(C.35), (A)+(B.2)+(C.36), (A)+(B.3)+(C.1), (A)+(B.3)+(C.2), (A)+(B.3)+(C.3), (A)+(B.3)+(C.4), (A)+(B.3)+(C.5), (A)+(B.3)+(C.6), (A)+(B.3)+(C.7), (A)+(B.3)+(C.8), (A)+(B.3)+(C.9), (A)+(B.3)+(C.10), (A)+(B.3)+(C.11), (A)+(B.3)+(C.12), (A)+(B.3)+(C.13), (A)+(B.3)+(C.14), (A)+(B.3)+(C.15), (A)+(B.3)+(C.16), (A)+(B.3)+(C.17), (A)+(B.3)+(C.18), (A)+(B.3)+(C.19), (A)+(B.3)+(C.20), (A)+(B.3)+(C.21), (A)+(B.3)+(C.22), (A)+(B.3)+(C.23), (A)+(B.3)+(C.24), (A)+(B.3)+(C.25), (A)+(B.3)+(C.26), (A)+(B.3)+(C.27), (A)+(B.3)+(C.28), (A)+(B.3)+(C.29), (A)+(B.3)+(C.30), (A)+(B.3)+(C.31), (A)+(B.3)+(C.32), (A)+(B.3)+(C.33), (A)+(B.3)+(C.34), (A)+(B.3)+(C.35), (A)+(B.3)+(C.36), (A)+(B.4)+(C.1), (A)+(B.4)+(C.2), (A)+(B.4)+(C.3), (A)+(B.4)+(C.4), (A)+(B.4)+(C.5), (A)+(B.4)+(C.6), (A)+(B.4)+(C.7), (A)+(B.4)+(C.8), (A)+(B.4)+(C.9), (A)+(B.4)+(C.10), (A)+(B.4)+(C.11), (A)+(B.4)+(C.12), (A)+(B.4)+(C.13), (A)+(B.4)+(C.14), (A)+(B.4)+(C.15), (A)+(B.4)+(C.16), (A)+(B.4)+(C.17), (A)+(B.4)+(C.18), (A)+(B.4)+(C.19), (A)+(B.4)+(C.20), (A)+(B.4)+(C.21), (A)+(B.4)+(C.22), (A)+(B.4)+(C.23), (A)+(B.4)+(C.24), (A)+(B.4)+(C.25), (A)+(B.4)+(C.26), (A)+(B.4)+(C.27), (A)+(B.4)+(C.28), (A)+(B.4)+(C.29), (A)+(B.4)+(C.30), (A)+(B.4)+(C.31), (A)+(B.4)+(C.32), (A)+(B.4)+(C.33), (A)+(B.4)+(C.34), (A)+(B.4)+(C.35), (A)+(B.4)+(C.36), (A)+(B.5)+(C.1), (A)+(B.5)+(C.2), (A)+(B.5)+(C.3), (A)+(B.5)+(C.4), (A)+(B.5)+(C.5), (A)+(B.5)+(C.6), (A)+(B.5)+(C.7), (A)+(B.5)+(C.8), (A)+(B.5)+(C.9), (A)+(B.5)+(C.10), (A)+(B.5)+(C.11), (A)+(B.5)+(C.12), (A)+(B.5)+(C.13), (A)+(B.5)+(C.14), (A)+(B.5)+(C.15), (A)+(B.5)+(C.16), (A)+(B.5)+(C.17), (A)+(B.5)+(C.18), (A)+(B.5)+(C.19), (A)+(B.5)+(C.20), (A)+(B.5)+(C.21), (A)+(B.5)+(C.22), (A)+(B.5)+(C.23), (A)+(B.5)+(C.24), (A)+(B.5)+(C.25), (A)+(B.5)+(C.26), (A)+(B.5)+(C.27), (A)+(B.5)+(C.28), (A)+(B.5)+(C.29), (A)+(B.5)+(C.30), (A)+(B.5)+(C.31), (A)+(B.5)+(C.32), (A)+(B.5)+(C.33), (A)+(B.5)+(C.34), (A)+(B.5)+(C.35), (A)+(B.5)+(C.36), (A)+(B.6)+(C.1), (A)+(B.6)+(C.2), (A)+(B.6)+(C.3), (A)+(B.6)+(C.4), (A)+(B.6)+(C.5), (A)+(B.6)+(C.6), (A)+(B.6)+(C.7), (A)+(B.6)+(C.8), (A)+(B.6)+(C.9), (A)+(B.6)+(C.10), (A)+(B.6)+(C.11), (A)+(B.6)+(C.12), (A)+(B.6)+(C.13), (A)+(B.6)+(C.14), (A)+(B.6)+(C.15), (A)+(B.6)+(C.16), (A)+(B.6)+(C.17), (A)+(B.6)+(C.18), (A)+(B.6)+(C.19), (A)+(B.6)+(C.20), (A)+(B.6)+(C.21), (A)+(B.6)+(C.22), (A)+(B.6)+(C.23), (A)+(B.6)+(C.24), (A)+(B.6)+(C.25), (A)+(B.6)+(C.26), (A)+(B.6)+(C.27), (A)+(B.6)+(C.28), (A)+(B.6)+(C.29), (A)+(B.6)+(C.30), (A)+(B.6)+(C.31), (A)+(B.6)+(C.32), (A)+(B.6)+(C.33), (A)+(B.6)+(C.34), (A)+(B.6)+(C.35), (A)+(B.6)+(C.36), (A)+(B.7)+(C.1), (A)+(B.7)+(C.2), (A)+(B.7)+(C.3), (A)+(B.7)+(C.4), (A)+(B.7)+(C.5), (A)+(B.7)+(C.6), (A)+(B.7)+(C.7), (A)+(B.7)+(C.8), (A)+(B.7)+(C.9), (A)+(B.7)+(C.10), (A)+(B.7)+(C.11), (A)+(B.7)+(C.12), (A)+(B.7)+(C.13), (A)+(B.7)+(C.14), (A)+(B.7)+(C.15), (A)+(B.7)+(C.16), (A)+(B.7)+(C.17), (A)+(B.7)+(C.18), (A)+(B.7)+(C.19), (A)+(B.7)+(C.20), (A)+(B.7)+(C.21), (A)+(B.7)+(C.22), (A)+(B.7)+(C.23), (A)+(B.7)+(C.24), (A)+(B.7)+(C.25), (A)+(B.7)+(C.26), (A)+(B.7)+(C.27), (A)+(B.7)+(C.28), (A)+(B.7)+(C.29), (A)+(B.7)+(C.30), (A)+(B.7)+(C.31), (A)+(B.7)+(C.32), (A)+(B.7)+(C.33), (A)+(B.7)+(C.34), (A)+(B.7)+(C.35), (A)+(B.7)+(C.36), (A)+(B.8)+(C.1), (A)+(B.8)+(C.2), (A)+(B.8)+(C.3), (A)+(B.8)+(C.4), (A)+(B.8)+(C.5), (A)+(B.8)+(C.6), (A)+(B.8)+(C.7), (A)+(B.8)+(C.8), (A)+(B.8)+(C.9), (A)+(B.8)+(C.10), (A)+(B.8)+(C.11), (A)+(B.8)+(C.12), (A)+(B.8)+(C.13), (A)+(B.8)+(C.14), (A)+(B.8)+(C.15), (A)+(B.8)+(C.16), (A)+(B.8)+(C.17), (A)+(B.8)+(C.18), (A)+(B.8)+(C.19), (A)+(B.8)+(C.20), (A)+(B.8)+(C.21), (A)+(B.8)+(C.22), (A)+(B.8)+(C.23), (A)+(B.8)+(C.24), (A)+(B.8)+(C.25), (A)+(B.8)+(C.26), (A)+(B.8)+(C.27), (A)+(B.8)+(C.28), (A)+(B.8)+(C.29), (A)+(B.8)+(C.30), (A)+(B.8)+(C.31), (A)+(B.8)+(C.32), (A)+(B.8)+(C.33), (A)+(B.8)+(C.34), (A)+(B.8)+(C.35), (A)+(B.8)+(C.36), (A)+(B.9)+(C.1), (A)+(B.9)+(C.2), (A)+(B.9)+(C.3), (A)+(B.9)+(C.4), (A)+(B.9)+(C.5), (A)+(B.9)+(C.6), (A)+(B.9)+(C.7), (A)+(B.9)+(C.8), (A)+(B.9)+(C.9), (A)+(B.9)+(C.10), (A)+(B.9)+(C.11), (A)+(B.9)+(C.12), (A)+(B.9)+(C.13), (A)+(B.9)+(C.14), (A)+(B.9)+(C.15), (A)+(B.9)+(C.16), (A)+(B.9)+(C.17), (A)+(B.9)+(C.18), (A)+(B.9)+(C.19), (A)+(B.9)+(C.20), (A)+(B.9)+(C.21), (A)+(B.9)+(C.22), (A)+(B.9)+(C.23), (A)+(B.9)+(C.24), (A)+(B.9)+(C.25), (A)+(B.9)+(C.26), (A)+(B.9)+(C.27), (A)+(B.9)+(C.28), (A)+(B.9)+(C.29), (A)+(B.9)+(C.30), (A)+(B.9)+(C.31), (A)+(B.9)+(C.32), (A)+(B.9)+(C.33), (A)+(B.9)+(C.34), (A)+(B.9)+(C.35), (A)+(B.9)+(C.36), (A)+(B.10)+(C.1), (A)+(B.10)+(C.2), (A)+(B.10)+(C.3), (A)+(B.10)+(C.4), (A)+(B.10)+(C.5), (A)+(B.10)+(C.6), (A)+(B.10)+(C.7), (A)+(B.10)+(C.8), (A)+(B.10)+(C.9), (A)+(B.10)+(C.10), (A)+(B.10)+(C.11), (A)+(B.10)+(C.12), (A)+(B.10)+(C.13), (A)+(B.10)+(C.14), (A)+(B.10)+(C.15), (A)+(B.10)+(C.16), (A)+(B.10)+(C.17), (A)+(B.10)+(C.18), (A)+(B.10)+(C.19), (A)+(B.10)+(C.20), (A)+(B.10)+(C.21), (A)+(B.10)+(C.22), (A)+(B.10)+(C.23), (A)+(B.10)+(C.24), (A)+(B.10)+(C.25), (A)+(B.10)+(C.26), (A)+(B.10)+(C.27), (A)+(B.10)+(C.28), (A)+(B.10)+(C.29), (A)+(B.10)+(C.30), (A)+(B.10)+(C.31), (A)+(B.10)+(C.32), (A)+(B.10)+(C.33), (A)+(B.10)+(C.34), (A)+(B.10)+(C.35), (A)+(B.10)+(C.36), (A)+(B.11)+(C.1), (A)+(B.11)+(C.2), (A)+(B.11)+(C.3), (A)+(B.11)+(C.4), (A)+(B.11)+(C.5), (A)+(B.11)+(C.6), (A)+(B.11)+(C.7), (A)+(B.11)+(C.8), (A)+(B.11)+(C.9), (A)+(B.11)+(C.10), (A)+(B.11)+(C.11), (A)+(B.11)+(C.12), (A)+(B.11)+(C.13), (A)+(B.11)+(C.14), (A)+(B.11)+(C.15), (A)+(B.11)+(C.16), (A)+(B.11)+(C.17), (A)+(B.11)+(C.18), (A)+(B.11)+(C.19), (A)+(B.11)+(C.20), (A)+(B.11)+(C.21), (A)+(B.11)+(C.22), (A)+(B.11)+(C.23), (A)+(B.11)+(C.24),

(A)+(B.11)+(C.25), (A)+(B.11)+(C.26), (A)+(B.11)+(C.27), (A)+(B.11)+(C.28), (A)+(B.11)+(C.29), (A)+(B.11)+(C.30), (A)+(B.11)+(C.31), (A)+(B.11)+(C.32), (A)+(B.11)+(C.33), (A)+(B.11)+(C.34), (A)+(B.11)+(C.35), (A)+(B.11)+(C.36), (A)+(B.12)+(C.1), (A)+(B.12)+(C.2), (A)+(B.12)+(C.3), (A)+(B.12)+(C.4), (A)+(B.12)+(C.5), (A)+(B.12)+(C.6), (A)+(B.12)+(C.7), (A)+(B.12)+(C.8), (A)+(B.12)+(C.9), (A)+(B.12)+(C.10), (A)+(B.12)+(C.11), (A)+(B.12)+(C.12), (A)+(B.12)+(C.13), (A)+(B.12)+(C.14), (A)+(B.12)+(C.15), (A)+(B.12)+(C.16), (A)+(B.12)+(C.17), (A)+(B.12)+(C.18), (A)+(B.12)+(C.19), (A)+(B.12)+(C.20), (A)+(B.12)+(C.21), (A)+(B.12)+(C.22), (A)+(B.12)+(C.23), (A)+(B.12)+(C.24), (A)+(B.12)+(C.25), (A)+(B.12)+(C.26), (A)+(B.12)+(C.27), (A)+(B.12)+(C.28), (A)+(B.12)+(C.29), (A)+(B.12)+(C.30), (A)+(B.12)+(C.31), (A)+(B.12)+(C.32), (A)+(B.12)+(C.33), (A)+(B.12)+(C.34), (A)+(B.12)+(C.35), (A)+(B.12)+(C.36), (A)+(B.13)+(C.1), (A)+(B.13)+(C.2), (A)+(B.13)+(C.3), (A)+(B.13)+(C.4), (A)+(B.13)+(C.5), (A)+(B.13)+(C.6), (A)+(B.13)+(C.7), (A)+(B.13)+(C.8), (A)+(B.13)+(C.9), (A)+(B.13)+(C.10), (A)+(B.13)+(C.11), (A)+(B.13)+(C.12), (A)+(B.13)+(C.13), (A)+(B.13)+(C.14), (A)+(B.13)+(C.15), (A)+(B.13)+(C.16), (A)+(B.13)+(C.17), (A)+(B.13)+(C.18), (A)+(B.13)+(C.19), (A)+(B.13)+(C.20), (A)+(B.13)+(C.21), (A)+(B.13)+(C.22), (A)+(B.13)+(C.23), (A)+(B.13)+(C.24), (A)+(B.13)+(C.25), (A)+(B.13)+(C.26), (A)+(B.13)+(C.27), (A)+(B.13)+(C.28), (A)+(B.13)+(C.29), (A)+(B.13)+(C.30), (A)+(B.13)+(C.31), (A)+(B.13)+(C.32), (A)+(B.13)+(C.33), (A)+(B.13)+(C.34), (A)+(B.13)+(C.35), (A)+(B.13)+(C.36), (A)+(B.14)+(C.1), (A)+(B.14)+(C.2), (A)+(B.14)+(C.3), (A)+(B.14)+(C.4), (A)+(B.14)+(C.5), (A)+(B.14)+(C.6), (A)+(B.14)+(C.7), (A)+(B.14)+(C.8), (A)+(B.14)+(C.9), (A)+(B.14)+(C.10), (A)+(B.14)+(C.11), (A)+(B.14)+(C.12), (A)+(B.14)+(C.13), (A)+(B.14)+(C.14), (A)+(B.14)+(C.15), (A)+(B.14)+(C.16), (A)+(B.14)+(C.17), (A)+(B.14)+(C.18), (A)+(B.14)+(C.19), (A)+(B.14)+(C.20), (A)+(B.14)+(C.21), (A)+(B.14)+(C.22), (A)+(B.14)+(C.23), (A)+(B.14)+(C.24), (A)+(B.14)+(C.25), (A)+(B.14)+(C.26), (A)+(B.14)+(C.27), (A)+(B.14)+(C.28), (A)+(B.14)+(C.29), (A)+(B.14)+(C.30), (A)+(B.14)+(C.31), (A)+(B.14)+(C.32), (A)+(B.14)+(C.33), (A)+(B.14)+(C.34), (A)+(B.14)+(C.35), (A)+(B.14)+(C.36), (A)+(B.15)+(C.1), (A)+(B.15)+(C.2), (A)+(B.15)+(C.3), (A)+(B.15)+(C.4), (A)+(B.15)+(C.5), (A)+(B.15)+(C.6), (A)+(B.15)+(C.7), (A)+(B.15)+(C.8), (A)+(B.15)+(C.9), (A)+(B.15)+(C.10), (A)+(B.15)+(C.11), (A)+(B.15)+(C.12), (A)+(B.15)+(C.13), (A)+(B.15)+(C.14), (A)+(B.15)+(C.15), (A)+(B.15)+(C.16), (A)+(B.15)+(C.17), (A)+(B.15)+(C.18), (A)+(B.15)+(C.19), (A)+(B.15)+(C.20), (A)+(B.15)+(C.21), (A)+(B.15)+(C.22), (A)+(B.15)+(C.23), (A)+(B.15)+(C.24), (A)+(B.15)+(C.25), (A)+(B.15)+(C.26), (A)+(B.15)+(C.27), (A)+(B.15)+(C.28), (A)+(B.15)+(C.29), (A)+(B.15)+(C.30), (A)+(B.15)+(C.31), (A)+(B.15)+(C.32), (A)+(B.15)+(C.33), (A)+(B.15)+(C.34), (A)+(B.15)+(C.35), (A)+(B.15)+(C.36), (A)+(B.16)+(C.1), (A)+(B.16)+(C.2), (A)+(B.16)+(C.3), (A)+(B.16)+(C.4), (A)+(B.16)+(C.5), (A)+(B.16)+(C.6), (A)+(B.16)+(C.7), (A)+(B.16)+(C.8), (A)+(B.16)+(C.9), (A)+(B.16)+(C.10), (A)+(B.16)+(C.11), (A)+(B.16)+(C.12), (A)+(B.16)+(C.13), (A)+(B.16)+(C.14), (A)+(B.16)+(C.15), (A)+(B.16)+(C.16), (A)+(B.16)+(C.17), (A)+(B.16)+(C.18), (A)+(B.16)+(C.19), (A)+(B.16)+(C.20), (A)+(B.16)+(C.21), (A)+(B.16)+(C.22), (A)+(B.16)+(C.23), (A)+(B.16)+(C.24), (A)+(B.16)+(C.25), (A)+(B.16)+(C.26), (A)+(B.16)+(C.27), (A)+(B.16)+(C.28), (A)+(B.16)+(C.29), (A)+(B.16)+(C.30), (A)+(B.16)+(C.31), (A)+(B.16)+(C.32), (A)+(B.16)+(C.33), (A)+(B.16)+(C.34), (A)+(B.16)+(C.35), (A)+(B.16)+(C.36).

Out of these the following compositions are even further preferred:

(A)+(B.1)+(C.1), (A)+(B.1)+(C.2), (A)+(B.1)+(C.3), (A)+(B.1)+(C.4), (A)+(B.1)+(C.5), (A)+(B.1)+(C.6), (A)+(B.1)+(C.7), (A)+(B.1)+(C.8), (A)+(B.1)+(C.9), (A)+(B.1)+(C.10), (A)+(B.1)+(C.11), (A)+(B.1)+(C.12), (A)+(B.1)+(C.13), (A)+(B.1)+(C.14), (A)+(B.1)+(C.15), (A)+(B.1)+(C.16), (A)+(B.1)+(C.17), (A)+(B.1)+(C.18), (A)+(B.1)+(C.19), (A)+(B.1)+(C.20), (A)+(B.1)+(C.21), (A)+(B.1)+(C.22), (A)+(B.1)+(C.23), (A)+(B.1)+(C.24), (A)+(B.1)+(C.25), (A)+(B.1)+(C.26), (A)+(B.1)+(C.27), (A)+(B.1)+(C.28), (A)+(B.1)+(C.29), (A)+(B.1)+(C.30), (A)+(B.1)+(C.31), (A)+(B.1)+(C.32), (A)+(B.1)+(C.33), (A)+(B.1)+(C.34), (A)+(B.1)+(C.35), (A)+(B.1)+(C.36), (A)+(B.4)+(C.1), (A)+(B.4)+(C.2), (A)+(B.4)+(C.3), (A)+(B.4)+(C.4), (A)+(B.4)+(C.5), (A)+(B.4)+(C.6), (A)+(B.4)+(C.7), (A)+(B.4)+(C.8), (A)+(B.4)+(C.9), (A)+(B.4)+(C.10), (A)+(B.4)+(C.11), (A)+(B.4)+(C.12), (A)+(B.4)+(C.13), (A)+(B.4)+(C.14), (A)+(B.4)+(C.15), (A)+(B.4)+(C.16), (A)+(B.4)+(C.17), (A)+(B.4)+(C.18), (A)+(B.4)+(C.19), (A)+(B.4)+(C.20), (A)+(B.4)+(C.21), (A)+(B.4)+(C.22), (A)+(B.4)+(C.23), (A)+(B.4)+(C.24), (A)+(B.4)+(C.25), (A)+(B.4)+(C.26), (A)+(B.4)+(C.27), (A)+(B.4)+(C.28), (A)+(B.4)+(C.29), (A)+(B.4)+(C.30), (A)+(B.4)+(C.31), (A)+(B.4)+(C.32), (A)+(B.4)+(C.33), (A)+(B.4)+(C.34), (A)+(B.4)+(C.35), (A)+(B.4)+(C.36), (A)+(B.5)+(C.1), (A)+(B.5)+(C.2), (A)+(B.5)+(C.3), (A)+(B.5)+(C.4), (A)+(B.5)+(C.5), (A)+(B.5)+(C.6), (A)+(B.5)+(C.7), (A)+(B.5)+(C.8), (A)+(B.5)+(C.9), (A)+(B.5)+(C.10), (A)+(B.5)+(C.11), (A)+(B.5)+(C.12), (A)+(B.5)+(C.13), (A)+(B.5)+(C.14), (A)+(B.5)+(C.15), (A)+(B.5)+(C.16), (A)+(B.5)+(C.17), (A)+(B.5)+(C.18), (A)+(B.5)+(C.19), (A)+(B.5)+(C.20), (A)+(B.5)+(C.21), (A)+(B.5)+(C.22), (A)+(B.5)+(C.23), (A)+(B.5)+(C.24), (A)+(B.5)+(C.25), (A)+(B.5)+(C.26), (A)+(B.5)+(C.27), (A)+(B.5)+(C.28), (A)+(B.5)+(C.29), (A)+(B.5)+(C.30), (A)+(B.5)+(C.31), (A)+(B.5)+(C.32), (A)+(B.5)+(C.33), (A)+(B.5)+(C.34), (A)+(B.5)+(C.35), (A)+(B.5)+(C.36),

(A)+(B.7)+(C.1), (A)+(B.7)+(C.2), (A)+(B.7)+(C.3), (A)+(B.7)+(C.4), (A)+(B.7)+(C.5), (A)+(B.7)+(C.6), (A)+(B.7)+(C.7), (A)+(B.7)+(C.8), (A)+(B.7)+(C.9), (A)+(B.7)+(C.10), (A)+(B.7)+(C.11), (A)+(B.7)+(C.12), (A)+(B.7)+(C.13), (A)+(B.7)+(C.14), (A)+(B.7)+(C.15), (A)+(B.7)+(C.16), (A)+(B.7)+(C.17), (A)+(B.7)+(C.18), (A)+(B.7)+(C.19), (A)+(B.7)+(C.20), (A)+(B.7)+(C.21), (A)+(B.7)+(C.22), (A)+(B.7)+(C.23), (A)+(B.7)+(C.24), (A)+(B.7)+(C.25), (A)+(B.7)+(C.26), (A)+(B.7)+(C.27), (A)+(B.7)+(C.28), (A)+(B.7)+(C.29), (A)+(B.7)+(C.30), (A)+(B.7)+(C.31), (A)+(B.7)+(C.32), (A)+(B.7)+(C.33), (A)+(B.7)+(C.34), (A)+(B.7)+(C.35), (A)+(B.7)+(C.36), (A)+(B.8)+(C.1), (A)+(B.8)+(C.2), (A)+(B.8)+(C.3), (A)+(B.8)+(C.4), (A)+(B.8)+(C.5), (A)+(B.8)+(C.6), (A)+(B.8)+(C.7), (A)+(B.8)+(C.8), (A)+(B.8)+(C.9), (A)+(B.8)+(C.10), (A)+(B.8)+(C.11), (A)+(B.8)+(C.12), (A)+(B.8)+(C.13), (A)+(B.8)+(C.14), (A)+(B.8)+(C.15), (A)+(B.8)+(C.16), (A)+(B.8)+(C.17), (A)+(B.8)+(C.18), (A)+(B.8)+(C.19), (A)+(B.8)+(C.20), (A)+(B.8)+(C.21), (A)+(B.8)+(C.22), (A)+(B.8)+(C.23), (A)+(B.8)+(C.24), (A)+(B.8)+(C.25), (A)+(B.8)+(C.26), (A)+(B.8)+(C.27), (A)+(B.8)+(C.28), (A)+(B.8)+(C.29), (A)+(B.8)+(C.30), (A)+(B.8)+(C.31), (A)+(B.8)+(C.32), (A)+(B.8)+(C.33), (A)+(B.8)+(C.34), (A)+(B.8)+(C.35), (A)+(B.8)+(C.36), (A)+(B.2.10)+(C.1), (A)+(B.2.10)+(C.2), (A)+(B.2.10)+(C.3), (A)+(B.2.10)+(C.4), (A)+(B.2.10)+(C.5), (A)+(B.2.10)+(C.6), (A)+(B.2.10)+(C.7), (A)+(B.2.10)+(C.8), (A)+(B.2.10)+(C.9), (A)+(B.2.10)+(C.10), (A)+(B.2.10)+(C.11), (A)+(B.2.10)+(C.12), (A)+(B.2.10)+(C.13), (A)+(B.2.10)+(C.14), (A)+(B.2.10)+(C.15), (A)+(B.2.10)+(C.16), (A)+(B.2.10)+(C.17), (A)+(B.2.10)+(C.18), (A)+(B.2.10)+(C.19), (A)+(B.2.10)+(C.20), (A)+(B.2.10)+(C.21), (A)+(B.2.10)+(C.22), (A)+(B.2.10)+(C.23), (A)+(B.2.10)+(C.24), (A)+(B.2.10)+(C.25), (A)+(B.2.10)+(C.26), (A)+(B.2.10)+(C.27), (A)+(B.2.10)+(C.28), (A)+(B.2.10)+(C.29), (A)+(B.2.10)+(C.30), (A)+(B.2.10)+(C.31), (A)+(B.2.10)+(C.32), (A)+(B.2.10)+(C.33), (A)+(B.2.10)+(C.34), (A)+(B.2.10)+(C.35), (A)+(B.2.10)+(C.36), (A)+(B.2.11)+(C.1), (A)+(B.2.11)+(C.2), (A)+(B.2.11)+(C.3), (A)+(B.2.11)+(C.4), (A)+(B.2.11)+(C.5), (A)+(B.2.11)+(C.6), (A)+(B.2.11)+(C.7), (A)+(B.2.11)+(C.8), (A)+(B.2.11)+(C.9), (A)+(B.2.11)+(C.10), (A)+(B.2.11)+(C.11), (A)+(B.2.11)+(C.12), (A)+(B.2.11)+(C.13), (A)+(B.2.11)+(C.14), (A)+(B.2.11)+(C.15), (A)+(B.2.11)+(C.16), (A)+(B.2.11)+(C.17), (A)+(B.2.11)+(C.18), (A)+(B.2.11)+(C.19), (A)+(B.2.11)+(C.20), (A)+(B.2.11 )+(C.21), (A)+(B.2.11)+(C.22), (A)+(B.2.11)+(C.23), (A)+(B.2.11)+(C.24), (A)+(B.2.11)+(C.25), (A)+(B.2.11)+(C.26), (A)+(B.2.11)+(C.27), (A)+(B.2.11)+(C.28), (A)+(B.2.11)+(C.29), (A)+(B.2.11)+(C.30), (A)+(B.2.11)+(C.31), (A)+(B.2.11)+(C.32), (A)+(B.2.11)+(C.33), (A)+(B.2.11)+(C.34), (A)+(B.2.11)+(C.35), (A)+(B.2.11)+(C.36), (A)+(B.2.12)+(C.1), (A)+(B.2.12)+(C.2), (A)+(B.2.12)+(C.3), (A)+(B.2.12)+(C.4), (A)+(B.2.12)+(C.5), (A)+(B.2.12)+(C.6), (A)+(B.2.12)+(C.7), (A)+(B.2.12)+(C.8), (A)+(B.2.12)+(C.9), (A)+(B.2.12)+(C.10), (A)+(B.2.12)+(C.11), (A)+(B.2.12)+(C.12), (A)+(B.2.12)+(C.13), (A)+(B.2.12)+(C.14), (A)+(B.2.12)+(C.15), (A)+(B.2.12)+(C.16), (A)+(B.2.12)+(C.17), (A)+(B.2.12)+(C.18), (A)+(B.2.12)+(C.19), (A)+(B.2.12)+(C.20), (A)+(B.2.12)+(C.21), (A)+(B.2.12)+(C.22), (A)+(B.2.12)+(C.23), (A)+(B.2.12)+(C.24), (A)+(B.2.12)+(C.25), (A)+(B.2.12)+(C.26), (A)+(B.2.12)+(C.27), (A)+(B.2.12)+(C.28), (A)+(B.2.12)+(C.29), (A)+(B.2.12)+(C.30), (A)+(B.2.12)+(C.31), (A)+(B.2.12)+(C.32), (A)+(B.2.12)+(C.33), (A)+(B.2.12)+(C.34), (A)+(B.2.12)+(C.35), (A)+(B.2.12)+(C.36).

Out of the first group the following compositions are also even further preferred:

(A)+(B.1)+(C.9), (A)+(B.1)+(C.25), (A)+(B.1)+(C.28), (A)+(B.1)+(C.4), (A)+(B.1)+(C.24), (A)+(B.2)+(C.9), (A)+(B.2)+(C.25), (A)+(B.2)+(C.28), (A)+(B.2)+(C.4), (A)+(B.2)+(C.24), (A)+(B.3)+(C.9), (A)+(B.3)+(C.25), (A)+(B.3)+(C.28), (A)+(B.3)+(C.4), (A)+(B.3)+(C.24), (A)+(B.4)+(C.9), (A)+(B.4)+(C.25), (A)+(B.4)+(C.28), (A)+(B.4)+(C.4), (A)+(B.4)+(C.24), (A)+(B.5)+(C.9), (A)+(B.5)+(C.25), (A)+(B.5)+(C.28), (A)+(B.5)+(C.4), (A)+(B.5)+(C.24), (A)+(B.6)+(C.9), (A)+(B.6)+(C.25), (A)+(B.6)+(C.28), (A)+(B.6)+(C.4), (A)+(B.6)+(C.24), (A)+(B.7)+(C.9), (A)+(B.7)+(C.25), (A)+(B.7)+(C.28), (A)+(B.7)+(C.4), (A)+(B.7)+(C.24), (A)+(B.8)+(C.9), (A)+(B.8)+(C.25), (A)+(B.8)+(C.28), (A)+(B.8)+(C.4), (A)+(B.8)+(C.24), (A)+(B.9)+(C.9), (A)+(B.9)+(C.25), (A)+(B.9)+(C.28), (A)+(B.9)+(C.4), (A)+(B.9)+(C.24), (A)+(B.10)+(C.9), (A)+(B.10)+(C.25), (A)+(B.10)+(C.28), (A)+(B.10)+(C.4), (A)+(B.10)+(C.24), (A)+(B.11)+(C.9), (A)+(B.11)+(C.25), (A)+(B.11)+(C.28), (A)+(B.11)+(C.4), (A)+(B.11)+(C.24), (A)+(B.12)+(C.9), (A)+(B.12)+(C.25), (A)+(B.12)+(C.28), (A)+(B.12)+(C.4), (A)+(B.12)+(C.24), (A)+(B.13)+(C.9), (A)+(B.13)+(C.25), (A)+(B.13)+(C.28), (A)+(B.13)+(C.4), (A)+(B.13)+(C.24), (A)+(B.14)+(C.9), (A)+(B.14)+(C.25), (A)+(B.14)+(C.28), (A)+(B.14)+(C.4), (A)+(B.14)+(C.24), (A)+(B.15)+(C.9), (A)+(B.15)+(C.25), (A)+(B.15)+(C.28), (A)+(B.15)+(C.4), (A)+(B.15)+(C.24), (A)+(B.16)+(C.9), (A)+(B.16)+(C.25), (A)+(B.16)+(C.28), (A)+(B.16)+(C.4), (A)+(B.16)+(C.24)..

Most preference is given to the following compositions:

(A)+(B.1)+(C.9), (A)+(B.1)+(C.25), (A)+(B.1)+(C.28), (A)+(B.1)+(C.4), (A)+(B.1)+(C.24), (A)+(B.4)+(C.9), (A)+(B.4)+(C.25), (A)+(B.4)+(C.28), (A)+(B.4)+(C.4), (A)+(B.4)+(C.24), (A)+(B.5)+(C.9), (A)+(B.5)+(C.25), (A)+(B.5)+(C.28), (A)+(B.5)+(C.4), (A)+(B.5)+(C.24), (A)+(B.7)+(C.9), (A)+(B.7)+(C.25), (A)+(B.7)+(C.28), (A)+(B.7)+(C.4), (A)+(B.7)+(C.24), (A)+(B.8)+(C.9), (A)+(B.8)+(C.25), (A)+(B.8)+(C.28), (A)+(B.8)+(C.4),

(A)+(B.8)+(C.24), (A)+(B.10)+(C.9), (A)+(B.10)+(C.25), (A)+(B.10)+(C.28), (A)+(B.10)+(C.4), (A)+(B.1)+(C.24), (A)+(B.2.11)+(C.9), (A)+(B.2.11)+(C.25), (A)+(B.2.11)+(C.28), (A)+(B.11)+(C.4), (A)+(B.11)+(C.24), (A)+(B.12)+(C.9), (A)+(B.12)+(C.25), (A)+(B.12)+(C.28), (A)+(B.12)+(C.4), (A)+(B.12)+(C.24).

The following compositions (A)+(B.4)+(C.9), (A)+(B.10)+(C.9), (A)+(B.4)+(C.25) or (A)+(B.10)+(C.25), are mostly preferred.

(A.1)+(B.1)+(C.1), (A.1)+(B.1)+(C.2), (A.1)+(B.1)+(C.3), (A.1)+(B.1)+(C.4), (A.1)+(B.1)+(C.5), (A.1)+(B.1)+(C.6), (A.1)+(B.1)+(C.7), (A.1)+(B.1)+(C.8), (A.1)+(B.1)+(C.9), (A.1)+(B.1)+(C.10), (A.1)+(B.1)+(C.11), (A.1)+(B.1)+(C.12), (A.1)+(B.1)+(C.13), (A.1)+(B.1)+(C.14), (A.1)+(B.1)+(C.15), (A.1)+(B.1)+(C.16), (A.1)+(B.1)+(C.17), (A.1)+(B.1)+(C.18), (A.1)+(B.1)+(C.19), (A.1)+(B.1)+(C.20), (A.1)+(B.1)+(C.21), (A.1)+(B.1)+(C.22), (A.1)+(B.1)+(C.23), (A.1)+(B.1)+(C.24), (A.1)+(B.1)+(C.25), (A.1)+(B.1)+(C.26), (A.1)+(B.1)+(C.27), (A.1)+(B.1)+(C.28), (A.1)+(B.1)+(C.29), (A.1)+(B.1)+(C.30), (A.1)+(B.1)+(C.31), (A.1)+(B.1)+(C.32), (A.1)+(B.1)+(C.33), (A.1)+(B.1)+(C.34), (A.1)+(B.1)+(C.35), (A.1)+(B.1)+(C.36), (A.1)+(B.2)+(C.1), (A.1)+(B.2)+(C.2), (A.1)+(B.2)+(C.3), (A.1)+(B.2)+(C.4), (A.1)+(B.2)+(C.5), (A.1)+(B.2)+(C.6), (A.1)+(B.2)+(C.7), (A.1)+(B.2)+(C.8), (A.1)+(B.2)+(C.9), (A.1)+(B.2)+(C.10), (A.1)+(B.2)+(C.11), (A.1)+(B.2)+(C.12), (A.1)+(B.2)+(C.13), (A.1)+(B.2)+(C.14), (A.1)+(B.2)+(C.15), (A.1)+(B.2)+(C.16), (A.1)+(B.2)+(C.17), (A.1)+(B.2)+(C.18), (A.1)+(B.2)+(C.19), (A.1)+(B.2)+(C.20), (A.1)+(B.2)+(C.21), (A.1)+(B.2)+(C.22), (A.1)+(B.2)+(C.23), (A.1)+(B.2)+(C.24), (A.1)+(B.2)+(C.25), (A.1)+(B.2)+(C.26), (A.1)+(B.2)+(C.27), (A.1)+(B.2)+(C.28), (A.1)+(B.2)+(C.29), (A.1)+(B.2)+(C.30), (A.1)+(B.2)+(C.31), (A.1)+(B.2)+(C.32), (A.1)+(B.2)+(C.33), (A.1)+(B.2)+(C.34), (A.1)+(B.2)+(C.35), (A.1)+(B.2)+(C.36), ), (A.1)+(B.3)+(C.1), (A.1)+(B.3)+(C.2), (A.1)+(B.3)+(C.3), (A.1)+(B.3)+(C.4), (A.1)+(B.3)+(C.5), (A.1)+(B.3)+(C.6), (A.1)+(B.3)+(C.7), (A.1)+(B.3)+(C.8), (A.1)+(B.3)+(C.9), (A.1)+(B.3)+(C.10), (A.1)+(B.3)+(C.11), (A.1)+(B.3)+(C.12), (A.1)+(B.3)+(C.13), (A.1)+(B.3)+(C.14), (A.1)+(B.3)+(C.15), (A.1)+(B.3)+(C.16), (A.1)+(B.3)+(C.17), (A.1)+(B.3)+(C.18), (A.1)+(B.3)+(C.19), (A.1)+(B.3)+(C.20), (A.1)+(B.3)+(C.21), (A.1)+(B.3)+(C.22), (A.1)+(B.3)+(C.23), (A.1)+(B.3)+(C.24), (A.1)+(B.3)+(C.25), (A.1)+(B.3)+(C.26), (A.1)+(B.3)+(C.27), (A.1)+(B.3)+(C.28), (A.1)+(B.3)+(C.29), (A.1)+(B.3)+(C.30), (A.1)+(B.3)+(C.31), (A.1)+(B.3)+(C.32), (A.1)+(B.3)+(C.33), (A.1)+(B.3)+(C.34), (A.1)+(B.3)+(C.35), (A.1)+(B.3)+(C.36), (A.1)+(B.4)+(C.1), (A.1)+(B.4)+(C.2), (A.1)+(B.4)+(C.3), (A.1)+(B.4)+(C.4), (A.1)+(B.4)+(C.5), (A.1)+(B.4)+(C.6), (A.1)+(B.4)+(C.7), (A.1)+(B.4)+(C.8), (A.1)+(B.4)+(C.9), (A.1)+(B.4)+(C.10), (A.1)+(B.4)+(C.11), (A.1)+(B.4)+(C.12), (A.1)+(B.4)+(C.13), (A.1)+(B.4)+(C.14), (A.1)+(B.4)+(C.15), (A.1)+(B.4)+(C.16), (A.1)+(B.4)+(C.17), (A.1)+(B.4)+(C.18), (A.1)+(B.4)+(C.19), (A.1)+(B.4)+(C.20), (A.1)+(B.4)+(C.21), (A.1)+(B.4)+(C.22), (A.1)+(B.4)+(C.23), (A.1)+(B.4)+(C.24), (A.1)+(B.4)+(C.25), (A.1)+(B.4)+(C.26), (A.1)+(B.4)+(C.27), (A.1)+(B.4)+(C.28), (A.1)+(B.4)+(C.29), (A.1)+(B.4)+(C.30), (A.1)+(B.4)+(C.31), (A.1)+(B.4)+(C.32), (A.1)+(B.4)+(C.33), (A.1)+(B.4)+(C.34), (A.1)+(B.4)+(C.35), (A.1)+(B.4)+(C.36), (A.1)+(B.5)+(C.1), (A.1)+(B.5)+(C.2), (A.1)+(B.5)+(C.3), (A.1)+(B.5)+(C.4), (A.1)+(B.5)+(C.5), (A.1)+(B.5)+(C.6), (A.1)+(B.5)+(C.7), (A.1)+(B.5)+(C.8), (A.1)+(B.5)+(C.9), (A.1)+(B.5)+(C.10), (A.1)+(B.5)+(C.11), (A.1)+(B.5)+(C.12), (A.1)+(B.5)+(C.13), (A.1)+(B.5)+(C.14), (A.1)+(B.5)+(C.15), (A.1)+(B.5)+(C.16), (A.1)+(B.5)+(C.17), (A.1)+(B.5)+(C.18), (A.1)+(B.5)+(C.19), (A.1)+(B.5)+(C.20), (A.1)+(B.5)+(C.21), (A.1)+(B.5)+(C.22), (A.1)+(B.5)+(C.23), (A.1)+(B.5)+(C.24), (A.1)+(B.5)+(C.25), (A.1)+(B.5)+(C.26), (A.1)+(B.5)+(C.27), (A.1)+(B.5)+(C.28), (A.1)+(B.5)+(C.29), (A.1)+(B.5)+(C.30), (A.1)+(B.5)+(C.31), (A.1)+(B.5)+(C.32), (A.1)+(B.5)+(C.33), (A.1)+(B.5)+(C.34), (A.1)+(B.5)+(C.35), (A.1)+(B.5)+(C.36), (A.1)+(B.6)+(C.1), (A.1)+(B.6)+(C.2), (A.1)+(B.6)+(C.3), (A.1)+(B.6)+(C.4), (A.1)+(B.6)+(C.5), (A.1)+(B.6)+(C.6), (A.1)+(B.6)+(C.7), (A.1)+(B.6)+(C.8), (A.1)+(B.6)+(C.9), (A.1)+(B.6)+(C.10), (A.1)+(B.6)+(C.11), (A.1)+(B.6)+(C.12), (A.1)+(B.6)+(C.13), (A.1)+(B.6)+(C.14), (A.1)+(B.6)+(C.15), (A.1)+(B.6)+(C.16), (A.1)+(B.6)+(C.17), (A.1)+(B.6)+(C.18), (A.1)+(B.6)+(C.19), (A.1)+(B.6)+(C.20), (A.1)+(B.6)+(C.21), (A.1)+(B.6)+(C.22), (A.1)+(B.6)+(C.23), (A.1)+(B.6)+(C.24), (A.1)+(B.6)+(C.25), (A.1)+(B.6)+(C.26), (A.1)+(B.6)+(C.27), (A.1)+(B.6)+(C.28), (A.1)+(B.6)+(C.29), (A.1)+(B.6)+(C.30), (A.1)+(B.6)+(C.31), (A.1)+(B.6)+(C.32), (A.1)+(B.6)+(C.33), (A.1)+(B.6)+(C.34), (A.1)+(B.6)+(C.35), (A.1)+(B.6)+(C.36), (A.1)+(B.7)+(C.1), (A.1)+(B.7)+(C.2), (A.1)+(B.7)+(C.3), (A.1)+(B.7)+(C.4), (A.1)+(B.7)+(C.5), (A.1)+(B.7)+(C.6), (A.1)+(B.7)+(C.7), (A.1)+(B.7)+(C.8), (A.1)+(B.7)+(C.9), (A.1)+(B.7)+(C.10), (A.1)+(B.7)+(C.11), (A.1)+(B.7)+(C.12), (A.1)+(B.7)+(C.13), (A.1)+(B.7)+(C.14), (A.1)+(B.7)+(C.15), (A.1)+(B.7)+(C.16), (A.1)+(B.7)+(C.17), (A.1)+(B.7)+(C.18), (A.1)+(B.7)+(C.19), (A.1)+(B.7)+(C.20), (A.1)+(B.7)+(C.21), (A.1)+(B.7)+(C.22), (A.1)+(B.7)+(C.23), (A.1)+(B.7)+(C.24), (A.1)+(B.7)+(C.25), (A.1)+(B.7)+(C.26), (A.1)+(B.7)+(C.27), (A.1)+(B.7)+(C.28), (A.1)+(B.7)+(C.29), (A.1)+(B.7)+(C.30), (A.1)+(B.7)+(C.31), (A.1)+(B.7)+(C.32), (A.1)+(B.7)+(C.33), (A.1)+(B.7)+(C.34), (A.1)+(B.7)+(C.35), (A.1)+(B.7)+(C.36), (A.1)+(B.8)+(C.1), (A.1)+(B.8)+(C.2), (A.1)+(B.8)+(C.3), (A.1)+(B.8)+(C.4), (A.1)+(B.8)+(C.5), (A.1)+(B.8)+(C.6), (A.1)+(B.8)+(C.7), (A.1)+(B.8)+(C.8), (A.1)+(B.8)+(C.9), (A.1)+(B.8)+(C.10), (A.1)+(B.8)+(C.11),

(A.1)+(B.8)+(C.12), (A.1)+(B.8)+(C.13), (A.1)+(B.8)+(C.14), (A.1)+(B.8)+(C.15), (A.1)+(B.8)+(C.16), (A.1)+(B.8)+(C.17), (A.1)+(B.8)+(C.18), (A.1)+(B.8)+(C.19), (A.1)+(B.8)+(C.20), (A.1)+(B.8)+(C.21), (A.1)+(B.8)+(C.22), (A.1)+(B.8)+(C.23), (A.1)+(B.8)+(C.24), (A.1)+(B.8)+(C.25), (A.1)+(B.8)+(C.26), (A.1)+(B.8)+(C.27), (A.1)+(B.8)+(C.28), (A.1)+(B.8)+(C.29), (A.1)+(B.8)+(C.30), (A.1)+(B.8)+(C.31), (A.1)+(B.8)+(C.32), (A.1)+(B.8)+(C.33), (A.1)+(B.8)+(C.34), (A.1)+(B.8)+(C.35), (A.1)+(B.8)+(C.36), (A.1)+(B.9)+(C.1), (A.1)+(B.9)+(C.2), (A.1)+(B.9)+(C.3), (A.1)+(B.9)+(C.4), (A.1)+(B.9)+(C.5), (A.1)+(B.9)+(C.6), (A.1)+(B.9)+(C.7), (A.1)+(B.9)+(C.8), (A.1)+(B.9)+(C.9), (A.1)+(B.9)+(C.10), (A.1)+(B.9)+(C.11), (A.1)+(B.9)+(C.12), (A.1)+(B.9)+(C.13), (A.1)+(B.9)+(C.14), (A.1)+(B.9)+(C.15), (A.1)+(B.9)+(C.16), (A.1)+(B.9)+(C.17), (A.1)+(B.9)+(C.18), (A.1)+(B.9)+(C.19), (A.1)+(B.9)+(C.20), (A.1)+(B.9)+(C.21), (A.1)+(B.9)+(C.22), (A.1)+(B.9)+(C.23), (A.1)+(B.9)+(C.24), (A.1)+(B.9)+(C.25), (A.1)+(B.9)+(C.26), (A.1)+(B.9)+(C.27), (A.1)+(B.9)+(C.28), (A.1)+(B.9)+(C.29), (A.1)+(B.9)+(C.30), (A.1)+(B.9)+(C.31), (A.1)+(B.9)+(C.32), (A.1)+(B.9)+(C.33), (A.1)+(B.9)+(C.34), (A.1)+(B.9)+(C.35), (A.1)+(B.9)+(C.36), (A.1)+(B.10)+(C.1), (A.1)+(B.10)+(C.2), (A.1)+(B.10)+(C.3), (A.1)+(B.10)+(C.4), (A.1)+(B.10)+(C.5), (A.1)+(B.10)+(C.6), (A.1)+(B.10)+(C.7), (A.1)+(B.10)+(C.8), (A.1)+(B.10)+(C.9), (A.1)+(B.10)+(C.10), (A.1)+(B.10)+(C.11), (A.1)+(B.10)+(C.12), (A.1)+(B.10)+(C.13), (A.1)+(B.10)+(C.14), (A.1)+(B.10)+(C.15), (A.1)+(B.10)+(C.16), (A.1)+(B.10)+(C.17), (A.1)+(B.10)+(C.18), (A.1)+(B.10)+(C.19), (A.1)+(B.10)+(C.20), (A.1)+(B.10)+(C.21), (A.1)+(B.10)+(C.22), (A.1)+(B.10)+(C.23), (A.1)+(B.10)+(C.24), (A.1)+(B.10)+(C.25), (A.1)+(B.10)+(C.26), (A.1)+(B.10)+(C.27), (A.1)+(B.10)+(C.28), (A.1)+(B.10)+(C.29), (A.1)+(B.10)+(C.30), (A.1)+(B.10)+(C.31), (A.1)+(B.10)+(C.32), (A.1)+(B.10)+(C.33), (A.1)+(B.10)+(C.34), (A.1)+(B.10)+(C.35), (A.1)+(B.10)+(C.36), (A.1)+(B.11)+(C.1), (A.1)+(B.11)+(C.2), (A.1)+(B.11)+(C.3), (A.1)+(B.11)+(C.4), (A.1)+(B.11)+(C.5), (A.1)+(B.11)+(C.6), (A.1)+(B.11)+(C.7), (A.1)+(B.11)+(C.8), (A.1)+(B.11)+(C.9), (A.1)+(B.11)+(C.10), (A.1)+(B.11)+(C.11), (A.1)+(B.11)+(C.12), (A.1)+(B.11)+(C.13), (A.1)+(B.11)+(C.14), (A.1)+(B.11)+(C.15), (A.1)+(B.11)+(C.16), (A.1)+(B.11)+(C.17), (A.1)+(B.11)+(C.18), (A.1)+(B.11)+(C.19), (A.1)+(B.11)+(C.20), (A.1)+(B.11)+(C.21), (A.1)+(B.11)+(C.22), (A.1)+(B.11)+(C.23), (A.1)+(B.11)+(C.24), (A.1)+(B.11)+(C.25), (A.1)+(B.11)+(C.26), (A.1)+(B.11)+(C.27), (A.1)+(B.11)+(C.28), (A.1)+(B.11)+(C.29), (A.1)+(B.11)+(C.30), (A.1)+(B.11)+(C.31), (A.1)+(B.11)+(C.32), (A.1)+(B.11)+(C.33), (A.1)+(B.11)+(C.34), (A.1)+(B.11)+(C.35), (A.1)+(B.11)+(C.36), (A.1)+(B.12)+(C.1), (A.1)+(B.12)+(C.2), (A.I)+(B.12)+(C.3), (A.1)+(B.12)+(C.4), (A.1)+(B.12)+(C.5), (A.1)+(B.12)+(C.6), (A.1)+(B.12)+(C.7), (A.1)+(B.12)+(C.8), (A.1)+(B.12)+(C.9), (A.1)+(B.12)+(C.10), (A.1)+(B.12)+(C.11), (A.1)+(B.12)+(C.12), (A.1)+(B.12)+(C.13), (A.1)+(B.12)+(C.14), (A.1)+(B.12)+(C.15), (A.1)+(B.12)+(C.16), (A.1)+(B.12)+(C.17), (A.1)+(B.12)+(C.18), (A.1)+(B.12)+(C.19), (A.1)+(B.12)+(C.20), (A.1)+(B.12)+(C.21), (A.1)+(B.12)+(C.22), (A.1)+(B.12)+(C.23), (A.1)+(B.12)+(C.24), (A.1)+(B.12)+(C.25), (A.1)+(B.12)+(C.26), (A.1)+(B.12)+(C.27), (A.1)+(B.12)+(C.28), (A.1)+(B.12)+(C.29), (A.1)+(B.12)+(C.30), (A.1)+(B.12)+(C.31), (A.1)+(B.12)+(C.32), (A.1)+(B.12)+(C.33), (A.1)+(B.12)+(C.34), (A.1)+(B.12)+(C.35), (A.1)+(B.12)+(C.36), (A.1)+(B.13)+(C.1), (A.1)+(B.13)+(C.2), (A.1)+(B.13)+(C.3), (A.1)+(B.13)+(C.4), (A.1)+(B.13)+(C.5), (A.1)+(B.13)+(C.6), (A.1)+(B.13)+(C.7), (A.1)+(B.13)+(C.8), (A.1)+(B.13)+(C.9), (A.1)+(B.13)+(C.10), (A.1)+(B.13)+(C.11), (A.1)+(B.13)+(C.12), (A.1)+(B.13)+(C.13), (A.1)+(B.13)+(C.14), (A.1)+(B.13)+(C.15), (A.1)+(B.13)+(C.16), (A.1)+(B.13)+(C.17), (A.1)+(B.13)+(C.18), (A.1)+(B.13)+(C.19), (A.1)+(B.13)+(C.20), (A.1)+(B.13)+(C.21), (A.1)+(B.13)+(C.22), (A.1)+(B.13)+(C.23), (A.1)+(B.13)+(C.24), (A.1)+(B.13)+(C.25), (A.1)+(B.13)+(C.26), (A.1)+(B.13)+(C.27), (A.1)+(B.13)+(C.28), (A.1)+(B.13)+(C.29), (A.1)+(B.13)+(C.30), (A.1)+(B.13)+(C.31), (A.1)+(B.13)+(C.32), (A.1)+(B.13)+(C.33), (A.1)+(B.13)+(C.34), (A.1)+(B.13)+(C.35), (A.1)+(B.13)+(C.36), (A.1)+(B.14)+(C.1), (A.1)+(B.14)+(C.2), (A.1)+(B.14)+(C.3), (A.1)+(B.14)+(C.4), (A.1)+(B.14)+(C.5), (A.1)+(B.14)+(C.6), (A.1)+(B.14)+(C.7), (A.1)+(B.14)+(C.8), (A.1)+(B.14)+(C.9), (A.1)+(B.14)+(C.10), (A.1)+(B.14)+(C.11), (A.1)+(B.14)+(C.12), (A.1)+(B.14)+(C.13), (A.1)+(B.14)+(C.14), (A.1)+(B.14)+(C.15), (A.1)+(B.14)+(C.16), (A.1)+(B.14)+(C.17), (A.1)+(B.14)+(C.18), (A.1)+(B.14)+(C.19), (A.1)+(B.14)+(C.20), (A.1)+(B.14)+(C.21), (A.1)+(B.14)+(C.22), (A.1)+(B.14)+(C.23), (A.1)+(B.14)+(C.24), (A.1)+(B.14)+(C.25), (A.1)+(B.14)+(C.26), (A.1)+(B.14)+(C.27), (A.1)+(B.14)+(C.28), (A.1)+(B.14)+(C.29), (A.1)+(B.14)+(C.30), (A.1)+(B.14)+(C.31), (A.1)+(B.14)+(C.32), (A.1)+(B.14)+(C.33), (A.1)+(B.14)+(C.34), (A.1)+(B.14)+(C.35), (A.1)+(B.14)+(C.36), (A.1)+(B.15)+(C.1), (A.1)+(B.15)+(C.2), (A.1)+(B.15)+(C.3), (A.1)+(B.15)+(C.4), (A.1)+(B.15)+(C.5), (A.1)+(B.15)+(C.6), (A.1)+(B.15)+(C.7), (A.1)+(B.15)+(C.8), (A.1)+(B.15)+(C.9), (A.1)+(B.15)+(C.10), (A.1)+(B.15)+(C.11), (A.1)+(B.15)+(C.12), (A.1)+(B.15)+(C.13), (A.1)+(B.15)+(C.14), (A.1)+(B.15)+(C.15), (A.1)+(B.15)+(C.16), (A.1)+(B.15)+(C.17), (A.1)+(B.15)+(C.18), (A.1)+(B.15)+(C.19), (A.1)+(B.15)+(C.20), (A.1)+(B.15)+(C.21), (A.1)+(B.15)+(C.22), (A.1)+(B.15)+(C.23), (A.1)+(B.15)+(C.24), (A.1)+(B.15)+(C.25), (A.1)+(B.15)+(C.26), (A.1)+(B.15)+(C.27), (A.1)+(B.15)+(C.28), (A.1)+(B.15)+(C.29), (A.1)+(B.15)+(C.30), (A.1)+(B.15)+(C.31), (A.1)+(B.15)+(C.32), (A.1)+(B.15)+(C.33), (A.1)+(B.15)+(C.34), (A.1)+(B.15)+(C.35), (A.1)+(B.15)+(C.36), (A.1)+(B.16)+(C.1), (A.1)+(B.16)+(C.2), (A.1)+(B.16)+(C.3), (A.1)+(B.16)+(C.4), (A.1)+(B.16)+(C.5), (A.1)+(B.16)+(C.6), (A.1)+(B.16)+(C.7), (A.1)+(B.16)+(C.8), (A.1)+(B.16)+(C.9), (A.1)+(B.16)+(C.10), (A.1)+(B.16)+(C.11), (A.1)+(B.16)+(C.12), (A.1)+(B.16)+(C.13), (A.1)+(B.16)+(C.14),

(A.1)+(B.16)+(C.15), (A.1)+(B.16)+(C.16), (A.1)+(B.16)+(C.17), (A.1)+(B.16)+(C.18), (A.1)+(B.16)+(C.19), (A.1)+(B.16)+(C.20), (A.1)+(B.16)+(C.21), (A.1)+(B.16)+(C.22), (A.1)+(B.16)+(C.23), (A.1)+(B.16)+(C.24), (A.1)+(B.16)+(C.25), (A.1)+(B.16)+(C.26), (A.1)+(B.16)+(C.27), (A.1)+(B.16)+(C.28), (A.1)+(B.16)+(C.29), (A.1)+(B.16)+(C.30), (A.1)+(B.16)+(C.31), (A.1)+(B.16)+(C.32), (A.1)+(B.16)+(C.33), (A.1)+(B.16)+(C.34), (A.1)+(B.16)+(C.35), (A.1)+(B.16)+(C.36).

Out of these the following compositions are even further preferred:

(A.1)+(B.1)+(C.1), (A.1)+(B.1)+(C.2), (A.1)+(B.1)+(C.3), (A.1)+(B.1)+(C.4), (A.1)+(B.1)+(C.5), (A.1)+(B.1)+(C.6), (A.1)+(B.1)+(C.7), (A.1)+(B.1)+(C.8), (A.1)+(B.1)+(C.9), (A.1)+(B.1)+(C.10), (A.1)+(B.1)+(C.11), (A.1)+(B.1)+(C.12), (A.1)+(B.1)+(C.13), (A.1)+(B.1)+(C.14), (A.1)+(B.1)+(C.15), (A.1)+(B.1)+(C.16), (A.1)+(B.1)+(C.17), (A.1)+(B.1)+(C.18), (A.1)+(B.1)+(C.19), (A.1)+(B.1)+(C.20), (A.1)+(B.1)+(C.21), (A.1)+(B.1)+(C.22), (A.1)+(B.1)+(C.23), (A.1)+(B.1)+(C.24), (A.1)+(B.1)+(C.25), (A.1)+(B.1)+(C.26), (A.1)+(B.1)+(C.27), (A.1)+(B.1)+(C.28), (A.1)+(B.1)+(C.29), (A.1)+(B.1)+(C.30), (A.1)+(B.1)+(C.31), (A.1)+(B.1)+(C.32), (A.1)+(B.1)+(C.33), (A.1)+(B.1)+(C.34), (A.1)+(B.1)+(C.35), (A.1)+(B.1)+(C.36), (A.l)+(B.4)+(C.l), (A.1)+(B.4)+(C.2), (A.1)+(B.4)+(C.3), (A.1)+(B.4)+(C.4), (A.1)+(B.4)+(C.5), (A.1)+(B.4)+(C.6), (A.1)+(B.4)+(C.7), (A.1)+(B.4)+(C.8), (A.1)+(B.4)+(C.9), (A.1)+(B.4)+(C.10), (A.1)+(B.4)+(C.11), (A.1)+(B.4)+(C.12), (A.1)+(B.4)+(C.13), (A.1)+(B.4)+(C.14), (A.1)+(B.4)+(C.15), (A.1)+(B.4)+(C.16), (A.1)+(B.4)+(C.17), (A.1)+(B.4)+(C.18), (A.1)+(B.4)+(C.19), (A.1)+(B.4)+(C.20), (A.1)+(B.4)+(C.21), (A.1)+(B.4)+(C.22), (A.1)+(B.4)+(C.23), (A.1)+(B.4)+(C.24), (A.1)+(B.4)+(C.25), (A.1)+(B.4)+(C.26), (A.1)+(B.4)+(C.27), (A.1)+(B.4)+(C.28), (A.1)+(B.4)+(C.29), (A.1)+(B.4)+(C.30), (A.1)+(B.4)+(C.31), (A.1)+(B.4)+(C.32), (A.1)+(B.4)+(C.33), (A.1)+(B.4)+(C.34), (A.1)+(B.4)+(C.35), (A.1)+(B.4)+(C.36), (A.1)+(B.5)+(C.1), (A.1)+(B.5)+(C.2), (A.1)+(B.5)+(C.3), (A.1)+(B.5)+(C.4), (A.1)+(B.5)+(C.5), (A.1)+(B.5)+(C.6), (A.1)+(B.5)+(C.7), (A.1)+(B.5)+(C.8), (A.1)+(B.5)+(C.9), (A.1)+(B.5)+(C.10), (A.1)+(B.5)+(C.11), (A.1)+(B.5)+(C.12), (A.1)+(B.5)+(C.13), (A.1)+(B.5)+(C.14), (A.1)+(B.5)+(C.15), (A.1)+(B.5)+(C.16), (A.1)+(B.5)+(C.17), (A.1)+(B.5)+(C.18), (A.1)+(B.5)+(C.19), (A.1)+(B.5)+(C.20), (A.1)+(B.5)+(C.21), (A.1)+(B.5)+(C.22), (A.1)+(B.5)+(C.23), (A.1)+(B.5)+(C.24), (A.1)+(B.5)+(C.25), (A.1)+(B.5)+(C.26), (A.1)+(B.5)+(C.27), (A.1)+(B.5)+(C.28), (A.1)+(B.5)+(C.29), (A.1)+(B.5)+(C.30), (A.1)+(B.5)+(C.31), (A.1)+(B.5)+(C.32), (A.1)+(B.5)+(C.33), (A.1)+(B.5)+(C.34), (A.1)+(B.5)+(C.35), (A.1)+(B.5)+(C.36), (A.1)+(B.7)+(C.1), (A.1)+(B.7)+(C.2), (A.1)+(B.7)+(C.3), (A.1)+(B.7)+(C.4), (A.1)+(B.7)+(C.5), (A.1)+(B.7)+(C.6), (A.1)+(B.7)+(C.7), (A.1)+(B.7)+(C.8), (A.1)+(B.7)+(C.9), (A.1)+(B.7)+(C.10), (A.1)+(B.7)+(C.11), (A.1)+(B.7)+(C.12), (A.1)+(B.7)+(C.13), (A.1)+(B.7)+(C.14), (A.1)+(B.7)+(C.15), (A.1)+(B.7)+(C.16), (A.1)+(B.7)+(C.17), (A.1)+(B.7)+(C.18), (A.1)+(B.7)+(C.19), (A.1)+(B.7)+(C.20), (A.1)+(B.7)+(C.21), (A.1)+(B.7)+(C.22), (A.1)+(B.7)+(C.23), (A.1)+(B.7)+(C.24), (A.1)+(B.7)+(C.25), (A.1)+(B.7)+(C.26), (A.1)+(B.7)+(C.27), (A.1)+(B.7)+(C.28), (A.1)+(B.7)+(C.29), (A.1)+(B.7)+(C.30), (A.1)+(B.7)+(C.31), (A.1)+(B.7)+(C.32), (A.1)+(B.7)+(C.33), (A.1)+(B.7)+(C.34), (A.1)+(B.7)+(C.35), (A.1)+(B.7)+(C.36), (A.1)+(B.8)+(C.1), (A.1)+(B.8)+(C.2), (A.1)+(B.8)+(C.3), (A.1)+(B.8)+(C.4), (A.1)+(B.8)+(C.5), (A.1)+(B.8)+(C.6), (A.1)+(B.8)+(C.7), (A.1)+(B.8)+(C.8), (A.1)+(B.8)+(C.9), (A.1)+(B.8)+(C.10), (A.1)+(B.8)+(C.11), (A.1)+(B.8)+(C.12), (A.1)+(B.8)+(C.13), (A.1)+(B.8)+(C.14), (A.1)+(B.8)+(C.15), (A.1)+(B.8)+(C.16), (A.1)+(B.8)+(C.17), (A.1)+(B.8)+(C.18), (A.1)+(B.8)+(C.19), (A.1)+(B.8)+(C.20), (A.1)+(B.8)+(C.21), (A.1)+(B.8)+(C.22), (A.1)+(B.8)+(C.23), (A.1)+(B.8)+(C.24), (A.1)+(B.8)+(C.25), (A.1)+(B.8)+(C.26), (A.1)+(B.8)+(C.27), (A.1)+(B.8)+(C.28), (A.1)+(B.8)+(C.29), (A.1)+(B.8)+(C.30), (A.1)+(B.8)+(C.31), (A.1)+(B.8)+(C.32), (A.1)+(B.8)+(C.33), (A.1)+(B.8)+(C.34), (A.1)+(B.8)+(C.35), (A.1)+(B.8)+(C.36), (A.1)+(B.2.10)+(C.1), (A.1)+(B.2.10)+(C.2), (A.1)+(B.2.10)+(C.3), (A.1)+(B.2.10)+(C.4), (A.1)+(B.2.10)+(C.5), (A.1)+(B.2.10)+(C.6), (A.1)+(B.2.10)+(C.7), (A.1)+(B.2.10)+(C.8), (A.1)+(B.2.10)+(C.9), (A.1)+(B.2.10)+(C.10), (A.1)+(B.2.10)+(C.11), (A.1)+(B.2.10)+(C.12), (A.1)+(B.2.10)+(C.13), (A.1)+(B.2.10)+(C.14), (A.1)+(B.2.10)+(C.15), (A.1)+(B.2.10)+(C.16), (A.1)+(B.2.10)+(C.17), (A.1)+(B.2.10)+(C.18), (A.1)+(B.2.10)+(C.19), (A.1)+(B.2.10)+(C.20), (A.1)+(B.2.10)+(C.21), (A.1)+(B.2.10)+(C.22), (A.1)+(B.2.10)+(C.23), (A.1)+(B.2.10)+(C.24), (A.1)+(B.2.10)+(C.25), (A.1)+(B.2.10)+(C.26), (A.1)+(B.2.10)+(C.27), (A.1)+(B.2.10)+(C.28), (A.1)+(B.2.10)+(C.29), (A.1)+(B.2.10)+(C.30), (A.1)+(B.2.10)+(C.31), (A.1)+(B.2.10)+(C.32), (A.1)+(B.2.10)+(C.33), (A.1)+(B.2.10)+(C.34), (A.1)+(B.2.10)+(C.35), (A.1)+(B.2.10)+(C.36), (A.1)+(B.2.11)+(C.1), (A.1)+(B.2.11)+(C.2), (A.1)+(B.2.11)+(C.3), (A.1)+(B.2.11)+(C.4), (A.1)+(B.2.11)+(C.5), (A.1)+(B.2.11)+(C.6), (A.1)+(B.2.11)+(C.7), (A.1)+(B.2.11)+(C.8), (A.1)+(B.2.11)+(C.9), (A.1)+(B.2.11)+(C.10), (A.1)+(B.2.11)+(C.11), (A.1)+(B.2.11)+(C.12), (A.1)+(B.2.11)+(C.13), (A.1)+(B.2.11)+(C.14), (A.1)+(B.2.11)+(C.15), (A.1)+(B.2.11)+(C.16), (A.1)+(B.2.11)+(C.17), (A.1)+(B.2.11)+(C.18), (A.1)+(B.2.11)+(C.19), (A.1)+(B.2.11)+(C.20), (A.1)+(B.2.11)+(C.21), (A.1)+(B.2.11)+(C.22), (A.1)+(B.2.11)+(C.23), (A.1)+(B.2.11)+(C.24), (A.1)+(B.2.11)+(C.25), (A.1)+(B.2.11)+(C.26), (A.1)+(B.2.11)+(C.27), (A.1)+(B.2.11)+(C.28), (A.1)+(B.2.11)+(C.29),

(A.1)+(B.2.11)+(C.30), (A.1)+(B.2.11)+(C.31), (A.1)+(B.2.11)+(C.32), (A.1)+(B.2.11)+(C.33), (A.1)+(B.2.11)+(C.34), (A.1)+(B.2.11)+(C.35), (A.1)+(B.2.11)+(C.36), (A.1)+(B.2.12)+(C.1), (A.1)+(B.2.12)+(C.2), (A.1)+(B.2.12)+(C.3), (A.1)+(B.2.12)+(C.4), (A.1)+(B.2.12)+(C.5), (A.1)+(B.2.12)+(C.6), (A.1)+(B.2.12)+(C.7), (A.1)+(B.2.12)+(C.8), (A.1)+(B.2.12)+(C.9), (A.1)+(B.2.12)+(C.10), (A.1)+(B.2.12)+(C.11), (A.1)+(B.2.12)+(C.12), (A.1)+(B.2.12)+(C.13), (A.1)+(B.2.12)+(C.14), (A.1)+(B.2.12)+(C.15), (A.1)+(B.2.12)+(C.16), (A.1)+(B.2.12)+(C.17), (A.1)+(B.2.12)+(C.18), (A.1)+(B.2.12)+(C.19), (A.1)+(B.2.12)+(C.20), (A.1)+(B.2.12)+(C.21), (A.1)+(B.2.12)+(C.22), (A.1)+(B.2.12)+(C.23), (A.1)+(B.2.12)+(C.24), (A.1)+(B.2.12)+(C.25), (A.1)+(B.2.12)+(C.26), (A.1)+(B.2.12)+(C.27), (A.1)+(B.2.12)+(C.28), (A.1)+(B.2.12)+(C.29), (A.1)+(B.2.12)+(C.30), (A.1)+(B.2.12)+(C.31), (A.1)+(B.2.12)+(C.32), (A.1)+(B.2.12)+(C.33), (A.1)+(B.2.12)+(C.34), (A.1)+(B.2.12)+(C.35), (A.1)+(B.2.12)+(C.36).

Out of the first group the following compositions are also even further preferred:

(A.1)+(B.1)+(C.9), (A.1)+(B.1)+(C.25), (A.1)+(B.1)+(C.28), (A.1)+(B.1)+(C.4), (A.1)+(B.1)+(C.24), (A.1)+(B.2)+(C.9), (A.1)+(B.2)+(C.25), (A.1)+(B.2)+(C.28), (A.1)+(B.2)+(C.4), (A.1)+(B.2)+(C.24), (A.1)+(B.3)+(C.9), (A.1)+(B.3)+(C.25), (A.1)+(B.3)+(C.28), (A.1)+(B.3)+(C.4), (A.1)+(B.3)+(C.24), (A.1)+(B.4)+(C.9), (A.1)+(B.4)+(C.25), (A.1)+(B.4)+(C.28), (A.1)+(B.4)+(C.4), (A.1)+(B.4)+(C.24), (A.1)+(B.5)+(C.9), (A.1)+(B.5)+(C.25), (A.1)+(B.5)+(C.28), (A.1)+(B.5)+(C.4), (A.1)+(B.5)+(C.24), (A.1)+(B.6)+(C.9), (A.1)+(B.6)+(C.25), (A.1)+(B.6)+(C.28), (A.1)+(B.6)+(C.4), (A.1)+(B.6)+(C.24), (A.1)+(B.7)+(C.9), (A.1)+(B.7)+(C.25), (A.1)+(B.7)+(C.28), (A.1)+(B.7)+(C.4), (A.1)+(B.7)+(C.24), (A.1)+(B.8)+(C.9), (A.1)+(B.8)+(C.25), (A.1)+(B.8)+(C.28), (A.1)+(B.8)+(C.4), (A.1)+(B.8)+(C.24), (A.1)+(B.9)+(C.9), (A.1)+(B.9)+(C.25), (A.1)+(B.9)+(C.28), (A.1)+(B.9)+(C.4), (A.1)+(B.9)+(C.24), (A.1)+(B.10)+(C.9), (A.1)+(B.10)+(C.25), (A.1)+(B.10)+(C.28), (A.1)+(B.10)+(C.4), (A.1)+(B.10)+(C.24), (A.1)+(B.11)+(C.9), (A.1)+(B.11)+(C.25), (A.1)+(B.11)+(C.28), (A.1)+(B.11)+(C.4), (A.1)+(B.11)+(C.24), (A.1)+(B.12)+(C.9), (A.1)+(B.12)+(C.25), (A.1)+(B.12)+(C.28), (A.1)+(B.12)+(C.4), (A.1)+(B.12)+(C.24), (A.1)+(B.13)+(C.9), (A.1)+(B.13)+(C.25), (A.1)+(B.13)+(C.28), (A.1)+(B.13)+(C.4), (A.1)+(B.13)+(C.24), (A.1)+(B.14)+(C.9), (A.1)+(B.14)+(C.25), (A.1)+(B.14)+(C.28), (A.1)+(B.14)+(C.4), (A.1)+(B.14)+(C.24), (A.1)+(B.15)+(C.9), (A.1)+(B.15)+(C.25), (A.1)+(B.15)+(C.28), (A.1)+(B.15)+(C.4), (A.1)+(B.15)+(C.24), (A.1)+(B.16)+(C.9), (A.1)+(B.16)+(C.25), (A.1)+(B.16)+(C.28), (A.1)+(B.16)+(C.4), (A.1)+(B.16)+(C.24).

Most preference is given to the following compositions:

(A.1)+(B.1)+(C.9), (A.1)+(B.1)+(C.25), (A.1)+(B.1)+(C.28), (A.1)+(B.1)+(C.4), (A.1)+(B.1)+(C.24), (A.1)+(B.4)+(C.9), (A.1)+(B.4)+(C.25), (A.1)+(B.4)+(C.28), (A.1)+(B.4)+(C.4), (A.1)+(B.4)+(C.24), (A.1)+(B.5)+(C.9), (A.1)+(B.5)+(C.25), (A.1)+(B.5)+(C.28), (A.1)+(B.5)+(C.4), (A.1)+(B.5)+(C.24), (A.1)+(B.7)+(C.9), (A.1)+(B.7)+(C.25), (A.1)+(B.7)+(C.28), (A.1)+(B.7)+(C.4), (A.1)+(B.7)+(C.24), (A.1)+(B.8)+(C.9), (A.1)+(B.8)+(C.25), (A.1)+(B.8)+(C.28), (A.1)+(B.8)+(C.4), (A.1)+(B.8)+(C.24), (A.1)+(B.10)+(C.9), (A.1)+(B.10)+(C.25), (A.1)+(B.10)+(C.28), (A.1)+(B.10)+(C.4), (A.1)+(B.1)+(C.24), (A.1)+(B.2.11)+(C.9), (A.1)+(B.2.11)+(C.25), (A.1)+(B.2.11)+(C.28), (A.1)+(B.11)+(C.4), (A.1)+(B.11)+(C.24), (A.1)+(B.12)+(C.9), (A.1)+(B.12)+(C.25), (A.1)+(B.12)+(C.28),(A.1)+(B.12)+(C.4),(A.1)+(B.12)+(C.24).

The following compositions (A.1)+(B.4)+(C.9), (A.1)+(B.10)+(C.9), (A.1)+(B.4)+(C.25) and (A.1)+(B.10)+(C.25), are mostly preferred.

(A.2)+(B.1)+(C.1), (A.2)+(B.1)+(C.2), (A.2)+(B.1)+(C.3), (A.2)+(B.1)+(C.4), (A.2)+(B.1)+(C.5), (A.2)+(B.1)+(C.6), (A.2)+(B.1)+(C.7), (A.2)+(B.1)+(C.8), (A.2)+(B.1)+(C.9), (A.2)+(B.1)+(C.10), (A.2)+(B.1)+(C.11), (A.2)+(B.1)+(C.12), (A.2)+(B.1)+(C.13), (A.2)+(B.1)+(C.14), (A.2)+(B.1)+(C.15), (A.2)+(B.1)+(C.16), (A.2)+(B.1)+(C.17), (A.2)+(B.1)+(C.18), (A.2)+(B.1)+(C.19), (A.2)+(B.1)+(C.20), (A.2)+(B.1)+(C.21), (A.2)+(B.1)+(C.22), (A.2)+(B.1)+(C.23), (A.2)+(B.1)+(C.24), (A.2)+(B.1)+(C.25), (A.2)+(B.1)+(C.26), (A.2)+(B.1)+(C.27), (A.2)+(B.1)+(C.28), (A.2)+(B.1)+(C.29), (A.2)+(B.1)+(C.30), (A.2)+(B.1)+(C.31), (A.2)+(B.1)+(C.32), (A.2)+(B.1)+(C.33), (A.2)+(B.1)+(C.34), (A.2)+(B.1)+(C.35), (A.2)+(B.1)+(C.36), (A.2)+(B.2)+(C.1), (A.2)+(B.2)+(C.2), (A.2)+(B.2)+(C.3), (A.2)+(B.2)+(C.4), (A.2)+(B.2)+(C.5), (A.2)+(B.2)+(C.6), (A.2)+(B.2)+(C.7), (A.2)+(B.2)+(C.8), (A.2)+(B.2)+(C.9), (A.2)+(B.2)+(C.10), (A.2)+(B.2)+(C.11), (A.2)+(B.2)+(C.12), (A.2)+(B.2)+(C.13), (A.2)+(B.2)+(C.14), (A.2)+(B.2)+(C.15), (A.2)+(B.2)+(C.16), (A.2)+(B.2)+(C.17), (A.2)+(B.2)+(C.18), (A.2)+(B.2)+(C.19), (A.2)+(B.2)+(C.20), (A.2)+(B.2)+(C.21), (A.2)+(B.2)+(C.22), (A.2)+(B.2)+(C.23), (A.2)+(B.2)+(C.24), (A.2)+(B.2)+(C.25), (A.2)+(B.2)+(C.26), (A.2)+(B.2)+(C.27), (A.2)+(B.2)+(C.28), (A.2)+(B.2)+(C.29), (A.2)+(B.2)+(C.30), (A.2)+(B.2)+(C.31), (A.2)+(B.2)+(C.32), (A.2)+(B.2)+(C.33), (A.2)+(B.2)+(C.34), (A.2)+(B.2)+(C.35), (A.2)+(B.2)+(C.36),),

(A.2)+(B.3)+(C.1), (A.2)+(B.3)+(C.2), (A.2)+(B.3)+(C.3), (A.2)+(B.3)+(C.4), (A.2)+(B.3)+(C.5), (A.2)+(B.3)+(C.6), (A.2)+(B.3)+(C.7), (A.2)+(B.3)+(C.8), (A.2)+(B.3)+(C.9), (A.2)+(B.3)+(C.10), (A.2)+(B.3)+(C.11), (A.2)+(B.3)+(C.12), (A.2)+(B.3)+(C.13), (A.2)+(B.3)+(C.14), (A.2)+(B.3)+(C.15), (A.2)+(B.3)+(C.16), (A.2)+(B.3)+(C.17), (A.2)+(B.3)+(C.18), (A.2)+(B.3)+(C.19), (A.2)+(B.3)+(C.20), (A.2)+(B.3)+(C.21), (A.2)+(B.3)+(C.22), (A.2)+(B.3)+(C.23), (A.2)+(B.3)+(C.24), (A.2)+(B.3)+(C.25), (A.2)+(B.3)+(C.26), (A.2)+(B.3)+(C.27), (A.2)+(B.3)+(C.28), (A.2)+(B.3)+(C.29), (A.2)+(B.3)+(C.30), (A.2)+(B.3)+(C.31), (A.2)+(B.3)+(C.32), (A.2)+(B.3)+(C.33), (A.2)+(B.3)+(C.34), (A.2)+(B.3)+(C.35), (A.2)+(B.3)+(C.36), (A.2)+(B.4)+(C.1), (A.2)+(B.4)+(C.2), (A.2)+(B.4)+(C.3), (A.2)+(B.4)+(C.4), (A.2)+(B.4)+(C.5), (A.2)+(B.4)+(C.6), (A.2)+(B.4)+(C.7), (A.2)+(B.4)+(C.8), (A.2)+(B.4)+(C.9), (A.2)+(B.4)+(C.10), (A.2)+(B.4)+(C.11), (A.2)+(B.4)+(C.12), (A.2)+(B.4)+(C.13), (A.2)+(B.4)+(C.14), (A.2)+(B.4)+(C.15), (A.2)+(B.4)+(C.16), (A.2)+(B.4)+(C.17), (A.2)+(B.4)+(C.18), (A.2)+(B.4)+(C.19), (A.2)+(B.4)+(C.20), (A.2)+(B.4)+(C.21), (A.2)+(B.4)+(C.22), (A.2)+(B.4)+(C.23), (A.2)+(B.4)+(C.24), (A.2)+(B.4)+(C.25), (A.2)+(B.4)+(C.26), (A.2)+(B.4)+(C.27), (A.2)+(B.4)+(C.28), (A.2)+(B.4)+(C.29), (A.2)+(B.4)+(C.30), (A.2)+(B.4)+(C.31), (A.2)+(B.4)+(C.32), (A.2)+(B.4)+(C.33), (A.2)+(B.4)+(C.34), (A.2)+(B.4)+(C.35), (A.2)+(B.4)+(C.36), (A.2)+(B.5)+(C.1), (A.2)+(B.5)+(C.2), (A.2)+(B.5)+(C.3), (A.2)+(B.5)+(C.4), (A.2)+(B.5)+(C.5), (A.2)+(B.5)+(C.6), (A.2)+(B.5)+(C.7), (A.2)+(B.5)+(C.8), (A.2)+(B.5)+(C.9), (A.2)+(B.5)+(C.10), (A.2)+(B.5)+(C.11), (A.2)+(B.5)+(C.12), (A.2)+(B.5)+(C.13), (A.2)+(B.5)+(C.14), (A.2)+(B.5)+(C.15), (A.2)+(B.5)+(C.16), (A.2)+(B.5)+(C.17), (A.2)+(B.5)+(C.18), (A.2)+(B.5)+(C.19), (A.2)+(B.5)+(C.20), (A.2)+(B.5)+(C.21), (A.2)+(B.5)+(C.22), (A.2)+(B.5)+(C.23), (A.2)+(B.5)+(C.24), (A.2)+(B.5)+(C.25), (A.2)+(B.5)+(C.26), (A.2)+(B.5)+(C.27), (A.2)+(B.5)+(C.28), (A.2)+(B.5)+(C.29), (A.2)+(B.5)+(C.30), (A.2)+(B.5)+(C.31), (A.2)+(B.5)+(C.32), (A.2)+(B.5)+(C.33), (A.2)+(B.5)+(C.34), (A.2)+(B.5)+(C.35), (A.2)+(B.5)+(C.36), (A.2)+(B.6)+(C.1), (A.2)+(B.6)+(C.2), (A.2)+(B.6)+(C.3), (A.2)+(B.6)+(C.4), (A.2)+(B.6)+(C.5), (A.2)+(B.6)+(C.6), (A.2)+(B.6)+(C.7), (A.2)+(B.6)+(C.8), (A.2)+(B.6)+(C.9), (A.2)+(B.6)+(C.10), (A.2)+(B.6)+(C.11), (A.2)+(B.6)+(C.12), (A.2)+(B.6)+(C.13), (A.2)+(B.6)+(C.14), (A.2)+(B.6)+(C.15), (A.2)+(B.6)+(C.16), (A.2)+(B.6)+(C.17), (A.2)+(B.6)+(C.18), (A.2)+(B.6)+(C.19), (A.2)+(B.6)+(C.20), (A.2)+(B.6)+(C.21), (A.2)+(B.6)+(C.22), (A.2)+(B.6)+(C.23), (A.2)+(B.6)+(C.24), (A.2)+(B.6)+(C.25), (A.2)+(B.6)+(C.26), (A.2)+(B.6)+(C.27), (A.2)+(B.6)+(C.28), (A.2)+(B.6)+(C.29), (A.2)+(B.6)+(C.30), (A.2)+(B.6)+(C.31), (A.2)+(B.6)+(C.32), (A.2)+(B.6)+(C.33), (A.2)+(B.6)+(C.34), (A.2)+(B.6)+(C.35), (A.2)+(B.6)+(C.36), (A.2)+(B.7)+(C.1), (A.2)+(B.7)+(C.2), (A.2)+(B.7)+(C.3), (A.2)+(B.7)+(C.4), (A.2)+(B.7)+(C.5), (A.2)+(B.7)+(C.6), (A.2)+(B.7)+(C.7), (A.2)+(B.7)+(C.8), (A.2)+(B.7)+(C.9), (A.2)+(B.7)+(C.10), (A.2)+(B.7)+(C.11), (A.2)+(B.7)+(C.12), (A.2)+(B.7)+(C.13), (A.2)+(B.7)+(C.14), (A.2)+(B.7)+(C.15), (A.2)+(B.7)+(C.16), (A.2)+(B.7)+(C.17), (A.2)+(B.7)+(C.18), (A.2)+(B.7)+(C.19), (A.2)+(B.7)+(C.20), (A.2)+(B.7)+(C.21), (A.2)+(B.7)+(C.22), (A.2)+(B.7)+(C.23), (A.2)+(B.7)+(C.24), (A.2)+(B.7)+(C.25), (A.2)+(B.7)+(C.26), (A.2)+(B.7)+(C.27), (A.2)+(B.7)+(C.28), (A.2)+(B.7)+(C.29), (A.2)+(B.7)+(C.30), (A.2)+(B.7)+(C.31), (A.2)+(B.7)+(C.32), (A.2)+(B.7)+(C.33), (A.2)+(B.7)+(C.34), (A.2)+(B.7)+(C.35), (A.2)+(B.7)+(C.36), (A.2)+(B.8)+(C.1), (A.2)+(B.8)+(C.2), (A.2)+(B.8)+(C.3), (A.2)+(B.8)+(C.4), (A.2)+(B.8)+(C.5), (A.2)+(B.8)+(C.6), (A.2)+(B.8)+(C.7), (A.2)+(B.8)+(C.8), (A.2)+(B.8)+(C.9), (A.2)+(B.8)+(C.10), (A.2)+(B.8)+(C.11), (A.2)+(B.8)+(C.12), (A.2)+(B.8)+(C.13), (A.2)+(B.8)+(C.14), (A.2)+(B.8)+(C.15), (A.2)+(B.8)+(C.16), (A.2)+(B.8)+(C.17), (A.2)+(B.8)+(C.18), (A.2)+(B.8)+(C.19), (A.2)+(B.8)+(C.20), (A.2)+(B.8)+(C.21), (A.2)+(B.8)+(C.22), (A.2)+(B.8)+(C.23), (A.2)+(B.8)+(C.24), (A.2)+(B.8)+(C.25), (A.2)+(B.8)+(C.26), (A.2)+(B.8)+(C.27), (A.2)+(B.8)+(C.28), (A.2)+(B.8)+(C.29), (A.2)+(B.8)+(C.30), (A.2)+(B.8)+(C.31), (A.2)+(B.8)+(C.32), (A.2)+(B.8)+(C.33), (A.2)+(B.8)+(C.34), (A.2)+(B.8)+(C.35), (A.2)+(B.8)+(C.36), (A.2)+(B.9)+(C.1), (A.2)+(B.9)+(C.2), (A.2)+(B.9)+(C.3), (A.2)+(B.9)+(C.4), (A.2)+(B.9)+(C.5), (A.2)+(B.9)+(C.6), (A.2)+(B.9)+(C.7), (A.2)+(B.9)+(C.8), (A.2)+(B.9)+(C.9), (A.2)+(B.9)+(C.10), (A.2)+(B.9)+(C.11), (A.2)+(B.9)+(C.12), (A.2)+(B.9)+(C.13), (A.2)+(B.9)+(C.14), (A.2)+(B.9)+(C.15), (A.2)+(B.9)+(C.16), (A.2)+(B.9)+(C.17), (A.2)+(B.9)+(C.18), (A.2)+(B.9)+(C.19), (A.2)+(B.9)+(C.20), (A.2)+(B.9)+(C.21), (A.2)+(B.9)+(C.22), (A.2)+(B.9)+(C.23), (A.2)+(B.9)+(C.24), (A.2)+(B.9)+(C.25), (A.2)+(B.9)+(C.26), (A.2)+(B.9)+(C.27), (A.2)+(B.9)+(C.28), (A.2)+(B.9)+(C.29), (A.2)+(B.9)+(C.30), (A.2)+(B.9)+(C.31), (A.2)+(B.9)+(C.32), (A.2)+(B.9)+(C.33), (A.2)+(B.9)+(C.34), (A.2)+(B.9)+(C.35), (A.2)+(B.9)+(C.36), (A.2)+(B.10)+(C.1), (A.2)+(B.10)+(C.2), (A.2)+(B.10)+(C.3), (A.2)+(B.10)+(C.4), (A.2)+(B.10)+(C.5), (A.2)+(B.10)+(C.6), (A.2)+(B.10)+(C.7), (A.2)+(B.10)+(C.8), (A.2)+(B.10)+(C.9), (A.2)+(B.10)+(C.10), (A.2)+(B.10)+(C.11), (A.2)+(B.10)+(C.12), (A.2)+(B.10)+(C.13), (A.2)+(B.10)+(C.14), (A.2)+(B.10)+(C.15), (A.2)+(B.10)+(C.16), (A.2)+(B.10)+(C.17), (A.2)+(B.10)+(C.18), (A.2)+(B.10)+(C.19), (A.2)+(B.10)+(C.20), (A.2)+(B.10)+(C.21), (A.2)+(B.10)+(C.22), (A.2)+(B.10)+(C.23), (A.2)+(B.10)+(C.24), (A.2)+(B.10)+(C.25), (A.2)+(B.10)+(C.26), (A.2)+(B.10)+(C.27), (A.2)+(B.10)+(C.28), (A.2)+(B.10)+(C.29), (A.2)+(B.10)+(C.30), (A.2)+(B.10)+(C.31), (A.2)+(B.10)+(C.32), (A.2)+(B.10)+(C.33), (A.2)+(B.10)+(C.34), (A.2)+(B.10)+(C.35), (A.2)+(B.10)+(C.36), (A.2)+(B.11)+(C.1), (A.2)+(B.11)+(C.2), (A.2)+(B.11)+(C.3), (A.2)+(B.11)+(C.4), (A.2)+(B.11)+(C.5), (A.2)+(B.11)+(C.6), (A.2)+(B.11)+(C.7), (A.2)+(B.11)+(C.8), (A.2)+(B.11)+(C.9),

(A.2)+(B.11)+(C.10), (A.2)+(B.11)+(C.11), (A.2)+(B.11)+(C.12), (A.2)+(B.11)+(C.13), (A.2)+(B.11)+(C.14), (A.2)+(B.11)+(C.15), (A.2)+(B.11)+(C.16), (A.2)+(B.11)+(C.17), (A.2)+(B.11)+(C.18), (A.2)+(B.11)+(C.19), (A.2)+(B.11)+(C.20), (A.2)+(B.11)+(C.21), (A.2)+(B.11)+(C.22), (A.2)+(B.11)+(C.23), (A.2)+(B.11)+(C.24), (A.2)+(B.11)+(C.25), (A.2)+(B.11)+(C.26), (A.2)+(B.11)+(C.27), (A.2)+(B.11)+(C.28), (A.2)+(B.11)+(C.29), (A.2)+(B.11)+(C.30), (A.2)+(B.11)+(C.31), (A.2)+(B.11)+(C.32), (A.2)+(B.11)+(C.33), (A.2)+(B.11)+(C.34), (A.2)+(B.11)+(C.35), (A.2)+(B.11)+(C.36), (A.2)+(B.12)+(C.1), (A.2)+(B.12)+(C.2), (A.2)+(B.12)+(C.3), (A.2)+(B.12)+(C.4), (A.2)+(B.12)+(C.5), (A.2)+(B.12)+(C.6), (A.2)+(B.12)+(C.7), (A.2)+(B.12)+(C.8), (A.2)+(B.12)+(C.9), (A.2)+(B.12)+(C.10), (A.2)+(B.12)+(C.11), (A.2)+(B.12)+(C.12), (A.2)+(B.12)+(C.13), (A.2)+(B.12)+(C.14), (A.2)+(B.12)+(C.15), (A.2)+(B.12)+(C.16), (A.2)+(B.12)+(C.17), (A.2)+(B.12)+(C.18), (A.2)+(B.12)+(C.19), (A.2)+(B.12)+(C.20), (A.2)+(B.12)+(C.21), (A.2)+(B.12)+(C.22), (A.2)+(B.12)+(C.23), (A.2)+(B.12)+(C.24), (A.2)+(B.12)+(C.25), (A.2)+(B.12)+(C.26), (A.2)+(B.12)+(C.27), (A.2)+(B.12)+(C.28), (A.2)+(B.12)+(C.29), (A.2)+(B.12)+(C.30), (A.2)+(B.12)+(C.31), (A.2)+(B.12)+(C.32), (A.2)+(B.12)+(C.33), (A.2)+(B.12)+(C.34), (A.2)+(B.12)+(C.35), (A.2)+(B.12)+(C.36), (A.2)+(B.13)+(C.1), (A.2)+(B.13)+(C.2), (A.2)+(B.13)+(C.3), (A.2)+(B.13)+(C.4), (A.2)+(B.13)+(C.5), (A.2)+(B.13)+(C.6), (A.2)+(B.13)+(C.7), (A.2)+(B.13)+(C.8), (A.2)+(B.13)+(C.9), (A.2)+(B.13)+(C.10), (A.2)+(B.13)+(C.11), (A.2)+(B.13)+(C.12), (A.2)+(B.13)+(C.13), (A.2)+(B.13)+(C.14), (A.2)+(B.13)+(C.15), (A.2)+(B.13)+(C.16), (A.2)+(B.13)+(C.17), (A.2)+(B.13)+(C.18), (A.2)+(B.13)+(C.19), (A.2)+(B.13)+(C.20), (A.2)+(B.13)+(C.21), (A.2)+(B.13)+(C.22), (A.2)+(B.13)+(C.23), (A.2)+(B.13)+(C.24), (A.2)+(B.13)+(C.25), (A.2)+(B.13)+(C.26), (A.2)+(B.13)+(C.27), (A.2)+(B.13)+(C.28), (A.2)+(B.13)+(C.29), (A.2)+(B.13)+(C.30), (A.2)+(B.13)+(C.31), (A.2)+(B.13)+(C.32), (A.2)+(B.13)+(C.33), (A.2)+(B.13)+(C.34), (A.2)+(B.13)+(C.35), (A.2)+(B.13)+(C.36), (A.2)+(B.14)+(C.1), (A.2)+(B.14)+(C.2), (A.2)+(B.14)+(C.3), (A.2)+(B.14)+(C.4), (A.2)+(B.14)+(C.5), (A.2)+(B.14)+(C.6), (A.2)+(B.14)+(C.7), (A.2)+(B.14)+(C.8), (A.2)+(B.14)+(C.9), (A.2)+(B.14)+(C.10), (A.2)+(B.14)+(C.11), (A.2)+(B.14)+(C.12), (A.2)+(B.14)+(C.13), (A.2)+(B.14)+(C.14), (A.2)+(B.14)+(C.15), (A.2)+(B.14)+(C.16), (A.2)+(B.14)+(C.17), (A.2)+(B.14)+(C.18), (A.2)+(B.14)+(C.19), (A.2)+(B.14)+(C.20), (A.2)+(B.14)+(C.21), (A.2)+(B.14)+(C.22), (A.2)+(B.14)+(C.23), (A.2)+(B.14)+(C.24), (A.2)+(B.14)+(C.25), (A.2)+(B.14)+(C.26), (A.2)+(B.14)+(C.27), (A.2)+(B.14)+(C.28), (A.2)+(B.14)+(C.29), (A.2)+(B.14)+(C.30), (A.2)+(B.14)+(C.31), (A.2)+(B.14)+(C.32), (A.2)+(B.14)+(C.33), (A.2)+(B.14)+(C.34), (A.2)+(B.14)+(C.35), (A.2)+(B.14)+(C.36), (A.2)+(B.15)+(C.1), (A.2)+(B.15)+(C.2), (A.2)+(B.15)+(C.3), (A.2)+(B.15)+(C.4), (A.2)+(B.15)+(C.5), (A.2)+(B.15)+(C.6), (A.2)+(B.15)+(C.7), (A.2)+(B.15)+(C.8), (A.2)+(B.15)+(C.9), (A.2)+(B.15)+(C.10), (A.2)+(B.15)+(C.11), (A.2)+(B.15)+(C.12), (A.2)+(B.15)+(C.13), (A.2)+(B.15)+(C.14), (A.2)+(B.15)+(C.15), (A.2)+(B.15)+(C.16), (A.2)+(B.15)+(C.17), (A.2)+(B.15)+(C.18), (A.2)+(B.15)+(C.19), (A.2)+(B.15)+(C.20), (A.2)+(B.15)+(C.21), (A.2)+(B.15)+(C.22), (A.2)+(B.15)+(C.23), (A.2)+(B.15)+(C.24), (A.2)+(B.15)+(C.25), (A.2)+(B.15)+(C.26), (A.2)+(B.15)+(C.27), (A.2)+(B.15)+(C.28), (A.2)+(B.15)+(C.29), (A.2)+(B.15)+(C.30), (A.2)+(B.15)+(C.31), (A.2)+(B.15)+(C.32), (A.2)+(B.15)+(C.33), (A.2)+(B.15)+(C.34), (A.2)+(B.15)+(C.35), (A.2)+(B.15)+(C.36), (A.2)+(B.16)+(C.1), (A.2)+(B.16)+(C.2), (A.2)+(B.16)+(C.3), (A.2)+(B.16)+(C.4), (A.2)+(B.16)+(C.5), (A.2)+(B.16)+(C.6), (A.2)+(B.16)+(C.7), (A.2)+(B.16)+(C.8), (A.2)+(B.16)+(C.9), (A.2)+(B.16)+(C.10), (A.2)+(B.16)+(C.11), (A.2)+(B.16)+(C.12), (A.2)+(B.16)+(C.13), (A.2)+(B.16)+(C.14), (A.2)+(B.16)+(C.15), (A.2)+(B.16)+(C.16), (A.2)+(B.16)+(C.17), (A.2)+(B.16)+(C.18), (A.2)+(B.16)+(C.19), (A.2)+(B.16)+(C.20), (A.2)+(B.16)+(C.21), (A.2)+(B.16)+(C.22), (A.2)+(B.16)+(C.23), (A.2)+(B.16)+(C.24), (A.2)+(B.16)+(C.25), (A.2)+(B.16)+(C.26), (A.2)+(B.16)+(C.27), (A.2)+(B.16)+(C.28), (A.2)+(B.16)+(C.29), (A.2)+(B.16)+(C.30), (A.2)+(B.16)+(C.31), (A.2)+(B.16)+(C.32), (A.2)+(B.16)+(C.33), (A.2)+(B.16)+(C.34), (A.2)+(B.16)+(C.35), (A.2)+(B.16)+(C.36).

Out of these the following compositions are even further preferred:

(A.2)+(B.1)+(C.1), (A.2)+(B.1)+(C.2), (A.2)+(B.1)+(C.3), (A.2)+(B.1)+(C.4), (A.2)+(B.1)+(C.5), (A.2)+(B.1)+(C.6), (A.2)+(B.1)+(C.7), (A.2)+(B.1)+(C.8), (A.2)+(B.1)+(C.9), (A.2)+(B.1)+(C.10), (A.2)+(B.1)+(C.11), (A.2)+(B.1)+(C.12), (A.2)+(B.1)+(C.13), (A.2)+(B.1)+(C.14), (A.2)+(B.1)+(C.15), (A.2)+(B.1)+(C.16), (A.2)+(B.1)+(C.17), (A.2)+(B.1)+(C.18), (A.2)+(B.1)+(C.19), (A.2)+(B.1)+(C.20), (A.2)+(B.1)+(C.21), (A.2)+(B.1)+(C.22), (A.2)+(B.1)+(C.23), (A.2)+(B.1)+(C.24), (A.2)+(B.1)+(C.25), (A.2)+(B.1)+(C.26), (A.2)+(B.1)+(C.27), (A.2)+(B.1)+(C.28), (A.2)+(B.1)+(C.29), (A.2)+(B.1)+(C.30), (A.2)+(B.1)+(C.31), (A.2)+(B.1)+(C.32), (A.2)+(B.1)+(C.33), (A.2)+(B.1)+(C.34), (A.2)+(B.1)+(C.35), (A2)+(B.1)+(C.36), (A.2)+(B.4)+(C.1), (A.2)+(B.4)+(C.2), (A.2)+(B.4)+(C.3), (A.2)+(B.4)+(C.4), (A.2)+(B.4)+(C.5), (A.2)+(B.4)+(C.6), (A.2)+(B.4)+(C.7), (A.2)+(B.4)+(C.8), (A.2)+(B.4)+(C.9), (A.2)+(B.4)+(C.10), (A.2)+(B.4)+(C.11), (A.2)+(B.4)+(C.12), (A.2)+(B.4)+(C.13), (A.2)+(B.4)+(C.14), (A.2)+(B.4)+(C.15), (A.2)+(B.4)+(C.16), (A.2)+(B.4)+(C.17), (A.2)+(B.4)+(C.18), (A.2)+(B.4)+(C.19), (A.2)+(B.4)+(C.20), (A.2)+(B.4)+(C.21), (A.2)+(B.4)+(C.22), (A.2)+(B.4)+(C.23), (A.2)+(B.4)+(C.24), (A.2)+(B.4)+(C.25), (A.2)+(B.4)+(C.26), (A.2)+(B.4)+(C.27), (A.2)+(B.4)+(C.28), (A.2)+(B.4)+(C.29), (A.2)+(B.4)+(C.30), (A.2)+(B.4)+(C.31),

(A.2)+(B.4)+(C.32), (A.2)+(B.4)+(C.33), (A.2)+(B.4)+(C.34), (A.2)+(B.4)+(C.35), (A.2)+(B.4)+(C.36), (A.2)+(B.5)+(C.1), (A.2)+(B.5)+(C.2), (A.2)+(B.5)+(C.3), (A.2)+(B.5)+(C.4), (A.2)+(B.5)+(C.5), (A.2)+(B.5)+(C.6), (A.2)+(B.5)+(C.7), (A.2)+(B.5)+(C.8), (A.2)+(B.5)+(C.9), (A.2)+(B.5)+(C.10), (A.2)+(B.5)+(C.11), (A.2)+(B.5)+(C.12), (A.2)+(B.5)+(C.13), (A.2)+(B.5)+(C.14), (A.2)+(B.5)+(C.15), (A.2)+(B.5)+(C.16), (A.2)+(B.5)+(C.17), (A.2)+(B.5)+(C.18), (A.2)+(B.5)+(C.19), (A.2)+(B.5)+(C.20), (A.2)+(B.5)+(C.21), (A.2)+(B.5)+(C.22), (A.2)+(B.5)+(C.23), (A.2)+(B.5)+(C.24), (A.2)+(B.5)+(C.25), (A.2)+(B.5)+(C.26), (A.2)+(B.5)+(C.27), (A.2)+(B.5)+(C.28), (A.2)+(B.5)+(C.29), (A.2)+(B.5)+(C.30), (A.2)+(B.5)+(C.31), (A.2)+(B.5)+(C.32), (A.2)+(B.5)+(C.33), (A.2)+(B.5)+(C.34), (A.2)+(B.5)+(C.35), (A.2)+(B.5)+(C.36), (A.2)+(B.7)+(C.1), (A.2)+(B.7)+(C.2), (A.2)+(B.7)+(C.3), (A.2)+(B.7)+(C.4), (A.2)+(B.7)+(C.5), (A.2)+(B.7)+(C.6), (A.2)+(B.7)+(C.7), (A.2)+(B.7)+(C.8), (A.2)+(B.7)+(C.9), (A.2)+(B.7)+(C.10), (A.2)+(B.7)+(C.11), (A.2)+(B.7)+(C.12), (A.2)+(B.7)+(C.13), (A.2)+(B.7)+(C.14), (A.2)+(B.7)+(C.15), (A.2)+(B.7)+(C.16), (A.2)+(B.7)+(C.17), (A.2)+(B.7)+(C.18), (A.2)+(B.7)+(C.19), (A.2)+(B.7)+(C.20), (A.2)+(B.7)+(C.21), (A.2)+(B.7)+(C.22), (A.2)+(B.7)+(C.23), (A.2)+(B.7)+(C.24), (A.2)+(B.7)+(C.25), (A.2)+(B.7)+(C.26), (A.2)+(B.7)+(C.27), (A.2)+(B.7)+(C.28), (A.2)+(B.7)+(C.29), (A.2)+(B.7)+(C.30), (A.2)+(B.7)+(C.31), (A.2)+(B.7)+(C.32), (A.2)+(B.7)+(C.33), (A.2)+(B.7)+(C.34), (A.2)+(B.7)+(C.35), (A.2)+(B.7)+(C.36), (A.2)+(B.8)+(C.1), (A.2)+(B.8)+(C.2), (A.2)+(B.8)+(C.3), (A.2)+(B.8)+(C.4), (A.2)+(B.8)+(C.5), (A.2)+(B.8)+(C.6), (A.2)+(B.8)+(C.7), (A.2)+(B.8)+(C.8), (A.2)+(B.8)+(C.9), (A.2)+(B.8)+(C.10), (A.2)+(B.8)+(C.11), (A.2)+(B.8)+(C.12), (A.2)+(B.8)+(C.13), (A.2)+(B.8)+(C.14), (A.2)+(B.8)+(C.15), (A.2)+(B.8)+(C.16), (A.2)+(B.8)+(C.17), (A.2)+(B.8)+(C.18), (A.2)+(B.8)+(C.19), (A.2)+(B.8)+(C.20), (A.2)+(B.8)+(C.21), (A.2)+(B.8)+(C.22), (A.2)+(B.8)+(C.23), (A.2)+(B.8)+(C.24), (A.2)+(B.8)+(C.25), (A.2)+(B.8)+(C.26), (A.2)+(B.8)+(C.27), (A.2)+(B.8)+(C.28), (A.2)+(B.8)+(C.29), (A.2)+(B.8)+(C.30), (A.2)+(B.8)+(C.31), (A.2)+(B.8)+(C.32), (A.2)+(B.8)+(C.33), (A.2)+(B.8)+(C.34), (A.2)+(B.8)+(C.35), (A.2)+(B.8)+(C.36), (A.2)+(B.2.10)+(C.1), (A.2)+(B.2.10)+(C.2), (A.2)+(B.2.10)+(C.3), (A.2)+(B.2.10)+(C.4), (A.2)+(B.2.10)+(C.5), (A.2)+(B.2.10)+(C.6), (A.2)+(B.2.10)+(C.7), (A.2)+(B.2.10)+(C.8), (A.2)+(B.2.10)+(C.9), (A.2)+(B.2.10)+(C.10), (A.2)+(B.2.10)+(C.11), (A.2)+(B.2.10)+(C.12), (A.2)+(B.2.10)+(C.13), (A.2)+(B.2.10)+(C.14), (A.2)+(B.2.10)+(C.15), (A.2)+(B.2.10)+(C.16), (A.2)+(B.2.10)+(C.17), (A.2)+(B.2.10)+(C.18), (A.2)+(B.2.10)+(C.19), (A.2)+(B.2.10)+(C.20), (A.2)+(B.2.10)+(C.21), (A.2)+(B.2.10)+(C.22), (A.2)+(B.2.10)+(C.23), (A.2)+(B.2.10)+(C.24), (A.2)+(B.2.10)+(C.25), (A.2)+(B.2.10)+(C.26), (A.2)+(B.2.10)+(C.27), (A.2)+(B.2.10)+(C.28), (A.2)+(B.2.10)+(C.29), (A.2)+(B.2.10)+(C.30), (A.2)+(B.2.10)+(C.31), (A.2)+(B.2.10)+(C.32), (A.2)+(B.2.10)+(C.33), (A.2)+(B.2.10)+(C.34), (A.2)+(B.2.10)+(C.35), (A.2)+(B.2.10)+(C.36), (A.2)+(B.2.11)+(C.1), (A.2)+(B.2.11)+(C.2), (A.2)+(B.2.11)+(C.3), (A.2)+(B.2.11)+(C.4), (A.2)+(B.2.11)+(C.5), (A.2)+(B.2.11)+(C.6), (A.2)+(B.2.11)+(C.7), (A.2)+(B.2.11)+(C.8), (A.2)+(B.2.11)+(C.9), (A.2)+(B.2.11)+(C.10), (A.2)+(B.2.11)+(C.11), (A.2)+(B.2.11)+(C.12), (A.2)+(B.2.11)+(C.13), (A.2)+(B.2.11)+(C.14), (A.2)+(B.2.11)+(C.15), (A.2)+(B.2.11)+(C.16), (A.2)+(B.2.11)+(C.17), (A.2)+(B.2.11)+(C.18), (A.2)+(B.2.11)+(C.19), (A.2)+(B.2.11)+(C.20), (A.2)+(B.2.11)+(C.21), (A.2)+(B.2.11)+(C.22), (A.2)+(B.2.11)+(C.23), (A.2)+(B.2.11)+(C.24), (A.2)+(B.2.11)+(C.25), (A.2)+(B.2.11)+(C.26), (A.2)+(B.2.11)+(C.27), (A.2)+(B.2.11)+(C.28), (A.2)+(B.2.11)+(C.29), (A.2)+(B.2.11)+(C.30), (A.2)+(B.2.11)+(C.31), (A.2)+(B.2.11)+(C.32), (A.2)+(B.2.11)+(C.33), (A.2)+(B.2.11)+(C.34), (A.2)+(B.2.11)+(C.35), (A.2)+(B.2.11)+(C.36), (A.2)+(B.2.12)+(C.1), (A.2)+(B.2.12)+(C.2), (A.2)+(B.2.12)+(C.3), (A.2)+(B.2.12)+(C.4), (A.2)+(B.2.12)+(C.5), (A.2)+(B.2.12)+(C.6), (A.2)+(B.2.12)+(C.7), (A.2)+(B.2.12)+(C.8), (A.2)+(B.2.12)+(C.9), (A.2)+(B.2.12)+(C.10), (A.2)+(B.2.12)+(C.11), (A.2)+(B.2.12)+(C.12), (A.2)+(B.2.12)+(C.13), (A.2)+(B.2.12)+(C.14), (A.2)+(B.2.12)+(C.15), (A.2)+(B.2.12)+(C.16), (A.2)+(B.2.12)+(C.17), (A.2)+(B.2.12)+(C.18), (A.2)+(B.2.12)+(C.19), (A.2)+(B.2.12)+(C.20), (A.2)+(B.2.12)+(C.21), (A.2)+(B.2.12)+(C.22), (A.2)+(B.2.12)+(C.23), (A.2)+(B.2.12)+(C.24), (A.2)+(B.2.12)+(C.25), (A.2)+(B.2.12)+(C.26), (A.2)+(B.2.12)+(C.27), (A.2)+(B.2.12)+(C.28), (A.2)+(B.2.12)+(C.29), (A.2)+(B.2.12)+(C.30), (A.2)+(B.2.12)+(C.31), (A.2)+(B.2.12)+(C.32), (A.2)+(B.2.12)+(C.33), (A.2)+(B.2.12)+(C.34), (A.2)+(B.2.12)+(C.35), (A.2)+(B.2.12)+(C.36).

Out of the first group the following compositions are also even further preferred:

(A.2)+(B.1)+(C.9), (A.2)+(B.1)+(C.25), (A.2)+(B.1)+(C.28), (A.2)+(B.1)+(C.4), (A.2)+(B.1)+(C.24), (A.2)+(B.2)+(C.9), (A.2)+(B.2)+(C.25), (A.2)+(B.2)+(C.28), (A.2)+(B.2)+(C.4), (A.2)+(B.2)+(C.24), (A.2)+(B.3)+(C.9), (A.2)+(B.3)+(C.25), (A.2)+(B.3)+(C.28), (A.2)+(B.3)+(C.4), (A.2)+(B.3)+(C.24), (A.2)+(B.4)+(C.9), (A.2)+(B.4)+(C.25), (A.2)+(B.4)+(C.28), (A.2)+(B.4)+(C.4), (A.2)+(B.4)+(C.24), (A.2)+(B.5)+(C.9), (A.2)+(B.5)+(C.25), (A.2)+(B.5)+(C.28), (A.2)+(B.5)+(C.4), (A.2)+(B.5)+(C.24), (A.2)+(B.6)+(C.9), (A.2)+(B.6)+(C.25), (A.2)+(B.6)+(C.28), (A.2)+(B.6)+(C.4), (A.2)+(B.6)+(C.24), (A.2)+(B.7)+(C.9), (A.2)+(B.7)+(C.25), (A.2)+(B.7)+(C.28), (A.2)+(B.7)+(C.4), (A.2)+(B.7)+(C.24), (A.2)+(B.8)+(C.9), (A.2)+(B.8)+(C.25), (A.2)+(B.8)+(C.28), (A.2)+(B.8)+(C.4), (A.2)+(B.8)+(C.24),

(A.2)+(B.9)+(C.9), (A.2)+(B.9)+(C.25), (A.2)+(B.9)+(C.28), (A.2)+(B.9)+(C.4), (A.2)+(B.9)+(C.24), (A.2)+(B.10)+(C.9), (A.2)+(B.10)+(C.25), (A.2)+(B.10)+(C.28), (A.2)+(B.10)+(C.4), (A.2)+(B.10)+(C.24), (A.2)+(B.11)+(C.9), (A.2)+(B.11)+(C.25), (A.2)+(B.11)+(C.28), (A.2)+(B.11)+(C.4), (A.2)+(B.11)+(C.24), (A.2)+(B.12)+(C.9), (A.2)+(B.12)+(C.25), (A.2)+(B.12)+(C.28), (A.2)+(B.12)+(C.4), (A.2)+(B.12)+(C.24), (A.2)+(B.13)+(C.9), (A.2)+(B.13)+(C.25), (A.2)+(B.13)+(C.28), (A.2)+(B.13)+(C.4), (A.2)+(B.13)+(C.24), (A.2)+(B.14)+(C.9), (A.2)+(B.14)+(C.25), (A.2)+(B.14)+(C.28), (A.2)+(B.14)+(C.4), (A.2)+(B.14)+(C.24), (A.2)+(B.15)+(C.9), (A.2)+(B.15)+(C.25), (A.2)+(B.15)+(C.28), (A.2)+(B.15)+(C.4), (A.2)+(B.15)+(C.24), (A.2)+(B.16)+(C.9), (A.2)+(B.16)+(C.25), (A.2)+(B.16)+(C.28), (A.2)+(B.16)+(C.4), (A.2)+(B.16)+(C.24).

Most preference is given to the following compositions:

(A.2)+(B.1)+(C.9), (A.2)+(B.1)+(C.25), (A.2)+(B.1)+(C.28), (A.2)+(B.1)+(C.4), (A.2)+(B.1)+(C.24), (A.2)+(B.4)+(C.9), (A.2)+(B.4)+(C.25), (A.2)+(B.4)+(C.28), (A.2)+(B.4)+(C.4), (A.2)+(B.4)+(C.24), (A.2)+(B.5)+(C.9), (A.2)+(B.5)+(C.25), (A.2)+(B.5)+(C.28), (A.2)+(B.5)+(C.4), (A.2)+(B.5)+(C.24), (A.2)+(B.7)+(C.9), (A.2)+(B.7)+(C.25), (A.2)+(B.7)+(C.28), (A.2)+(B.7)+(C.4), (A.2)+(B.7)+(C.24), (A.2)+(B.8)+(C.9), (A.2)+(B.8)+(C.25), (A.2)+(B.8)+(C.28), (A.2)+(B.8)+(C.4), (A.2)+(B.8)+(C.24), (A.2)+(B.10)+(C.9), (A.2)+(B.10)+(C.25), (A.2)+(B.10)+(C.28), (A.2)+(B.10)+(C.4), (A.2)+(B.1)+(C.24), (A.2)+(B.2.11)+(C.9), (A.2)+(B.2.11)+(C.25), (A.2)+(B.2.11)+(C.28), (A.2)+(B.11)+(C.4), (A.2)+(B.11)+(C.24), (A.2)+(B.12)+(C.9), (A.2)+(B.12)+(C.25), (A.2)+(B.12)+(C.28),(A.2)+(B.12)+(C.4),(A.2)+(B.12)+(C.24).

The following compositions (A.2)+(B.4)+(C.9), (A.2)+(B.10)+(C.9), (A.2)+(B.4)+(C.25) and (A.2)+(B.10)+(C.25), are mostly preferred.

(A.3)+(B.1)+(C.1), (A.3)+(B.1)+(C.2), (A.3)+(B.1)+(C.3), (A.3)+(B.1)+(C.4), (A.3)+(B.1)+(C.5), (A.3)+(B.1)+(C.6), (A.3)+(B.1)+(C.7), (A.3)+(B.1)+(C.8), (A.3)+(B.1)+(C.9), (A.3)+(B.1)+(C.10), (A.3)+(B.1)+(C.11), (A.3)+(B.1)+(C.12), (A.3)+(B.1)+(C.13), (A.3)+(B.1)+(C.14), (A.3)+(B.1)+(C.15), (A.3)+(B.1)+(C.16), (A.3)+(B.1)+(C.17), (A.3)+(B.1)+(C.18), (A.3)+(B.1)+(C.19), (A.3)+(B.1)+(C.20), (A.3)+(B.1)+(C.21), (A.3)+(B.1)+(C.22), (A.3)+(B.1)+(C.23), (A.3)+(B.1)+(C.24), (A.3)+(B.1)+(C.25), (A.3)+(B.1)+(C.26), (A.3)+(B.1)+(C.27), (A.3)+(B.1)+(C.28), (A.3)+(B.1)+(C.29), (A.3)+(B.1)+(C.30), (A.3)+(B.1)+(C.31), (A.3)+(B.1)+(C.32), (A.3)+(B.1)+(C.33), (A.3)+(B.1)+(C.34), (A.3)+(B.1)+(C.35), (A.3)+(B.1)+(C.36), (A.3)+(B.2)+(C.1), (A.3)+(B.2)+(C.2), (A.3)+(B.2)+(C.3), (A.3)+(B.2)+(C.4), (A.3)+(B.2)+(C.5), (A.3)+(B.2)+(C.6), (A.3)+(B.2)+(C.7), (A.3)+(B.2)+(C.8), (A.3)+(B.2)+(C.9), (A.3)+(B.2)+(C.10), (A.3)+(B.2)+(C.11), (A.3)+(B.2)+(C.12), (A.3)+(B.2)+(C.13), (A.3)+(B.2)+(C.14), (A.3)+(B.2)+(C.15), (A.3)+(B.2)+(C.16), (A.3)+(B.2)+(C.17), (A.3)+(B.2)+(C.18), (A.3)+(B.2)+(C.19), (A.3)+(B.2)+(C.20), (A.3)+(B.2)+(C.21), (A.3)+(B.2)+(C.22), (A.3)+(B.2)+(C.23), (A.3)+(B.2)+(C.24), (A.3)+(B.2)+(C.25), (A.3)+(B.2)+(C.26), (A.3)+(B.2)+(C.27), (A.3)+(B.2)+(C.28), (A.3)+(B.2)+(C.29), (A.3)+(B.2)+(C.30), (A.3)+(B.2)+(C.31), (A.3)+(B.2)+(C.32), (A.3)+(B.2)+(C.33), (A.3)+(B.2)+(C.34), (A.3)+(B.2)+(C.35), (A.3)+(B.2)+(C.36), ), (A.3)+(B.3)+(C.1), (A.3)+(B.3)+(C.2), (A.3)+(B.3)+(C.3), (A.3)+(B.3)+(C.4), (A.3)+(B.3)+(C.5), (A.3)+(B.3)+(C.6), (A.3)+(B.3)+(C.7), (A.3)+(B.3)+(C.8), (A.3)+(B.3)+(C.9), (A.3)+(B.3)+(C.10), (A.3)+(B.3)+(C.11), (A.3)+(B.3)+(C.12), (A.3)+(B.3)+(C.13), (A.3)+(B.3)+(C.14), (A.3)+(B.3)+(C.15), (A.3)+(B.3)+(C.16), (A.3)+(B.3)+(C.17), (A.3)+(B.3)+(C.18), (A.3)+(B.3)+(C.19), (A.3)+(B.3)+(C.20), (A.3)+(B.3)+(C.21), (A.3)+(B.3)+(C.22), (A.3)+(B.3)+(C.23), (A.3)+(B.3)+(C.24), (A.3)+(B.3)+(C.25), (A.3)+(B.3)+(C.26), (A.3)+(B.3)+(C.27), (A.3)+(B.3)+(C.28), (A.3)+(B.3)+(C.29), (A.3)+(B.3)+(C.30), (A.3)+(B.3)+(C.31), (A.3)+(B.3)+(C.32), (A.3)+(B.3)+(C.33), (A.3)+(B.3)+(C.34), (A.3)+(B.3)+(C.35), (A.3)+(B.3)+(C.36), (A.3)+(B.4)+(C.1), (A.3)+(B.4)+(C.2), (A.3)+(B.4)+(C.3), (A.3)+(B.4)+(C.4), (A.3)+(B.4)+(C.5), (A.3)+(B.4)+(C.6), (A.3)+(B.4)+(C.7), (A.3)+(B.4)+(C.8), (A.3)+(B.4)+(C.9), (A.3)+(B.4)+(C.10), (A.3)+(B.4)+(C.11), (A.3)+(B.4)+(C.12), (A.3)+(B.4)+(C.13), (A.3)+(B.4)+(C.14), (A.3)+(B.4)+(C.15), (A.3)+(B.4)+(C.16), (A.3)+(B.4)+(C.17), (A.3)+(B.4)+(C.18), (A.3)+(B.4)+(C.19), (A.3)+(B.4)+(C.20), (A.3)+(B.4)+(C.21), (A.3)+(B.4)+(C.22), (A.3)+(B.4)+(C.23), (A.3)+(B.4)+(C.24), (A.3)+(B.4)+(C.25), (A.3)+(B.4)+(C.26), (A.3)+(B.4)+(C.27), (A.3)+(B.4)+(C.28), (A.3)+(B.4)+(C.29), (A.3)+(B.4)+(C.30), (A.3)+(B.4)+(C.31), (A.3)+(B.4)+(C.32), (A.3)+(B.4)+(C.33), (A.3)+(B.4)+(C.34), (A.3)+(B.4)+(C.35), (A.3)+(B.4)+(C.36), (A.3)+(B.5)+(C.1), (A.3)+(B.5)+(C.2), (A.3)+(B.5)+(C.3), (A.3)+(B.5)+(C.4), (A.3)+(B.5)+(C.5), (A.3)+(B.5)+(C.6), (A.3)+(B.5)+(C.7), (A.3)+(B.5)+(C.8), (A.3)+(B.5)+(C.9), (A.3)+(B.5)+(C.10), (A.3)+(B.5)+(C.11), (A.3)+(B.5)+(C.12), (A.3)+(B.5)+(C.13), (A.3)+(B.5)+(C.14), (A.3)+(B.5)+(C.15), (A.3)+(B.5)+(C.16), (A.3)+(B.5)+(C.17), (A.3)+(B.5)+(C.18), (A.3)+(B.5)+(C.19), (A.3)+(B.5)+(C.20), (A.3)+(B.5)+(C.21), (A.3)+(B.5)+(C.22), (A.3)+(B.5)+(C.23), (A.3)+(B.5)+(C.24), (A.3)+(B.5)+(C.25), (A.3)+(B.5)+(C.26), (A.3)+(B.5)+(C.27), (A.3)+(B.5)+(C.28), (A.3)+(B.5)+(C.29), (A.3)+(B.5)+(C.30), (A.3)+(B.5)+(C.31), (A.3)+(B.5)+(C.32), (A.3)+(B.5)+(C.33), (A.3)+(B.5)+(C.34), (A.3)+(B.5)+(C.35), (A.3)+(B.5)+(C.36),

(A.3)+(B.6)+(C.1), (A.3)+(B.6)+(C.2), (A.3)+(B.6)+(C.3), (A.3)+(B.6)+(C.4), (A.3)+(B.6)+(C.5), (A.3)+(B.6)+(C.6), (A.3)+(B.6)+(C.7), (A.3)+(B.6)+(C.8), (A.3)+(B.6)+(C.9), (A.3)+(B.6)+(C.10), (A.3)+(B.6)+(C.11), (A.3)+(B.6)+(C.12), (A.3)+(B.6)+(C.13), (A.3)+(B.6)+(C.14), (A.3)+(B.6)+(C.15), (A.3)+(B.6)+(C.16), (A.3)+(B.6)+(C.17), (A.3)+(B.6)+(C.18), (A.3)+(B.6)+(C.19), (A.3)+(B.6)+(C.20), (A.3)+(B.6)+(C.21), (A.3)+(B.6)+(C.22), (A.3)+(B.6)+(C.23), (A.3)+(B.6)+(C.24), (A.3)+(B.6)+(C.25), (A.3)+(B.6)+(C.26), (A.3)+(B.6)+(C.27), (A.3)+(B.6)+(C.28), (A.3)+(B.6)+(C.29), (A.3)+(B.6)+(C.30), (A.3)+(B.6)+(C.31), (A.3)+(B.6)+(C.32), (A.3)+(B.6)+(C.33), (A.3)+(B.6)+(C.34), (A.3)+(B.6)+(C.35), (A.3)+(B.6)+(C.36), (A.3)+(B.7)+(C.1), (A.3)+(B.7)+(C.2), (A.3)+(B.7)+(C.3), (A.3)+(B.7)+(C.4), (A.3)+(B.7)+(C.5), (A.3)+(B.7)+(C.6), (A.3)+(B.7)+(C.7), (A.3)+(B.7)+(C.8), (A.3)+(B.7)+(C.9), (A.3)+(B.7)+(C.10), (A.3)+(B.7)+(C.11), (A.3)+(B.7)+(C.12), (A.3)+(B.7)+(C.13), (A.3)+(B.7)+(C.14), (A.3)+(B.7)+(C.15), (A.3)+(B.7)+(C.16), (A.3)+(B.7)+(C.17), (A.3)+(B.7)+(C.18), (A.3)+(B.7)+(C.19), (A.3)+(B.7)+(C.20), (A.3)+(B.7)+(C.21), (A.3)+(B.7)+(C.22), (A.3)+(B.7)+(C.23), (A.3)+(B.7)+(C.24), (A.3)+(B.7)+(C.25), (A.3)+(B.7)+(C.26), (A.3)+(B.7)+(C.27), (A.3)+(B.7)+(C.28), (A.3)+(B.7)+(C.29), (A.3)+(B.7)+(C.30), (A.3)+(B.7)+(C.31), (A.3)+(B.7)+(C.32), (A.3)+(B.7)+(C.33), (A.3)+(B.7)+(C.34), (A.3)+(B.7)+(C.35), (A.3)+(B.7)+(C.36), (A.3)+(B.8)+(C.1), (A.3)+(B.8)+(C.2), (A.3)+(B.8)+(C.3), (A.3)+(B.8)+(C.4), (A.3)+(B.8)+(C.5), (A.3)+(B.8)+(C.6), (A.3)+(B.8)+(C.7), (A.3)+(B.8)+(C.8), (A.3)+(B.8)+(C.9), (A.3)+(B.8)+(C.10), (A.3)+(B.8)+(C.11), (A.3)+(B.8)+(C.12), (A.3)+(B.8)+(C.13), (A.3)+(B.8)+(C.14), (A.3)+(B.8)+(C.15), (A.3)+(B.8)+(C.16), (A.3)+(B.8)+(C.17), (A.3)+(B.8)+(C.18), (A.3)+(B.8)+(C.19), (A.3)+(B.8)+(C.20), (A.3)+(B.8)+(C.21), (A.3)+(B.8)+(C.22), (A.3)+(B.8)+(C.23), (A.3)+(B.8)+(C.24), (A.3)+(B.8)+(C.25), (A.3)+(B.8)+(C.26), (A.3)+(B.8)+(C.27), (A.3)+(B.8)+(C.28), (A.3)+(B.8)+(C.29), (A.3)+(B.8)+(C.30), (A.3)+(B.8)+(C.31), (A.3)+(B.8)+(C.32), (A.3)+(B.8)+(C.33), (A.3)+(B.8)+(C.34), (A.3)+(B.8)+(C.35), (A.3)+(B.8)+(C.36), (A.3)+(B.9)+(C.1), (A.3)+(B.9)+(C.2), (A.3)+(B.9)+(C.3), (A.3)+(B.9)+(C.4), (A.3)+(B.9)+(C.5), (A.3)+(B.9)+(C.6), (A.3)+(B.9)+(C.7), (A.3)+(B.9)+(C.8), (A.3)+(B.9)+(C.9), (A.3)+(B.9)+(C.10), (A.3)+(B.9)+(C.11), (A.3)+(B.9)+(C.12), (A.3)+(B.9)+(C.13), (A.3)+(B.9)+(C.14), (A.3)+(B.9)+(C.15), (A.3)+(B.9)+(C.16), (A.3)+(B.9)+(C.17), (A.3)+(B.9)+(C.18), (A.3)+(B.9)+(C.19), (A.3)+(B.9)+(C.20), (A.3)+(B.9)+(C.21), (A.3)+(B.9)+(C.22), (A.3)+(B.9)+(C.23), (A.3)+(B.9)+(C.24), (A.3)+(B.9)+(C.25), (A.3)+(B.9)+(C.26), (A.3)+(B.9)+(C.27), (A.3)+(B.9)+(C.28), (A.3)+(B.9)+(C.29), (A.3)+(B.9)+(C.30), (A.3)+(B.9)+(C.31), (A.3)+(B.9)+(C.32), (A.3)+(B.9)+(C.33), (A.3)+(B.9)+(C.34), (A.3)+(B.9)+(C.35), (A.3)+(B.9)+(C.36), (A.3)+(B.10)+(C.1), (A.3)+(B.10)+(C.2), (A.3)+(B.10)+(C.3), (A.3)+(B.10)+(C.4), (A.3)+(B.10)+(C.5), (A.3)+(B.10)+(C.6), (A.3)+(B.10)+(C.7), (A.3)+(B.10)+(C.8), (A.3)+(B.10)+(C.9), (A.3)+(B.10)+(C.10), (A.3)+(B.10)+(C.11), (A.3)+(B.10)+(C.12), (A.3)+(B.10)+(C.13), (A.3)+(B.10)+(C.14), (A.3)+(B.10)+(C.15), (A.3)+(B.10)+(C.16), (A.3)+(B.10)+(C.17), (A.3)+(B.10)+(C.18), (A.3)+(B.10)+(C.19), (A.3)+(B.10)+(C.20), (A.3)+(B.10)+(C.21), (A.3)+(B.10)+(C.22), (A.3)+(B.10)+(C.23), (A.3)+(B.10)+(C.24), (A.3)+(B.10)+(C.25), (A.3)+(B.10)+(C.26), (A.3)+(B.10)+(C.27), (A.3)+(B.10)+(C.28), (A.3)+(B.10)+(C.29), (A.3)+(B.10)+(C.30), (A.3)+(B.10)+(C.31), (A.3)+(B.10)+(C.32), (A.3)+(B.10)+(C.33), (A.3)+(B.10)+(C.34), (A.3)+(B.10)+(C.35), (A.3)+(B.10)+(C.36), (A.3)+(B.11)+(C.1), (A3)+(B.11)+(C.2), (A.3)+(B.11)+(C.3), (A.3)+(B.11)+(C.4), (A.3)+(B.11)+(C.5), (A.3)+(B.11)+(C.6), (A.3)+(B.11)+(C.7), (A.3)+(B.11)+(C.8), (A.3)+(B.11)+(C.9), (A.3)+(B.11)+(C.10), (A.3)+(B.11)+(C.11), (A.3)+(B.11)+(C.12), (A.3)+(B.11)+(C.13), (A.3)+(B.11)+(C.14), (A.3)+(B.11)+(C.15), (A.3)+(B.11)+(C.16), (A.3)+(B.11)+(C.17), (A.3)+(B.11)+(C.18), (A.3)+(B.11)+(C.19), (A.3)+(B.11)+(C.20), (A.3)+(B.11)+(C.21), (A.3)+(B.11)+(C.22), (A.3)+(B.11)+(C.23), (A.3)+(B.11)+(C.24), (A.3)+(B.11)+(C.25), (A.3)+(B.11)+(C.26), (A.3)+(B.11)+(C.27), (A3 )+(B.11)+(C.28), (A.3)+(B.11)+(C.29), (A.3)+(B.11)+(C.30), (A.3)+(B.11)+(C.31), (A.3)+(B.11)+(C.32), (A.3)+(B.11)+(C.33), (A.3)+(B.11)+(C.34), (A.3)+(B.11)+(C.35), (A.3)+(B.11)+(C.36), (A.3)+(B.12)+(C.1), (A.3)+(B.12)+(C.2), (A.3)+(B.12)+(C.3), (A.3)+(B.12)+(C.4), (A.3)+(B.12)+(C.5), (A.3)+(B.12)+(C.6), (A.3)+(B.12)+(C.7), (A.3)+(B.12)+(C.8), (A.3)+(B.12)+(C.9), (A.3)+(B.12)+(C.10), (A.3)+(B.12)+(C.11), (A.3)+(B.12)+(C.12), (A.3)+(B.12)+(C.13), (A.3)+(B.12)+(C.14), (A.3)+(B.12)+(C.15), (A.3)+(B.12)+(C.16), (A.3)+(B.12)+(C.17), (A.3)+(B.12)+(C.18), (A.3)+(B.12)+(C.19), (A.3)+(B.12)+(C.20), (A.3)+(B.12)+(C.21), (A.3)+(B.12)+(C.22), (A.3)+(B.12)+(C.23), (A.3)+(B.12)+(C.24), (A.3)+(B.12)+(C.25), (A.3)+(B.12)+(C.26), (A.3)+(B.12)+(C.27), (A.3)+(B.12)+(C.28), (A.3)+(B.12)+(C.29), (A.3)+(B.12)+(C.30), (A.3)+(B.12)+(C.31), (A.3)+(B.12)+(C.32), (A.3)+(B.12)+(C.33), (A.3)+(B.12)+(C.34), (A.3)+(B.12)+(C.35), (A.3)+(B.12)+(C.36), (A.3)+(B.13)+(C.1), (A.3)+(B.13)+(C.2), (A.3)+(B.13)+(C.3), (A.3)+(B.13)+(C.4), (A.3)+(B.13)+(C.5), (A.3)+(B.13)+(C.6), (A.3)+(B.13)+(C.7), (A.3)+(B.13)+(C.8), (A.3)+(B.13)+(C.9), (A.3)+(B.13)+(C.10), (A.3)+(B.13)+(C.11), (A.3)+(B.13)+(C.12), (A.3)+(B.13)+(C.13), (A.3)+(B.13)+(C.14), (A.3)+(B.13)+(C.15), (A.3)+(B.13)+(C.16), (A.3)+(B.13)+(C.17), (A.3)+(B.13)+(C.18), (A.3)+(B.13)+(C.19), (A.3)+(B.13)+(C.20), (A.3)+(B.13)+(C.21), (A.3)+(B.13)+(C.22), (A.3)+(B.13)+(C.23), (A.3)+(B.13)+(C.24), (A.3)+(B.13)+(C.25), (A.3)+(B.13)+(C.26), (A.3)+(B.13)+(C.27), (A.3)+(B.13)+(C.28), (A.3)+(B.13)+(C.29), (A.3)+(B.13)+(C.30), (A.3)+(B.13)+(C.31), (A.3)+(B.13)+(C.32), (A.3)+(B.13)+(C.33), (A.3)+(B.13)+(C.34), (A.3)+(B.13)+(C.35), (A.3)+(B.13)+(C.36), (A.3)+(B.14)+(C.1), (A.3)+(B.14)+(C.2), (A.3)+(B.14)+(C.3), (A.3)+(B.14)+(C.4), (A.3)+(B.14)+(C.5), (A.3)+(B.14)+(C.6),

(A.3)+(B.14)+(C.7), (A.3)+(B.14)+(C.8), (A.3)+(B.14)+(C.9), (A.3)+(B.14)+(C.10), (A.3)+(B.14)+(C.11), (A.3)+(B.14)+(C.12), (A.3)+(B.14)+(C.13), (A.3)+(B.14)+(C.14), (A.3)+(B.14)+(C.15), (A.3)+(B.14)+(C.16), (A.3)+(B.14)+(C.17), (A.3)+(B.14)+(C.18), (A.3)+(B.14)+(C.19), (A.3)+(B.14)+(C.20), (A.3)+(B.14)+(C.21), (A.3)+(B.14)+(C.22), (A.3)+(B.14)+(C.23), (A.3)+(B.14)+(C.24), (A.3)+(B.14)+(C.25), (A.3)+(B.14)+(C.26), (A.3)+(B.14)+(C.27), (A.3)+(B.14)+(C.28), (A.3)+(B.14)+(C.29), (A.3)+(B.14)+(C.30), (A.3)+(B.14)+(C.31), (A.3)+(B.14)+(C.32), (A.3)+(B.14)+(C.33), (A.3)+(B.14)+(C.34), (A.3)+(B.14)+(C.35), (A.3)+(B.14)+(C.36), (A.3)+(B.15)+(C.1), (A.3)+(B.15)+(C.2), (A.3)+(B.15)+(C.3), (A.3)+(B.15)+(C.4), (A.3)+(B.15)+(C.5), (A.3)+(B.15)+(C.6), (A.3)+(B.15)+(C.7), (A.3)+(B.15)+(C.8), (A.3)+(B.15)+(C.9), (A.3)+(B.15)+(C.10), (A.3)+(B.15)+(C.11), (A.3)+(B.15)+(C.12), (A.3)+(B.15)+(C.13), (A.3)+(B.15)+(C.14), (A.3)+(B.15)+(C.15), (A.3)+(B.15)+(C.16), (A.3)+(B.15)+(C.17), (A.3)+(B.15)+(C.18), (A.3)+(B.15)+(C.19), (A.3)+(B.15)+(C.20), (A.3)+(B.15)+(C.21), (A.3)+(B.15)+(C.22), (A.3)+(B.15)+(C.23), (A.3)+(B.15)+(C.24), (A.3)+(B.15)+(C.25), (A.3)+(B.15)+(C.26), (A.3)+(B.15)+(C.27), (A.3)+(B.15)+(C.28), (A.3)+(B.15)+(C.29), (A.3)+(B.15)+(C.30), (A.3)+(B.15)+(C.31), (A.3)+(B.15)+(C.32), (A.3)+(B.15)+(C.33), (A.3)+(B.15)+(C.34), (A.3)+(B.15)+(C.35), (A.3)+(B.15)+(C.36), (A.3)+(B.16)+(C.1), (A.3)+(B.16)+(C.2), (A.3)+(B.16)+(C.3), (A.3)+(B.16)+(C.4), (A.3)+(B.16)+(C.5), (A.3)+(B.16)+(C.6), (A.3)+(B.16)+(C.7), (A.3)+(B.16)+(C.8), (A.3)+(B.16)+(C.9), (A.3)+(B.16)+(C.10), (A.3)+(B.16)+(C.11), (A.3)+(B.16)+(C.12), (A.3)+(B.16)+(C.13), (A.3)+(B.16)+(C.14), (A.3)+(B.16)+(C.15), (A.3)+(B.16)+(C.16), (A.3)+(B.16)+(C.17), (A.3)+(B.16)+(C.18), (A.3)+(B.16)+(C.19), (A.3)+(B.16)+(C.20), (A.3)+(B.16)+(C.21), (A.3)+(B.16)+(C.22), (A.3)+(B.16)+(C.23), (A.3)+(B.16)+(C.24), (A.3)+(B.16)+(C.25), (A.3)+(B.16)+(C.26), (A.3)+(B.16)+(C.27), (A.3)+(B.16)+(C.28), (A.3)+(B.16)+(C.29), (A.3)+(B.16)+(C.30), (A.3)+(B.16)+(C.31), (A.3)+(B.16)+(C.32), (A.3)+(B.16)+(C.33), (A.3)+(B.16)+(C.34), (A.3)+(B.16)+(C.35), (A.3)+(B.16)+(C.36).

Out of these the following compositions are even further preferred:

(A.3)+(B.1)+(C.1), (A.3)+(B.1)+(C.2), (A.3)+(B.1)+(C.3), (A.3)+(B.1)+(C.4), (A.3)+(B.1)+(C.5), (A.3)+(B.1)+(C.6), (A.3)+(B.1)+(C.7), (A.3)+(B.1)+(C.8), (A.3)+(B.1)+(C.9), (A.3)+(B.1)+(C.10), (A.3)+(B.1)+(C.11), (A.3)+(B.1)+(C.12), (A.3)+(B.1)+(C.13), (A.3)+(B.1)+(C.14), (A.3)+(B.1)+(C.15), (A.3)+(B.1)+(C.16), (A.3)+(B.1)+(C.17), (A.3)+(B.1)+(C.18), (A.3)+(B.1)+(C.19), (A.3)+(B.1)+(C.20), (A.3)+(B.1)+(C.21), (A.3)+(B.1)+(C.22), (A.3)+(B.1)+(C.23), (A.3)+(B.1)+(C.24), (A.3)+(B.1)+(C.25), (A.3)+(B.1)+(C.26), (A.3)+(B.1)+(C.27), (A.3)+(B.1)+(C.28), (A.3)+(B.1)+(C.29), (A.3)+(B.1)+(C.30), (A.3)+(B.1)+(C.31), (A.3)+(B.1)+(C.32), (A.3)+(B.1)+(C.33), (A.3)+(B.1)+(C.34), (A.3)+(B.1)+(C.35), (A.3)+(B.1)+(C.36), (A.3)+(B.4)+(C.1), (A.3)+(B.4)+(C.2), (A.3)+(B.4)+(C.3), (A.3)+(B.4)+(C.4), (A.3)+(B.4)+(C.5), (A.3)+(B.4)+(C.6), (A.3)+(B.4)+(C.7), (A.3)+(B.4)+(C.8), (A.3)+(B.4)+(C.9), (A.3)+(B.4)+(C.10), (A.3)+(B.4)+(C.11), (A.3)+(B.4)+(C.12), (A.3)+(B.4)+(C.13), (A.3)+(B.4)+(C.14), (A.3)+(B.4)+(C.15), (A.3)+(B.4)+(C.16), (A.3)+(B.4)+(C.17), (A.3)+(B.4)+(C.18), (A.3)+(B.4)+(C.19), (A.3)+(B.4)+(C.20), (A.3)+(B.4)+(C.21), (A.3)+(B.4)+(C.22), (A.3)+(B.4)+(C.23), (A.3)+(B.4)+(C.24), (A.3)+(B.4)+(C.25), (A.3)+(B.4)+(C.26), (A.3)+(B.4)+(C.27), (A.3)+(B.4)+(C.28), (A.3)+(B.4)+(C.29), (A.3)+(B.4)+(C.30), (A.3)+(B.4)+(C.31), (A.3)+(B.4)+(C.32), (A.3)+(B.4)+(C.33), (A.3)+(B.4)+(C.34), (A.3)+(B.4)+(C.35), (A.3)+(B.4)+(C.36), (A.3)+(B.5)+(C.1), (A.3)+(B.5)+(C.2), (A.3)+(B.5)+(C.3), (A.3)+(B.5)+(C.4), (A.3)+(B.5)+(C.5), (A.3)+(B.5)+(C.6), (A.3)+(B.5)+(C.7), (A.3)+(B.5)+(C.8), (A.3)+(B.5)+(C.9), (A.3)+(B.5)+(C.10), (A.3)+(B.5)+(C.11), (A.3)+(B.5)+(C.12), (A.3)+(B.5)+(C.13), (A.3)+(B.5)+(C.14), (A.3)+(B.5)+(C.15), (A.3)+(B.5)+(C.16), (A.3)+(B.5)+(C.17), (A.3)+(B.5)+(C.18), (A.3)+(B.5)+(C.19), (A.3)+(B.5)+(C.20), (A.3)+(B.5)+(C.21), (A.3)+(B.5)+(C.22), (A.3)+(B.5)+(C.23), (A.3)+(B.5)+(C.24), (A.3)+(B.5)+(C.25), (A.3)+(B.5)+(C.26), (A.3)+(B.5)+(C.27), (A.3)+(B.5)+(C.28), (A.3)+(B.5)+(C.29), (A.3)+(B.5)+(C.30), (A.3)+(B.5)+(C.31), (A.3)+(B.5)+(C.32), (A.3)+(B.5)+(C.33), (A.3)+(B.5)+(C.34), (A.3)+(B.5)+(C.35), (A.3)+(B.5)+(C.36), (A.3)+(B.7)+(C.1), (A.3)+(B.7)+(C.2), (A.3)+(B.7)+(C.3), (A.3)+(B.7)+(C.4), (A.3)+(B.7)+(C.5), (A.3)+(B.7)+(C.6), (A.3)+(B.7)+(C.7), (A.3)+(B.7)+(C.8), (A.3)+(B.7)+(C.9), (A.3)+(B.7)+(C.10), (A.3)+(B.7)+(C.11), (A.3)+(B.7)+(C.12), (A.3)+(B.7)+(C.13), (A.3)+(B.7)+(C.14), (A.3)+(B.7)+(C.15), (A.3)+(B.7)+(C.16), (A.3)+(B.7)+(C.17), (A.3)+(B.7)+(C.18), (A.3)+(B.7)+(C.19), (A.3)+(B.7)+(C.20), (A.3)+(B.7)+(C.21), (A.3)+(B.7)+(C.22), (A.3)+(B.7)+(C.23), (A.3)+(B.7)+(C.24), (A.3)+(B.7)+(C.25), (A.3)+(B.7)+(C.26), (A.3)+(B.7)+(C.27), (A.3)+(B.7)+(C.28), (A.3)+(B.7)+(C.29), (A.3)+(B.7)+(C.30), (A.3)+(B.7)+(C.31), (A.3)+(B.7)+(C.32), (A.3)+(B.7)+(C.33), (A.3)+(B.7)+(C.34), (A.3)+(B.7)+(C.35), (A.3)+(B.7)+(C.36), (A.3)+(B.8)+(C.1), (A.3)+(B.8)+(C.2), (A.3)+(B.8)+(C.3), (A.3)+(B.8)+(C.4), (A.3)+(B.8)+(C.5), (A.3)+(B.8)+(C.6), (A.3)+(B.8)+(C.7), (A.3)+(B.8)+(C.8), (A.3)+(B.8)+(C.9), (A.3)+(B.8)+(C.10), (A.3)+(B.8)+(C.11), (A.3)+(B.8)+(C.12), (A.3)+(B.8)+(C.13), (A.3)+(B.8)+(C.14), (A.3)+(B.8)+(C.15), (A.3)+(B.8)+(C.16), (A.3)+(B.8)+(C.17), (A.3)+(B.8)+(C.18), (A.3)+(B.8)+(C.19), (A.3)+(B.8)+(C.20), (A.3)+(B.8)+(C.21), (A.3)+(B.8)+(C.22), (A.3)+(B.8)+(C.23), (A.3)+(B.8)+(C.24), (A.3)+(B.8)+(C.25), (A.3)+(B.8)+(C.26), (A.3)+(B.8)+(C.27), (A.3)+(B.8)+(C.28), (A.3)+(B.8)+(C.29), (A.3)+(B.8)+(C.30), (A.3)+(B.8)+(C.31),

(A.3)+(B.8)+(C.32), (A.3)+(B.8)+(C.33), (A.3)+(B.8)+(C.34), (A.3)+(B.8)+(C.35), (A.3)+(B.8)+(C.36), (A.3)+(B.2.10)+(C.1), (A.3)+(B.2.10)+(C.2), (A.3)+(B.2.10)+(C.3), (A.3)+(B.2.10)+(C.4), (A.3)+(B.2.10)+(C.5), (A.3)+(B.2.10)+(C.6), (A.3)+(B.2.10)+(C.7), (A.3)+(B.2.10)+(C.8), (A.3)+(B.2.10)+(C.9), (A.3)+(B.2.10)+(C.10), (A.3)+(B.2.10)+(C.11), (A.3)+(B.2.10)+(C.12), (A.3)+(B.2.10)+(C.13), (A.3)+(B.2.10)+(C.14), (A.3)+(B.2.10)+(C.15), (A.3)+(B.2.10)+(C.16), (A.3)+(B.2.10)+(C.17), (A.3)+(B.2.10)+(C.18), (A.3)+(B.2.10)+(C.19), (A.3)+(B.2.10)+(C.20), (A.3)+(B.2.10)+(C.21), (A.3)+(B.2.10)+(C.22), (A.3)+(B.2.10)+(C.23), (A.3)+(B.2.10)+(C.24), (A.3)+(B.2.10)+(C.25), (A.3)+(B.2.10)+(C.26), (A.3)+(B.2.10)+(C.27), (A.3)+(B.2.10)+(C.28), (A.3)+(B.2.10)+(C.29), (A.3)+(B.2.10)+(C.30), (A.3)+(B.2.10)+(C.31), (A.3)+(B.2.10)+(C.32), (A.3)+(B.2.10)+(C.33), (A.3)+(B.2.10)+(C.34), (A.3)+(B.2.10)+(C.35), (A.3)+(B.2.10)+(C.36), (A.3)+(B.2.11)+(C.1), (A.3)+(B.2.11)+(C.2), (A.3)+(B.2.11)+(C.3), (A.3)+(B.2.11)+(C.4), (A.3)+(B.2.11)+(C.5), (A.3)+(B.2.11)+(C.6), (A.3)+(B.2.11)+(C.7), (A.3)+(B.2.11)+(C.8), (A.3)+(B.2.11)+(C.9), (A.3)+(B.2.11)+(C.10), (A.3)+(B.2.11)+(C.11), (A.3)+(B.2.11)+(C.12), (A.3)+(B.2.11)+(C.13), (A.3)+(B.2.11)+(C.14), (A.3)+(B.2.11)+(C.15), (A.3)+(B.2.11)+(C.16), (A.3)+(B.2.11)+(C.17), (A.3)+(B.2.11)+(C.18), (A.3)+(B.2.11)+(C.19), (A.3)+(B.2.11)+(C.20), (A.3)+(B.2.11)+(C.21), (A.3)+(B.2.11)+(C.22), (A.3)+(B.2.11)+(C.23), (A.3)+(B.2.11)+(C.24), (A.3)+(B.2.11)+(C.25), (A.3)+(B.2.11)+(C.26), (A.3)+(B.2.11)+(C.27), (A.3)+(B.2.11)+(C.28), (A.3)+(B.2.11)+(C.29), (A.3)+(B.2.11)+(C.30), (A.3)+(B.2.11)+(C.31), (A.3)+(B.2.11)+(C.32), (A.3)+(B.2.11)+(C.33), (A.3)+(B.2.11)+(C.34), (A.3)+(B.2.11)+(C.35), (A.3)+(B.2.11)+(C.36), (A.3)+(B.2.12)+(C.1), (A.3)+(B.2.12)+(C.2), (A.3)+(B.2.12)+(C.3), (A.3)+(B.2.12)+(C.4), (A.3)+(B.2.12)+(C.5), (A.3)+(B.2.12)+(C.6), (A.3)+(B.2.12)+(C.7), (A.3)+(B.2.12)+(C.8), (A.3)+(B.2.12)+(C.9), (A.3)+(B.2.12)+(C.10), (A.3)+(B.2.12)+(C.11), (A.3)+(B.2.12)+(C.12), (A.3)+(B.2.12)+(C.13), (A.3)+(B.2.12)+(C.14), (A.3)+(B.2.12)+(C.15), (A.3)+(B.2.12)+(C.16), (A.3)+(B.2.12)+(C.17), (A.3)+(B.2.12)+(C.18), (A.3)+(B.2.12)+(C.19), (A.3)+(B.2.12)+(C.20), (A.3)+(B.2.12)+(C.21), (A.3)+(B.2.12)+(C.22), (A.3)+(B.2.12)+(C.23), (A.3)+(B.2.12)+(C.24), (A.3)+(B.2.12)+(C.25), (A.3)+(B.2.12)+(C.26), (A.3)+(B.2.12)+(C.27), (A.3)+(B.2.12)+(C.28), (A.3)+(B.2.12)+(C.29), (A.3)+(B.2.12)+(C.30), (A.3)+(B.2.12)+(C.31), (A.3)+(B.2.12)+(C.32), (A.3)+(B.2.12)+(C.33), (A.3)+(B.2.12)+(C.34), (A.3)+(B.2.12)+(C.35), (A.3)+(B.2.12)+(C.36).

Out of the first group the following compositions are also even further preferred:

(A.3)+(B.1)+(C.9), (A.3)+(B.1)+(C.25), (A.3)+(B.1)+(C.28), (A.3)+(B.1)+(C.4), (A.3)+(B.1)+(C.24), (A.3)+(B.2)+(C.9), (A.3)+(B.2)+(C.25), (A.3)+(B.2)+(C.28), (A.3)+(B.2)+(C.4), (A.3)+(B.2)+(C.24), (A.3)+(B.3)+(C.9), (A.3)+(B.3)+(C.25), (A.3)+(B.3)+(C.28), (A.3)+(B.3)+(C.4), (A.3)+(B.3)+(C.24), (A.3)+(B.4)+(C.9), (A.3)+(B.4)+(C.25), (A.3)+(B.4)+(C.28), (A.3)+(B.4)+(C.4), (A.3)+(B.4)+(C.24), (A.3)+(B.5)+(C.9), (A.3)+(B.5)+(C.25), (A.3)+(B.5)+(C.28), (A.3)+(B.5)+(C.4), (A.3)+(B.5)+(C.24), (A.3)+(B.6)+(C.9), (A.3)+(B.6)+(C.25), (A.3)+(B.6)+(C.28), (A.3)+(B.6)+(C.4), (A.3)+(B.6)+(C.24), (A.3)+(B.7)+(C.9), (A.3)+(B.7)+(C.25), (A.3)+(B.7)+(C.28), (A.3)+(B.7)+(C.4), (A.3)+(B.7)+(C.24), (A.3)+(B.8)+(C.9), (A.3)+(B.8)+(C.25), (A.3)+(B.8)+(C.28), (A.3)+(B.8)+(C.4), (A.3)+(B.8)+(C.24), (A.3)+(B.9)+(C.9), (A.3)+(B.9)+(C.25), (A.3)+(B.9)+(C.28), (A.3)+(B.9)+(C.4), (A.3)+(B.9)+(C.24), (A.3)+(B.10)+(C.9), (A.3)+(B.10)+(C.25), (A.3)+(B.10)+(C.28), (A.3)+(B.10)+(C.4), (A.3)+(B.10)+(C.24), (A.3)+(B.11)+(C.9), (A.3)+(B.11)+(C.25), (A.3)+(B.11)+(C.28), (A.3)+(B.11)+(C.4), (A.3)+(B.11)+(C.24), (A.3)+(B.12)+(C.9), (A.3)+(B.12)+(C.25), (A.3)+(B.12)+(C.28), (A.3)+(B.12)+(C.4), (A.3)+(B.12)+(C.24), (A.3)+(B.13)+(C.9), (A.3)+(B.13)+(C.25), (A.3)+(B.13)+(C.28), (A.3)+(B.13)+(C.4), (A.3)+(B.13)+(C.24), (A.3)+(B.14)+(C.9), (A.3)+(B.14)+(C.25), (A.3)+(B.14)+(C.28), (A.3)+(B.14)+(C.4), (A.3)+(B.14)+(C.24), (A.3)+(B.15)+(C.9), (A.3)+(B.15)+(C.25), (A.3)+(B.15)+(C.28), (A.3)+(B.15)+(C.4), (A.3)+(B.15)+(C.24), (A.3)+(B.16)+(C.9), (A.3)+(B.16)+(C.25), (A.3)+(B.16)+(C.28), (A.3)+(B.16)+(C.4), (A.3)+(B.16)+(C.24).

Most preference is given to the following compositions:

(A.3)+(B.1)+(C.9), (A.3)+(B.1)+(C.25), (A.3)+(B.1)+(C.28), (A.3)+(B.1)+(C.4), (A.3)+(B.1)+(C.24), (A.3)+(B.4)+(C.9), (A.3)+(B.4)+(C.25), (A.3)+(B.4)+(C.28), (A.3)+(B.4)+(C.4), (A.3)+(B.4)+(C.24), (A.3)+(B.5)+(C.9), (A.3)+(B.5)+(C.25), (A.3)+(B.5)+(C.28), (A.3)+(B.5)+(C.4), (A.3)+(B.5)+(C.24), (A.3)+(B.7)+(C.9), (A.3)+(B.7)+(C.25), (A.3)+(B.7)+(C.28), (A.3)+(B.7)+(C.4), (A.3)+(B.7)+(C.24), (A.3)+(B.8)+(C.9), (A.3)+(B.8)+(C.25), (A.3)+(B.8)+(C.28), (A.3)+(B.8)+(C.4), (A.3)+(B.8)+(C.24), (A.3)+(B.10)+(C.9), (A.3)+(B.10)+(C.25), (A.3)+(B.10)+(C.28), (A.3)+(B.10)+(C.4), (A.3)+(B.1)+(C.24), (A.3)+(B.2.11)+(C.9), (A.3)+(B.2.11)+(C.25), (A.3)+(B.2.11)+(C.28), (A.3)+(B.11)+(C.4), (A.3)+(B.11)+(C.24), (A.3)+(B.12)+(C.9), (A.3)+(B.12)+(C.25), (A.3)+(B.12)+(C.28), (A.3)+(B.12)+(C.4), (A.3)+(B.12)+(C.24).

The following compositions (A.3)+(B.4)+(C.9), (A.3)+(B.10)+(C.9), (A.3)+(B.4)+(C.25) and

(A.3)+(B.10)+(C.25), are mostly preferred.

(A.4)+(B.1)+(C.1), (A.4)+(B.1)+(C.2), (A.4)+(B.1)+(C.3), (A.4)+(B.l)+(C.4), (A.4)+(B.1)+(C.5), (A.4)+(B.1)+(C.6), (A.4)+(B.1)+(C.7), (A.4)+(B.1)+(C.8), (A.4)+(B.1)+(C.9), (A.4)+(B.1)+(C.10), (A.4)+(B.1)+(C.11), (A.4)+(B.1)+(C.12), (A.4)+(B.1)+(C.13), (A.4)+(B.1)+(C.14), (A.4)+(B.1)+(C.15), (A.4)+(B.1)+(C.16), (A.4)+(B.1)+(C.17), (A.4)+(B.1)+(C.18), (A.4)+(B.1)+(C.19), (A.4)+(B.1)+(C.20), (A.4)+(B.1)+(C.21), (A.4)+(B.1)+(C.22), (A.4)+(B.1)+(C.23), (A.4)+(B.1)+(C.24), (A.4)+(B.1)+(C.25), (A.4)+(B.1)+(C.26), (A.4)+(B.1)+(C.27), (A.4)+(B.1)+(C.28), (A.4)+(B.1)+(C.29), (A.4)+(B.1)+(C.30), (A.4)+(B.1)+(C.31), (A.4)+(B.1)+(C.32), (A.4)+(B.1)+(C.33), (A.4)+(B.1)+(C.34), (A.4)+(B.1)+(C.35), (A.4)+(B.1)+(C.36), (A.4)+(B.2)+(C.1), (A.4)+(B.2)+(C.2), (A.4)+(B.2)+(C.3), (A.4)+(B.2)+(C.4), (A.4)+(B.2)+(C.5), (A.4)+(B.2)+(C.6), (A.4)+(B.2)+(C.7), (A.4)+(B.2)+(C.8), (A.4)+(B.2)+(C.9), (A.4)+(B.2)+(C.10), (A.4)+(B.2)+(C.11), (A.4)+(B.2)+(C.12), (A.4)+(B.2)+(C.13), (A.4)+(B.2)+(C.14), (A.4)+(B.2)+(C.15), (A.4)+(B.2)+(C.16), (A.4)+(B.2)+(C.17), (A.4)+(B.2)+(C.18), (A.4)+(B.2)+(C.19), (A.4)+(B.2)+(C.20), (A.4)+(B.2)+(C.21), (A.4)+(B.2)+(C.22), (A.4)+(B.2)+(C.23), (A.4)+(B.2)+(C.24), (A.4)+(B.2)+(C.25), (A.4)+(B.2)+(C.26), (A.4)+(B.2)+(C.27), (A.4)+(B.2)+(C.28), (A.4)+(B.2)+(C.29), (A.4)+(B.2)+(C.30), (A.4)+(B.2)+(C.31), (A.4)+(B.2)+(C.32), (A.4)+(B.2)+(C.33), (A.4)+(B.2)+(C.34), (A.4)+(B.2)+(C.35), (A.4)+(B.2)+(C.36),), (A.4)+(B.3)+(C.1), (A.4)+(B.3)+(C.2), (A.4)+(B.3)+(C.3), (A.4)+(B.3)+(C.4), (A.4)+(B.3)+(C.5), (A.4)+(B.3)+(C.6), (A.4)+(B.3)+(C.7), (A.4)+(B.3)+(C.8), (A.4)+(B.3)+(C.9), (A.4)+(B.3)+(C.10), (A.4)+(B.3)+(C.ll), (A.4)+(B.3)+(C.12), (A.4)+(B.3)+(C.13), (A.4)+(B.3)+(C.14), (A.4)+(B.3)+(C.15), (A.4)+(B.3)+(C.16), (A.4)+(B.3)+(C.17), (A.4)+(B.3)+(C.18), (A.4)+(B.3)+(C.19), (A.4)+(B.3)+(C.20), (A.4)+(B.3)+(C.21), (A.4)+(B.3)+(C.22), (A.4)+(B.3)+(C.23), (A.4)+(B.3)+(C.24), (A.4)+(B.3)+(C.25), (A.4)+(B.3)+(C.26), (A.4)+(B.3)+(C.27), (A.4)+(B.3)+(C.28), (A.4)+(B.3)+(C.29), (A.4)+(B.3)+(C.30), (A.4)+(B.3)+(C.31), (A.4)+(B.3)+(C.32), (A.4)+(B.3)+(C.33), (A.4)+(B.3)+(C.34), (A.4)+(B.3)+(C.35), (A.4)+(B.3)+(C.36), (A.4)+(B.4)+(C.1), (A.4)+(B.4)+(C.2), (A.4)+(B.4)+(C.3), (A.4)+(B.4)+(C.4), (A.4)+(B.4)+(C.5), (A.4)+(B.4)+(C.6), (A.4)+(B.4)+(C.7), (A.4)+(B.4)+(C.8), (A.4)+(B.4)+(C.9), (A.4)+(B.4)+(C.10), (A.4)+(B.4)+(C.ll), (A.4)+(B.4)+(C.12), (A.4)+(B.4)+(C.13), (A.4)+(B.4)+(C.14), (A.4)+(B.4)+(C.15), (A.4)+(B.4)+(C.16), (A.4)+(B.4)+(C.17), (A.4)+(B.4)+(C.18), (A.4)+(B.4)+(C.19), (A.4)+(B.4)+(C.20), (A.4)+(B.4)+(C.21), (A.4)+(B.4)+(C.22), (A.4)+(B.4)+(C.23), (A.4)+(B.4)+(C.24), (A.4)+(B.4)+(C.25), (A.4)+(B.4)+(C.26), (A.4)+(B.4)+(C.27), (A.4)+(B.4)+(C.28), (A.4)+(B.4)+(C.29), (A.4)+(B.4)+(C.30), (A.4)+(B.4)+(C.31), (A.4)+(B.4)+(C.32), (A.4)+(B.4)+(C.33), (A.4)+(B.4)+(C.34), (A.4)+(B.4)+(C.35), (A.4)+(B.4)+(C.36), (A.4)+(B.5)+(C.1), (A.4)+(B.5)+(C.2), (A.4)+(B.5)+(C.3), (A.4)+(B.5)+(C.4), (A.4)+(B.5)+(C.5), (A.4)+(B.5)+(C.6), (A.4)+(B.5)+(C.7), (A.4)+(B.5)+(C.8), (A.4)+(B.5)+(C.9), (A.4)+(B.5)+(C.10), (A.4)+(B.5)+(C.ll), (A.4)+(B.5)+(C.12), (A.4)+(B.5)+(C.13), (A.4)+(B.5)+(C.14), (A.4)+(B.5)+(C.15), (A.4)+(B.5)+(C.16), (A.4)+(B.5)+(C.17), (A.4)+(B.5)+(C.18), (A.4)+(B.5)+(C.19), (A.4)+(B.5)+(C.20), (A.4)+(B.5)+(C.21), (A.4)+(B.5)+(C.22), (A.4)+(B.5)+(C.23), (A.4)+(B.5)+(C.24), (A.4)+(B.5)+(C.25), (A.4)+(B.5)+(C.26), (A.4)+(B.5)+(C.27), (A.4)+(B.5)+(C.28), (A.4)+(B.5)+(C.29), (A.4)+(B.5)+(C.30), (A.4)+(B.5)+(C.31), (A.4)+(B.5)+(C.32), (A.4)+(B.5)+(C.33), (A.4)+(B.5)+(C.34), (A.4)+(B.5)+(C.35), (A.4)+(B.5)+(C.36), (A.4)+(B.6)+(C.1), (A.4)+(B.6)+(C.2), (A.4)+(B.6)+(C.3), (A.4)+(B.6)+(C.4), (A.4)+(B.6)+(C.5), (A.4)+(B.6)+(C.6), (A.4)+(B.6)+(C.7), (A.4)+(B.6)+(C.8), (A.4)+(B.6)+(C.9), (A.4)+(B.6)+(C.10), (A.4)+(B.6)+(C.11), (A.4)+(B.6)+(C.12), (A.4)+(B.6)+(C.13), (A.4)+(B.6)+(C.14), (A.4)+(B.6)+(C.15), (A.4)+(B.6)+(C.16), (A.4)+(B.6)+(C.17), (A.4)+(B.6)+(C.18), (A.4)+(B.6)+(C.19), (A.4)+(B.6)+(C.20), (A.4)+(B.6)+(C.21), (A.4)+(B.6)+(C.22), (A.4)+(B.6)+(C.23), (A.4)+(B.6)+(C.24), (A.4)+(B.6)+(C.25), (A.4)+(B.6)+(C.26), (A.4)+(B.6)+(C.27), (A.4)+(B.6)+(C.28), (A.4)+(B.6)+(C.29), (A.4)+(B.6)+(C.30), (A.4)+(B.6)+(C.31), (A.4)+(B.6)+(C.32), (A.4)+(B.6)+(C.33), (A.4)+(B.6)+(C.34), (A.4)+(B.6)+(C.35), (A.4)+(B.6)+(C.36), (A.4)+(B.7)+(C.1), (A.4)+(B.7)+(C.2), (A.4)+(B.7)+(C.3), (A.4)+(B.7)+(C.4), (A.4)+(B.7)+(C.5), (A.4)+(B.7)+(C.6), (A.4)+(B.7)+(C.7), (A.4)+(B.7)+(C.8), (A.4)+(B.7)+(C.9), (A.4)+(B.7)+(C.10), (A.4)+(B.7)+(C.11), (A.4)+(B.7)+(C.12), (A.4)+(B.7)+(C.13), (A.4)+(B.7)+(C.14), (A.4)+(B.7)+(C.15), (A.4)+(B.7)+(C.16), (A.4)+(B.7)+(C.17), (A.4)+(B.7)+(C.18), (A.4)+(B.7)+(C.19), (A.4)+(B.7)+(C.20), (A.4)+(B.7)+(C.21), (A.4)+(B.7)+(C.22), (A.4)+(B.7)+(C.23), (A.4)+(B.7)+(C.24), (A.4)+(B.7)+(C.25), (A.4)+(B.7)+(C.26), (A.4)+(B.7)+(C.27), (A.4)+(B.7)+(C.28), (A.4)+(B.7)+(C.29), (A.4)+(B.7)+(C.30), (A.4)+(B.7)+(C.31), (A.4)+(B.7)+(C.32), (A.4)+(B.7)+(C.33), (A.4)+(B.7)+(C.34), (A.4)+(B.7)+(C.35), (A.4)+(B.7)+(C.36), (A.4)+(B.8)+(C.1), (A.4)+(B.8)+(C.2), (A.4)+(B.8)+(C.3), (A.4)+(B.8)+(C.4), (A.4)+(B.8)+(C.5), (A.4)+(B.8)+(C.6), (A.4)+(B.8)+(C.7), (A.4)+(B.8)+(C.8), (A.4)+(B.8)+(C.9), (A.4)+(B.8)+(C.10), (A.4)+(B.8)+(C.11), (A.4)+(B.8)+(C.12), (A.4)+(B.8)+(C.13), (A.4)+(B.8)+(C.14), (A.4)+(B.8)+(C.15), (A.4)+(B.8)+(C.16), (A.4)+(B.8)+(C.17), (A.4)+(B.8)+(C.18), (A.4)+(B.8)+(C.19), (A.4)+(B.8)+(C.20), (A.4)+(B.8)+(C.21), (A.4)+(B.8)+(C.22), (A.4)+(B.8)+(C.23), (A.4)+(B.8)+(C.24), (A.4)+(B.8)+(C.25), (A.4)+(B.8)+(C.26), (A.4)+(B.8)+(C.27), (A.4)+(B.8)+(C.28), (A.4)+(B.8)+(C.29), (A.4)+(B.8)+(C.30), (A.4)+(B.8)+(C.31), (A.4)+(B.8)+(C.32), (A.4)+(B.8)+(C.33), (A.4)+(B.8)+(C.34), (A.4)+(B.8)+(C.35), (A.4)+(B.8)+(C.36), (A.4)+(B.9)+(C.1),

(A.4)+(B.9)+(C.2), (A.4)+(B.9)+(C.3), (A.4)+(B.9)+(C.4), (A.4)+(B.9)+(C.5), (A.4)+(B.9)+(C.6), (A.4)+(B.9)+(C.7), (A.4)+(B.9)+(C.8), (A.4)+(B.9)+(C.9), (A.4)+(B.9)+(C.10), (A.4)+(B.9)+(C.11), (A.4)+(B.9)+(C.12), (A.4)+(B.9)+(C.13), (A.4)+(B.9)+(C.14), (A.4)+(B.9)+(C.15), (A.4)+(B.9)+(C.16), (A.4)+(B.9)+(C.17), (A.4)+(B.9)+(C.18), (A.4)+(B.9)+(C.19), (A.4)+(B.9)+(C.20), (A.4)+(B.9)+(C.21), (A.4)+(B.9)+(C.22), (A.4)+(B.9)+(C.23), (A.4)+(B.9)+(C.24), (A.4)+(B.9)+(C.25), (A.4)+(B.9)+(C.26), (A.4)+(B.9)+(C.27), (A.4)+(B.9)+(C.28), (A.4)+(B.9)+(C.29), (A.4)+(B.9)+(C.30), (A.4)+(B.9)+(C.31), (A.4)+(B.9)+(C.32), (A.4)+(B.9)+(C.33), (A.4)+(B.9)+(C.34), (A.4)+(B.9)+(C.35), (A.4)+(B.9)+(C.36), (A.4)+(B.10)+(C.1), (A.4)+(B.10)+(C.2), (A.4)+(B.10)+(C.3), (A.4)+(B.10)+(C.4), (A.4)+(B.10)+(C.5), (A.4)+(B.10)+(C.6), (A.4)+(B.10)+(C.7), (A.4)+(B.10)+(C.8), (A.4)+(B.10)+(C.9), (A.4)+(B.10)+(C.10), (A.4)+(B.10)+(C.11), (A.4)+(B.10)+(C.12), (A.4)+(B.10)+(C.13), (A.4)+(B.10)+(C.14), (A.4)+(B.10)+(C.15), (A.4)+(B.10)+(C.16), (A.4)+(B.10)+(C.17), (A.4)+(B.10)+(C.18), (A.4)+(B.10)+(C.19), (A.4)+(B.10)+(C.20), (A.4)+(B.10)+(C.21), (A.4)+(B.10)+(C.22), (A.4)+(B.10)+(C.23), (A.4)+(B.10)+(C.24), (A.4)+(B.10)+(C.25), (A.4)+(B.10)+(C.26), (A.4)+(B.10)+(C.27), (A.4)+(B.10)+(C.28), (A.4)+(B.10)+(C.29), (A.4)+(B.10)+(C.30), (A.4)+(B.10)+(C.31), (A.4)+(B.10)+(C.32), (A.4)+(B.10)+(C.33), (A.4)+(B.10)+(C.34), (A.4)+(B.10)+(C.35), (A.4)+(B.10)+(C.36), (A.4)+(B.11)+(C.1), (A.4)+(B.11)+(C.2), (A.4)+(B.11)+(C.3), (A.4)+(B.11)+(C.4), (A.4)+(B.11)+(C.5), (A.4)+(B.11)+(C.6), (A.4)+(B.11)+(C.7), (A.4)+(B.11)+(C.8), (A.4)+(B.11)+(C.9), (A.4)+(B.11)+(C.10), (A.4)+(B.11)+(C.11), (A.4)+(B.11)+(C.12), (A.4)+(B.11)+(C.13), (A.4)+(B.11)+(C.14), (A.4)+(B.11)+(C.15), (A.4)+(B.11)+(C.16), (A.4)+(B.11)+(C.17), (A.4)+(B.11)+(C.18), (A.4)+(B.11)+(C.19), (A.4)+(B.11)+(C.20), (A.4)+(B.11)+(C.21), (A.4)+(B.11)+(C.22), (A.4)+(B.11)+(C.23), (A.4)+(B.11)+(C.24), (A.4)+(B.11)+(C.25), (A.4)+(B.11)+(C.26), (A.4)+(B.11)+(C.27), (A.4)+(B.11)+(C.28), (A.4)+(B.11)+(C.29), (A.4)+(B.11)+(C.30), (A.4)+(B.11)+(C.31), (A.4)+(B.11)+(C.32), (A.4)+(B.11)+(C.33), (A.4)+(B.11)+(C.34), (A.4)+(B.11)+(C.35), (A.4)+(B.11)+(C.36), (A.4)+(B.12)+(C.1), (A.4)+(B.12)+(C.2), (A.4)+(B.12)+(C.3), (A.4)+(B.12)+(C.4), (A.4)+(B.12)+(C.5), (A.4)+(B.12)+(C.6), (A.4)+(B.12)+(C.7), (A.4)+(B.12)+(C.8), (A.4)+(B.12)+(C.9), (A.4)+(B.12)+(C.10), (A.4)+(B.12)+(C.11), (A.4)+(B.12)+(C.12), (A.4)+(B.12)+(C.13), (A.4)+(B.12)+(C.14), (A.4)+(B.12)+(C.15), (A.4)+(B.12)+(C.16), (A.4)+(B.12)+(C.17), (A.4)+(B.12)+(C.18), (A.4)+(B.12)+(C.19), (A.4)+(B.12)+(C.20), (A.4)+(B.12)+(C.21), (A.4)+(B.12)+(C.22), (A.4)+(B.12)+(C.23), (A.4)+(B.12)+(C.24), (A.4)+(B.12)+(C.25), (A.4)+(B.12)+(C.26), (A.4)+(B.12)+(C.27), (A.4)+(B.12)+(C.28), (A.4)+(B.12)+(C.29), (A.4)+(B.12)+(C.30), (A.4)+(B.12)+(C.31), (A.4)+(B.12)+(C.32), (A.4)+(B.12)+(C.33), (A.4)+(B.12)+(C.34), (A.4)+(B.12)+(C.35), (A.4)+(B.12)+(C.36), (A.4)+(B.13)+(C.1), (A.4)+(B.13)+(C.2), (A.4)+(B.13)+(C.3), (A.4)+(B.13)+(C.4), (A.4)+(B.13)+(C.5), (A.4)+(B.13)+(C.6), (A.4)+(B.13)+(C.7), (A.4)+(B.13)+(C.8), (A.4)+(B.13)+(C.9), (A.4)+(B.13)+(C.10), (A.4)+(B.13)+(C.11), (A.4)+(B.13)+(C.12), (A.4)+(B.13)+(C.13), (A.4)+(B.13)+(C.14), (A.4)+(B.13)+(C.15), (A.4)+(B.13)+(C.16), (A.4)+(B.13)+(C.17), (A.4)+(B.13)+(C.18), (A.4)+(B.13)+(C.19), (A.4)+(B.13)+(C.20), (A.4)+(B.13)+(C.21), (A.4)+(B.13)+(C.22), (A.4)+(B.13)+(C.23), (A.4)+(B.13)+(C.24), (A.4)+(B.13)+(C.25), (A.4)+(B.13)+(C.26), (A.4)+(B.13)+(C.27), (A.4)+(B.13)+(C.28), (A.4)+(B.13)+(C.29), (A.4)+(B.13)+(C.30), (A.4)+(B.13)+(C.31), (A.4)+(B.13)+(C.32), (A.4)+(B.13)+(C.33), (A.4)+(B.13)+(C.34), (A.4)+(B.13)+(C.35), (A.4)+(B.13)+(C.36), (A.4)+(B.14)+(C.1), (A.4)+(B.14)+(C.2), (A.4)+(B.14)+(C.3), (A.4)+(B.14)+(C.4), (A.4)+(B.14)+(C.5), (A.4)+(B.14)+(C.6), (A.4)+(B.14)+(C.7), (A.4)+(B.14)+(C.8), (A.4)+(B.14)+(C.9), (A.4)+(B.14)+(C.10), (A.4)+(B.14)+(C.11), (A.4)+(B.14)+(C.12), (A.4)+(B.14)+(C.13), (A.4)+(B.14)+(C.14), (A.4)+(B.14)+(C.15), (A.4)+(B.14)+(C.16), (A.4)+(B.14)+(C.17), (A.4)+(B.14)+(C.18), (A.4)+(B.14)+(C.19), (A.4)+(B.14)+(C.20), (A.4)+(B.14)+(C.21), (A.4)+(B.14)+(C.22), (A.4)+(B.14)+(C.23), (A.4)+(B.14)+(C.24), (A.4)+(B.14)+(C.25), (A.4)+(B.14)+(C.26), (A.4)+(B.14)+(C.27), (A.4)+(B.14)+(C.28), (A.4)+(B.14)+(C.29), (A.4)+(B.14)+(C.30), (A.4)+(B.14)+(C.31), (A.4)+(B.14)+(C.32), (A.4)+(B.14)+(C.33), (A.4)+(B.14)+(C.34), (A.4)+(B.14)+(C.35), (A.4)+(B.14)+(C.36), (A.4)+(B.15)+(C.1), (A.4)+(B.15)+(C.2), (A.4)+(B.15)+(C.3), (A.4)+(B.15)+(C.4), (A.4)+(B.15)+(C.5), (A.4)+(B.15)+(C.6), (A.4)+(B.15)+(C.7), (A.4)+(B.15)+(C.8), (A.4)+(B.15)+(C.9), (A.4)+(B.15)+(C.10), (A.4)+(B.15)+(C.11), (A.4)+(B.15)+(C.12), (A.4)+(B.15)+(C.13), (A.4)+(B.15)+(C.14), (A.4)+(B.15)+(C.15), (A.4)+(B.15)+(C.16), (A.4)+(B.15)+(C.17), (A.4)+(B.15)+(C.18), (A.4)+(B.15)+(C.19), (A.4)+(B.15)+(C.20), (A.4)+(B.15)+(C.21), (A.4)+(B.15)+(C.22), (A.4)+(B.15)+(C.23), (A.4)+(B.15)+(C.24), (A.4)+(B.15)+(C.25), (A.4)+(B.15)+(C.26), (A.4)+(B.15)+(C.27), (A.4)+(B.15)+(C.28), (A.4)+(B.15)+(C.29), (A.4)+(B.15)+(C.30), (A.4)+(B.15)+(C.31), (A.4)+(B.15)+(C.32), (A.4)+(B.15)+(C.33), (A.4)+(B.15)+(C.34), (A.4)+(B.15)+(C.35), (A.4)+(B.15)+(C.36), (A.4)+(B.16)+(C.1), (A.4)+(B.16)+(C.2), (A.4)+(B.16)+(C.3), (A.4)+(B.16)+(C.4), (A.4)+(B.16)+(C.5), (A.4)+(B.16)+(C.6), (A.4)+(B.16)+(C.7), (A.4)+(B.16)+(C.8), (A.4)+(B.16)+(C.9), (A.4)+(B.16)+(C.10), (A.4)+(B.16)+(C.11), (A.4)+(B.16)+(C.12), (A.4)+(B.16)+(C.13), (A.4)+(B.16)+(C.14), (A.4)+(B.16)+(C.15), (A.4)+(B.16)+(C.16), (A.4)+(B.16)+(C.17), (A.4)+(B.16)+(C.18), (A.4)+(B.16)+(C.19), (A.4)+(B.16)+(C.20), (A.4)+(B.16)+(C.21), (A.4)+(B.16)+(C.22), (A.4)+(B.16)+(C.23), (A.4)+(B.16)+(C.24), (A.4)+(B.16)+(C.25), (A.4)+(B.16)+(C.26), (A.4)+(B.16)+(C.27), (A.4)+(B.16)+(C.28), (A.4)+(B.16)+(C.29), (A.4)+(B.16)+(C.30), (A.4)+(B.16)+(C.31), (A.4)+(B.16)+(C.32), (A.4)+(B.16)+(C.33), (A.4)+(B.16)+(C.34), (A.4)+(B.16)+(C.35), (A.4)+(B.16)+(C.36),

Out of these the following compositions are even further preferred:

(A.4)+(B.1)+(C.1), (A.4)+(B.1)+(C.2), (A.4)+(B.1)+(C.3), (A.4)+(B.1)+(C.4), (A.4)+(B.1)+(C.5), (A.4)+(B.1)+(C.6), (A.4)+(B.1)+(C.7), (A.4)+(B.1)+(C.8), (A.4)+(B.1)+(C.9), (A.4)+(B.1)+(C.10), (A.4)+(B.1)+(C.11), (A.4)+(B.1)+(C.12), (A.4)+(B.1)+(C.13), (A.4)+(B.1)+(C.14), (A.4)+(B.1)+(C.15), (A.4)+(B.1)+(C.16), (A.4)+(B.1)+(C.17), (A.4)+(B.1)+(C.18), (A.4)+(B.1)+(C.19), (A.4)+(B.1)+(C.20), (A.4)+(B.1)+(C.21), (A.4)+(B.1)+(C.22), (A.4)+(B.1)+(C.23), (A.4)+(B.1)+(C.24), (A.4)+(B.1)+(C.25), (A.4)+(B.1)+(C.26), (A.4)+(B.1)+(C.27), (A.4)+(B.1)+(C.28), (A.4)+(B.1)+(C.29), (A.4)+(B.1)+(C.30), (A.4)+(B.1)+(C.31), (A.4)+(B.1)+(C.32), (A.4)+(B.1)+(C.33), (A.4)+(B.1)+(C.34), (A.4)+(B.1)+(C.35), (A.4)+(B.1)+(C.36), (A.4)+(B.4)+(C.1), (A.4)+(B.4)+(C.2), (A.4)+(B.4)+(C.3), (A.4)+(B.4)+(C.4), (A.4)+(B.4)+(C.5), (A.4)+(B.4)+(C.6), (A.4)+(B.4)+(C.7), (A.4)+(B.4)+(C.8), (A.4)+(B.4)+(C.9), (A.4)+(B.4)+(C.10), (A.4)+(B.4)+(C.11), (A.4)+(B.4)+(C.12), (A.4)+(B.4)+(C.13), (A.4)+(B.4)+(C.14), (A.4)+(B.4)+(C.15), (A.4)+(B.4)+(C.16), (A.4)+(B.4)+(C.17), (A.4)+(B.4)+(C.18), (A.4)+(B.4)+(C.19), (A.4)+(B.4)+(C.20), (A.4)+(B.4)+(C.21), (A.4)+(B.4)+(C.22), (A.4)+(B.4)+(C.23), (A.4)+(B.4)+(C.24), (A.4)+(B.4)+(C.25), (A.4)+(B.4)+(C.26), (A.4)+(B.4)+(C.27), (A.4)+(B.4)+(C.28), (A.4)+(B.4)+(C.29), (A.4)+(B.4)+(C.30), (A.4)+(B.4)+(C.31), (A.4)+(B.4)+(C.32), (A.4)+(B.4)+(C.33), (A.4)+(B.4)+(C.34), (A.4)+(B.4)+(C.35), (A.4)+(B.4)+(C.36), (A.4)+(B.5)+(C.1), (A.4)+(B.5)+(C.2), (A.4)+(B.5)+(C.3), (A.4)+(B.5)+(C.4), (A.4)+(B.5)+(C.5), (A.4)+(B.5)+(C.6), (A.4)+(B.5)+(C.7), (A.4)+(B.5)+(C.8), (A.4)+(B.5)+(C.9), (A.4)+(B.5)+(C.10), (A.4)+(B.5)+(C.11), (A.4)+(B.5)+(C.12), (A.4)+(B.5)+(C.13), (A.4)+(B.5)+(C.14), (A.4)+(B.5)+(C.15), (A.4)+(B.5)+(C.16), (A.4)+(B.5)+(C.17), (A.4)+(B.5)+(C.18), (A.4)+(B.5)+(C.19), (A.4)+(B.5)+(C.20), (A.4)+(B.5)+(C.21), (A.4)+(B.5)+(C.22), (A.4)+(B.5)+(C.23), (A.4)+(B.5)+(C.24), (A.4)+(B.5)+(C.25), (A.4)+(B.5)+(C.26), (A.4)+(B.5)+(C.27), (A.4)+(B.5)+(C.28), (A.4)+(B.5)+(C.29), (A.4)+(B.5)+(C.30), (A.4)+(B.5)+(C.31), (A.4)+(B.5)+(C.32), (A.4)+(B.5)+(C.33), (A.4)+(B.5)+(C.34), (A.4)+(B.5)+(C.35), (A.4)+(B.5)+(C.36), (A.4)+(B.7)+(C.1), (A.4)+(B.7)+(C.2), (A.4)+(B.7)+(C.3), (A.4)+(B.7)+(C.4), (A.4)+(B.7)+(C.5), (A.4)+(B.7)+(C.6), (A.4)+(B.7)+(C.7), (A.4)+(B.7)+(C.8), (A.4)+(B.7)+(C.9), (A.4)+(B.7)+(C.10), (A.4)+(B.7)+(C.11), (A.4)+(B.7)+(C.12), (A.4)+(B.7)+(C.13), (A.4)+(B.7)+(C.14), (A.4)+(B.7)+(C.15), (A.4)+(B.7)+(C.16), (A.4)+(B.7)+(C.17), (A.4)+(B.7)+(C.18), (A.4)+(B.7)+(C.19), (A.4)+(B.7)+(C.20), (A.4)+(B.7)+(C.21), (A.4)+(B.7)+(C.22), (A.4)+(B.7)+(C.23), (A.4)+(B.7)+(C.24), (A.4)+(B.7)+(C.25), (A.4)+(B.7)+(C.26), (A.4)+(B.7)+(C.27), (A.4)+(B.7)+(C.28), (A.4)+(B.7)+(C.29), (A.4)+(B.7)+(C.30), (A.4)+(B.7)+(C.31), (A.4)+(B.7)+(C.32), (A.4)+(B.7)+(C.33), (A.4)+(B.7)+(C.34), (A.4)+(B.7)+(C.35), (A.4)+(B.7)+(C.36), (A.4)+(B.8)+(C.1), (A.4)+(B.8)+(C.2), (A.4)+(B.8)+(C.3), (A.4)+(B.8)+(C.4), (A.4)+(B.8)+(C.5), (A.4)+(B.8)+(C.6), (A.4)+(B.8)+(C.7), (A.4)+(B.8)+(C.8), (A.4)+(B.8)+(C.9), (A.4)+(B.8)+(C.10), (A.4)+(B.8)+(C.11), (A.4)+(B.8)+(C.12), (A.4)+(B.8)+(C.13), (A.4)+(B.8)+(C.14), (A.4)+(B.8)+(C.15), (A.4)+(B.8)+(C.16), (A.4)+(B.8)+(C.17), (A.4)+(B.8)+(C.18), (A.4)+(B.8)+(C.19), (A.4)+(B.8)+(C.20), (A.4)+(B.8)+(C.21), (A.4)+(B.8)+(C.22), (A.4)+(B.8)+(C.23), (A.4)+(B.8)+(C.24), (A.4)+(B.8)+(C.25), (A.4)+(B.8)+(C.26), (A.4)+(B.8)+(C.27), (A.4)+(B.8)+(C.28), (A.4)+(B.8)+(C.29), (A.4)+(B.8)+(C.30), (A.4)+(B.8)+(C.31), (A.4)+(B.8)+(C.32), (A.4)+(B.8)+(C.33), (A.4)+(B.8)+(C.34), (A.4)+(B.8)+(C.35), (A.4)+(B.8)+(C.36), (A.4)+(B.2.10)+(C.1), (A.4)+(B.2.10)+(C.2), (A.4)+(B.2.10)+(C.3), (A.4)+(B.2.10)+(C.4), (A.4)+(B.2.10)+(C.5), (A.4)+(B.2.10)+(C.6), (A.4)+(B.2.10)+(C.7), (A.4)+(B.2.10)+(C.8), (A.4)+(B.2.10)+(C.9), (A.4)+(B.2.10)+(C.10), (A.4)+(B.2.10)+(C.11), (A.4)+(B.2.10)+(C.12), (A.4)+(B.2.10)+(C.13), (A.4)+(B.2.10)+(C.14), (A.4)+(B.2.10)+(C.15), (A.4)+(B.2.10)+(C.16), (A.4)+(B.2.10)+(C.17), (A.4)+(B.2.10)+(C.18), (A.4)+(B.2.10)+(C.19), (A.4)+(B.2.10)+(C.20), (A.4)+(B.2.10)+(C.21), (A.4)+(B.2.10)+(C.22), (A.4)+(B.2.10)+(C.23), (A.4)+(B.2.10)+(C.24), (A.4)+(B.2.10)+(C.25), (A.4)+(B.2.10)+(C.26), (A.4)+(B.2.10)+(C.27), (A.4)+(B.2.10)+(C.28), (A.4)+(B.2.10)+(C.29), (A.4)+(B.2.10)+(C.30), (A.4)+(B.2.10)+(C.31), (A.4)+(B.2.10)+(C.32), (A.4)+(B.2.10)+(C.33), (A.4)+(B.2.10)+(C.34), (A.4)+(B.2.10)+(C.35), (A.4)+(B.2.10)+(C.36), (A.4)+(B.2.11)+(C.1), (A.4)+(B.2.11)+(C.2), (A.4)+(B.2.11)+(C.3), (A.4)+(B.2.11)+(C.4), (A.4)+(B.2.11)+(C.5), (A.4)+(B.2.11)+(C.6), (A.4)+(B.2.11)+(C.7), (A.4)+(B.2.11)+(C.8), (A.4)+(B.2.11)+(C.9), (A.4)+(B.2.11)+(C.10), (A.4)+(B.2.11)+(C.11), (A.4)+(B.2.11)+(C.12), (A.4)+(B.2.11)+(C.13), (A.4)+(B.2.11)+(C.14), (A.4)+(B.2.11)+(C.15), (A.4)+(B.2.11)+(C.16), (A.4)+(B.2.11)+(C.17), (A.4)+(B.2.11)+(C.18), (A.4)+(B.2.11)+(C.19), (A.4)+(B.2.11)+(C.20), (A.4)+(B.2.11)+(C.21), (A.4)+(B.2.11)+(C.22), (A.4)+(B.2.11)+(C.23), (A.4)+(B.2.11)+(C.24), (A.4)+(B.2.11)+(C.25), (A.4)+(B.2.11)+(C.26), (A.4)+(B.2.11)+(C.27), (A.4)+(B.2.11)+(C.28), (A.4)+(B.2.11)+(C.29), (A.4)+(B.2.11)+(C.30), (A.4)+(B.2.11)+(C.31), (A.4)+(B.2.11)+(C.32), (A.4)+(B.2.11)+(C.33), (A.4)+(B.2.11)+(C.34), (A.4)+(B.2.11)+(C.35), (A.4)+(B.2.11)+(C.36), (A.4)+(B.2.12)+(C.1), (A.4)+(B.2.12)+(C.2), (A.4)+(B.2.12)+(C.3), (A.4)+(B.2.12)+(C.4), (A.4)+(B.2.12)+(C.5), (A.4)+(B.2.12)+(C.6), (A.4)+(B.2.12)+(C.7), (A.4)+(B.2.12)+(C.8), (A.4)+(B.2.12)+(C.9), (A.4)+(B.2.12)+(C.10), (A.4)+(B.2.12)+(C.11), (A.4)+(B.2.12)+(C.12), (A.4)+(B.2.12)+(C.13), (A.4)+(B.2.12)+(C.14), (A.4)+(B.2.12)+(C.15), (A.4)+(B.2.12)+(C.16), (A.4)+(B.2.12)+(C.17), (A.4)+(B.2.12)+(C.18), (A.4)+(B.2.12)+(C.19), (A.4)+(B.2.12)+(C.20),

(A.4)+(B.2.12)+(C.21), (A.4)+(B.2.12)+(C.22), (A.4)+(B.2.12)+(C.23), (A.4)+(B.2.12)+(C.24), (A.4)+(B.2.12)+(C.25), (A.4)+(B.2.12)+(C.26), (A.4)+(B.2.12)+(C.27), (A.4)+(B.2.12)+(C.28), (A.4)+(B.2.12)+(C.29), (A.4)+(B.2.12)+(C.30), (A.4)+(B.2.12)+(C.31), (A.4)+(B.2.12)+(C.32), (A.4)+(B.2.12)+(C.33), (A.4)+(B.2.12)+(C.34), (A.4)+(B.2.12)+(C.35), (A.4)+(B.2.12)+(C.36).

Out of the first group the following compositions are also even further preferred:

(A.4)+(B.1)+(C.9), (A.4)+(B.1)+(C.25), (A.4)+(B.1)+(C.28), (A.4)+(B.1)+(C.4), (A.4)+(B.1)+(C.24), (A.4)+(B.2)+(C.9), (A.4)+(B.2)+(C.25), (A.4)+(B.2)+(C.28), (A.4)+(B.2)+(C.4), (A.4)+(B.2)+(C.24), (A.4)+(B.3)+(C.9), (A.4)+(B.3)+(C.25), (A.4)+(B.3)+(C.28), (A.4)+(B.3)+(C.4), (A.4)+(B.3)+(C.24), (A.4)+(B.4)+(C.9), (A.4)+(B.4)+(C.25), (A.4)+(B.4)+(C.28), (A.4)+(B.4)+(C.4), (A.4)+(B.4)+(C.24), (A.4)+(B.5)+(C.9), (A.4)+(B.5)+(C.25), (A.4)+(B.5)+(C.28), (A.4)+(B.5)+(C.4), (A.4)+(B.5)+(C.24), (A.4)+(B.6)+(C.9), (A.4)+(B.6)+(C.25), (A.4)+(B.6)+(C.28), (A.4)+(B.6)+(C.4), (A.4)+(B.6)+(C.24), (A.4)+(B.7)+(C.9), (A.4)+(B.7)+(C.25), (A.4)+(B.7)+(C.28), (A.4)+(B.7)+(C.4), (A.4)+(B.7)+(C.24), (A.4)+(B.8)+(C.9), (A.4)+(B.8)+(C.25), (A.4)+(B.8)+(C.28), (A.4)+(B.8)+(C.4), (A.4)+(B.8)+(C.24), (A.4)+(B.9)+(C.9), (A.4)+(B.9)+(C.25), (A.4)+(B.9)+(C.28), (A.4)+(B.9)+(C.4), (A.4)+(B.9)+(C.24), (A.4)+(B.10)+(C.9), (A.4)+(B.10)+(C.25), (A.4)+(B.10)+(C.28), (A.4)+(B.10)+(C.4), (A.4)+(B.10)+(C.24), (A.4)+(B.11)+(C.9), (A.4)+(B.11)+(C.25), (A.4)+(B.11)+(C.28), (A.4)+(B.11)+(C.4), (A.4)+(B.11)+(C.24), (A.4)+(B.12)+(C.9), (A.4)+(B.12)+(C.25), (A.4)+(B.12)+(C.28), (A.4)+(B.12)+(C.4), (A.4)+(B.12)+(C.24), (A.4)+(B.13)+(C.9), (A.4)+(B.13)+(C.25), (A.4)+(B.13)+(C.28), (A.4)+(B.13)+(C.4), (A.4)+(B.13)+(C.24), (A.4)+(B.14)+(C.9), (A.4)+(B.14)+(C.25), (A.4)+(B.14)+(C.28), (A.4)+(B.14)+(C.4), (A.4)+(B.14)+(C.24), (A.4)+(B.15)+(C.9), (A.4)+(B.15)+(C.25), (A.4)+(B.15)+(C.28), (A.4)+(B.15)+(C.4), (A.4)+(B.15)+(C.24), (A.4)+(B.16)+(C.9), (A.4)+(B.16)+(C.25), (A.4)+(B.16)+(C.28), (A.4)+(B.16)+(C.4), (A.4)+(B.16)+(C.24)

Most preference is given to the following compositions:

(A.4)+(B.1)+(C.9), (A.4)+(B.1)+(C.25), (A.4)+(B.1)+(C.28), (A.4)+(B.1)+(C.4), (A.4)+(B.1)+(C.24), (A.4)+(B.4)+(C.9), (A.4)+(B.4)+(C.25), (A.4)+(B.4)+(C.28), (A.4)+(B.4)+(C.4), (A.4)+(B.4)+(C.24), (A.4)+(B.5)+(C.9), (A.4)+(B.5)+(C.25), (A.4)+(B.5)+(C.28), (A.4)+(B.5)+(C.4), (A.4)+(B.5)+(C.24), (A.4)+(B.7)+(C.9), (A.4)+(B.7)+(C.25), (A.4)+(B.7)+(C.28), (A.4)+(B.7)+(C.4), (A.4)+(B.7)+(C.24), (A.4)+(B.8)+(C.9), (A.4)+(B.8)+(C.25), (A.4)+(B.8)+(C.28), (A.4)+(B.8)+(C.4), (A.4)+(B.8)+(C.24), (A.4)+(B.10)+(C.9), (A.4)+(B.10)+(C.25), (A.4)+(B.10)+(C.28), (A.4)+(B.10)+(C.4), (A.4)+(B.1)+(C.24), (A.4)+(B.2.11)+(C.9), (A.4)+(B.2.11)+(C.25), (A.4)+(B.2.11)+(C.28), (A.4)+(B.11)+(C.4), (A.4)+(B.11)+(C.24), (A.4)+(B.12)+(C.9), (A.4)+(B.12)+(C.25), (A.4)+(B.12)+(C.28),(A.4)+(B.12)+(C.4),(A.4)+(B.12)+(C.24).

The following compositions (A.4)+(B.4)+(C.9), (A.4)+(B.10)+(C.9), (A.4)+(B.4)+(C.25) and (A.4)+(B.10)+(C.25), are mostly preferred.

Accordingly, an especially preferred embodiment of the present invention refers to compositions, wherein the at least one further SDH inhibitor is isopyrazam or N-[9-(Dichlormethylen)-1,2,3,4-tetrahydro-1,4-methanonaphthalen-5-yl]-3-(difluormethyl)-1-methyl-1H-pyrazol-4-carboxamid and wherein the triazole fungicide is prothioconazole or epoxiconazole.

The compositions comprising (A) N-[1-(2,4-dichlorophenyl)-1-methoxypropan-2-yl]-3-(difluoromethyl)-1-methyl-1H-pyrazole-4-carboxamide, (B) N-[9-(Dichlormethylen)-1,2,3,4-tetrahydro-1,4-methanonaphthalen-5-yl]-3-(difluormethyl)-1-methyl-1H-pyrazol-4-carboxamid or Isopyrazam and (C) a triazole fungicide according to the present invention may further comprise one or more additional fungicides from the group of succinate dehydrogenase (SDH) inhibitors as defined herein.

Furthermore the fungicidal compositions according to the present invention may comprise one or more additional fungicides which may be selected from the group consisting of:

(1) Inhibitors of the ergosterol biosynthesis, for example aldimorph, dodemorph, dodemorph acetate, fenarimol, fenhexamid, fenpropidin, fenpropimorph, flurprimidol, imazalil, imazalil sulfate, naftifine, nuarimol, oxpoconazole, pefurazoate, piperalin, prochloraz, pyributicarb, pyrifenox, spiroxamine, terbinafine, tridemorph, triflumizole, triforine, viniconazole,methyl 1-(2,2-dimethyl-2,3-dihydro-1H-inden-1-yl)-1H-imidazole-5-carboxylate, N'-{5-(difluoromethyl)-2-methyl-4-[3-(trimethylsilyl)propoxy]phenyl}-N-ethyl-N-methylimidoformamide, N-ethyl-N-methyl-N'-{2-methyl-5-(trifluoromethyl)-4-[3-(trimethylsilyl)propoxy]phenyl}imidoformamide and O-[1-(4-methoxyphenoxy)-3,3-dimethylbutan-2-yl] 1H-imidazole-1-carbothioate.

(2) inhibitors of the respiratory chain at complex I or II, for example carboxin, diflumetorim, fenfuram, flutolanil,

furmecyclox, mepronil, oxycarboxin, thifluzamide, 1-methyl-N-[2-(1,1,2,2-tetrafluoroethoxy)phenyl]-3-(trifluoromethyl)-1H-pyrazole-4-carboxamide, 5,8-difluoro-N-[2-(2-fluoro-4-{[4-(trifluoromethyl)pyridin-2-yl]oxy}phenyl)ethyl]quinazolin-4-amine

(3) inhibitors of the respiratory chain at complex III, for example ametoctradin, amisulbrom, azoxystrobin, cyazofamid, coumethoxystrobin, coumoxystrobin, dimoxystrobin, enestroburin, famoxadone, fenamidone, fenoxystrobin, fluoxastrobin, kresoxim-methyl, metominostrobin, orysastrobin, picoxystrobin, pyraclostrobin, pyrametostrobin, pyraoxystrobin, pyribencarb, triclopyricarb, trifloxystrobin, (2E)-2-(2- {[6-(3-chloro-2-methylphenoxy)-5-fluoropyrimidin-4-yl]oxy}phenyl)-2-(methoxyimino)-N-methylethanamide, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}imino)methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, (2E)-2-{2-[({[(2E,3E)-4-(2,6-dichlorophenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyricline-3-carboxamide, 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, methyl (2E)-2-{2-[({cyclopropyl[(4-methoxyphenyl)imino]methyl}sulfanyl)methyl]phenyl}-3-methoxyprop-2-enoate, N-(3-ethyl-3,5,5-trimethylcyclohexyl)-3-(formylamino)-2-hydroxybenzamide, 2-{2-[(2,5-dimethylphenoxy)methyl]phenyl}-2-methoxy-N-methylacetamide and (2R)-2-{2-[(2,5-dimethylphenoxy)methyl]phenyl}-2-methoxy-N-methylacetamide.

(4) Inhibitors of the mitosis and cell division, for example benomyl, carbendazim, chlorfenazole, diethofencarb, ethaboxam, fluopicolide, fuberidazole, pencycuron, thiabendazole, thiophanate-methyl, thiophanate, zoxamide, 5-chloro-7-(4-methylpiperidin-1-yl)-6-(2,4,6-trifluorophenyl)[1,2,4]triazolo[1,5-a]pyrimidine and 3-chloro-5-(6-chloropyridin-3-yl)-6-methyl-4-(2,4,6-trifluorophenyl)pyridazine.

(5) Compounds capable to have a multisite action, for example bordeaux mixture, captafol, captan, chlorothalonil, copper hydroxide, copper naphthenate, copper oxide, copper oxychloride, copper(2+) sulfate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulphur and sulphur preparations including calcium polysulphide, thiram, tolylfluanid, zineb and ziram.

(6) Compounds capable to induce a host defence, for example acibenzolar-S-methyl, isotianil, probenazole and tiadinil.

(7) Inhibitors of the amino acid and/or protein biosynthesis, for example andoprim, blasticidin-S, cyprodinil, kasugamycin, kasugamycin hydrochloride hydrate, mepanipyrim, pyrimethanil and 3-(5-fluoro-3,3,4,4-tetramethyl-3,4-dihydroisoquinolin-1-yl)quinoline.

(8) Inhibitors of the ATP production, for example fentin acetate, fentin chloride, fentin hydroxide and silthiofam.

(9) Inhibitors of the cell wall synthesis, for example benthiavalicarb, dimethomorph, flumorph, iprovalicarb, mandipropamid, polyoxins, polyoxorim, validamycin A and valifenalate.

(10) Inhibitors of the lipid and membrane synthesis, for example biphenyl, chloroneb, dicloran, edifenphos, etridiazole, iodocarb, iprobenfos, isoprothiolane, propamocarb, propamocarb hydrochloride, prothiocarb, pyrazophos, quintozene, tecnazene and tolclofos-methyl.

(11) Inhibitors of the melanine biosynthesis, for example carpropamid, diclocymet, fenoxanil, phthalide, pyroquilon, tricyclazole and 2,2,2-trifluoroethyl {3-methyl-1-[(4-methylbenzoyl)amino]butan-2-yl}carbamate.

(12) Inhibitors of the nucleic acid synthesis, for example benalaxyl, benalaxyl-M (kiralaxyl), bupirimate, clozylacon, dimethirimol, ethirimol, furalaxyl, hymexazol, metalaxyl, metalaxyl-M (mefenoxam), ofurace, oxadixyl and oxolinic acid.

(13) Inhibitors of the signal transduction, for example chlozolinate, fenpiclonil, fludioxonil, iprodione, procymidone, quinoxyfen and vinclozolin.

(14) Compounds capable to act as an uncoupler, for example binapacryl, dinocap, ferimzone, fluazinam and meptyldinocap.

(15) Further compounds, for example benthiazole, bethoxazin, capsimycin, carvone, chinomethionat, pyriofenone (chlazafenone), cufraneb, cyflufenamid, cymoxanil, cyprosulfamide, dazomet, debacarb, dichlorophen, diclomezine, difenzoquat, difenzoquat methylsulphate, diphenylamine, ecomate, fenpyrazamine, flumetover, fluoroimide, flusulfamide, flutianil, fosetyl-aluminium, fosetyl-calcium, fosetyl-sodium, hexachlorobenzene, irumamycin, methasulfocarb, methyl isothiocyanate, metrafenone, mildiomycin, natamycin, nickel dimethyldithiocarbamate, nitrothal-isopropyl, octhilinone, oxamocarb, oxyfenthiin, pentachlorophenol and salts, phenothrin, phosphorous acid and its salts, propamocarbfosetylate, propanosine-sodium, proquinazid, pyrimorph, (2E)-3-(4-tert-butylphenyl)-3-(2-chloropyridin-4-yl)-1-(morpholin-4-yl)prop-2-en-1-one, (2Z)-3-(4-tert-butylphenyl)-3-(2-chloropyridin-4-yl)-1-(morpholin-4-yl)prop-2-en-1-one, pyrrolnitrine, tebufloquin, tecloftalam, tolnifanide, triazoxide, trichlamide, zarilamid, (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, 1-(4-{4-[5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, 1-(4-methoxyphenoxy)-3,3-dimethylbutan-2-yl 1H-imidazole-1-carboxylate, 2,3,5,6-tetrachloro-4-(methylsulfonyl)pyridine, 2,3-dibutyl-6-chlorothieno[2,3-d]pyrimidin-4(3H)-one, 2,6-dimethyl-1H,5H-[1,4]dithiino[2,3-c:5,6-c']dipyrrole-1,3,5,7(2H,6H)-tetrone, 2-[5-methyl-3-(trifluoromethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanone, 2-[5-methyl-3-(trifluoromethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanone, 2-[5-methyl-3-(trifluoromethyl)-1H-pyrazol-1-yl]-1-{4-[4-(5-phenyl-4,5-dihydro-1,2-oxazol-3-yl)-1,3-thiazol-2-yl]piperidin-1-yl}ethanone, 2-butoxy-6-iodo-3-propyl-4H-chromen-4-one, 2-chloro-5-[2-chloro-1-(2,6-difluoro-4-methoxyphenyl)-4-methyl-1H-imidazol-5-yl]pyridine, 2-phenylphenol and salts, 3-(4,4,5-trifluoro-3,3-dimethyl-3,4-dihydroisoquinolin-1-yl)quinoline, 3,4,5-trichloropyridine-2,6-dicarbonitrile, 3-[5-(4-chlorophenyl)-2,3-dimethyl-1,2-oxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, 5-amino-1,3,4-thiadiazole-2-thiol, 5-chloro-N'-phenyl-N'-(prop-2-yn-1-yl)thiophene-2-sulfonohydrazide, 5-fluoro-2-[(4-fluorobenzyl)oxy]pyrimidin-4-amine, 5-fluoro-2-[(4-methylbenzyl)oxy]pyrimidin-4-amine, 5-methyl-6-octyl[1,2,4]triazolo[1,5-a]pyrimidin-7-amine, ethyl (2Z)-3-amino-2-cyano-3-phenylprop-2-enoate,N'-(4-{[3-(4-chlorobenzyl)-1,2,4-thiadiazol-5-yl]oxy}-2,5-dimethylphenyl)-N-ethyl-N-methylimidoformamide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanamide, N-[(5-bromo-3-chloropyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)ethyl]-2-fluoro-4-iodopyridine-3-carboxamide, N-{(E)-[(cyclopropylmethoxy)imino][6-(difluoromethoxy)-2,3-difluorophenyl]methyl}-2-phenylacetamide, N-{(Z)-[(cyclopropylmethoxy)imino][6-(difluoromethoxy)-2,3-difluorophenyl]methyl}-2-phenylacetamide, N'-{4-[(3-tert-butyl-4-cyano-1,2-thiazol-5-yl)oxy]-2-chloro-5-methylphenyl}-N-ethyl-N-methylimidoformamide, N-methyl-2-(1-{[5-methyl-3-(trifluoromethyl)-1H-pyrazo1-1-yl]acetyl}piperidin-4-yl)-N-(1,2,3,4-tetrahydronaphthalen-1-yl)-1,3-thiazole-4-carboxamide, N-methyl-2-(1-{[5-methyl-3-(trifluoromethyl)-1H-pyrazol-1-yl]acetyl}piperidin-4-yl)-N-[(1R)-1,2,3,4-tetrahydronaphthalen-1-yl]-1,3-thiazole-4-carboxamide, N-methyl-2-(1-{[5-methyl-3-(trifluoromethyl)-1H-pyrazol-1-yl]acetyl}piperidin-4-yl)-N-[(1S)-1,2,3,4-tetrahydronaphthalen-1-yl]-1,3-thiazole-4-carboxamide, pentyl {6-[({[(1-methyl-1H-tetrazol-5-yl)(phenyl)methylidene]amino}oxy)methyl]pyridin-2-yl}carbamate, phenazine-1-carboxylic acid, quinolin-8-ol, quinolin-8-ol sulfate (2:1) and tert-butyl {6-[({[(1-methyl-1H-tetrazol-5-yl)(phenyl)methylene]amino}oxy)methyl]pyridin-2-yl}carbamate.

(16) Further compounds, for example 1-methyl-3-(trifluoromethyl)-N-[2'-(trifluoromethyl)biphenyl-2-yl]-1H-pyrazole-4-carboxamide, N-(4'-chlorobiphenyl-2-yl)-3-(difluoromethyl)-1-methyl-1H-pyrazole-4-carboxamide, N-(2',4'-dichlorobiphenyl-2-yl)-3-(difluoromethyl)-1-methyl-1H-pyrazole-4-carboxamide, 3-(difluoromethyl)-1-methyl-N-[4'-(trifluoromethyl)biphenyl-2-yl]-1H-pyrazole-4-carboxamide, N-(2',5'-difluorobiphenyl-2-yl)-1-methyl-3-(trifluoromethyl)-1H-pyrazole-4-carboxamide, 3-(difluoromethyl)-1-methyl-N-[4'-(prop-1-yn-1-yl)biphenyl-2-yl]-1H-pyrazole-4-carboxamide, 5-fluoro-1,3-dimethyl-N-[4'-(prop-1-yn-1-yl)biphenyl-2-yl]-1H-pyrazole-4-carboxamide, 2-chloro-N-[4'-(prop-1-yn-1-yl)biphenyl-2-yl]pyridine-3-carboxamide, 3-(difluoromethyl)-N-[4'-(3,3-dimethylbut-1-yn-1-yl)biphenyl-2-yl]-1-methyl-1H-pyrazole-4-carboxamide, N-[4'-(3,3-dimethylbut-1-yn-1-yl)biphenyl-2-yl]-5-fluoro-1,3-dimethyl-1H-pyrazole-4-carboxamide, 3-(difluoromethyl)-N-(4'-ethynylbiphenyl-2-yl)-1-methyl-1H-pyrazole-4-carboxamide, N-(4'-ethynylbiphenyl-2-yl)-5-fluoro-1,3-dimethyl-1H-pyrazole-4-carboxamide, 2-chloro-N-(4'-ethynylbiphenyl-2-yl)pyridine-3-carboxamide, 2-chloro-N-[4'-(3,3-dimethylbut-1-yn-1-yl)biphenyl-2-yl]pyridine-3-carboxamide, 4-(difluoromethyl)-2-methyl-N-[4'-(trifluoromethyl)biphenyl-2-yl]-1,3-thiazole-5-carboxamide, 5-fluoro-N-[4'-(3-hydroxy-3-methylbut-1-yn-1-yl)biphenyl-2-yl]-1,3-dimethyl-1H-pyrazole-4-carboxamide, 2-chloro-N-[4'-(3-hydroxy-3-methylbut-1-yn-1-yl)biphenyl-2-yl]pyridine-3-carboxamide, 3-(difluoromethyl)-N-[4'-(3-methoxy-3-methylbut-1-yn-1-yl)biphenyl-2-yl]-1-methyl-1H-pyrazole-4-carboxamide, 5-fluoro-N-[4'-(3-methoxy-3-methylbut-1-yn-1-yl)biphenyl-2-yl]-1,3-dimethyl-1H-pyrazole-4-carboxamide, 2-chloro-N-[4'-(3-methoxy-3-methylbut-1-yn-1-yl)biphenyl-2-yl]pyridine-3-carboxamide, (5-bromo-2-methoxy-4-methylpyridin-3-yl)(2,3,4-trimethoxy-6-methylphenyl)methanone, N-[2-(4-{[3-(4-chlorophenyl)prop-2-yn-1-yl]oxy}-3-methoxyphenyl)ethyl]-N2-(methylsulfonyl)valinamide, 4-oxo-4-[(2-phenylethyl)amino]butanoic acid and but-3-yn-1-yl{6-[({[(Z)-(1-methyl-1H-tetrazol-5-yl)(phenyl)methylene]amino}oxy)methyl]pyridin-2-yl}carbamate.

All named combination partners of the classes (1) to (16), as well as the fungicidal composition ingredients (A), (B) and (C) of the present invention can, if their functional groups enable this, optionally form salts with suitable bases or acids.

In context with the present invention improving growth in crops is characterized by at least least one of the effects of the group comprising preventively and/or curatively controlling pathogenic fungi and/or nematodes, resistance management, and improving plant physiology effects.

Therein resistance management is defined as prevention and/or delay of the development of insensitivity of pathogenic fungi to the fungicidal composition as defined in this invention. Resistance management further refers to the prevention of the loss of a fungicide to agriculture through resistance and aims at prolonging the effectiveness of fungicides liable to encounter resistance problems and to limit crop losses in case resistance appears. Resistance management also refers to strategic measures to avoid or delay the development of resistance with the general goal to prolong the lifetime of a certain active ingredient. As key elements of an anti-resistance strategy may be mentioned:

- to limit the number of treatments per biochemical mode of action,
- to keep the approved application rates,
- to adapt positioning and to give preference to preventive application and avoid treatments under eradicant conditions as a precaution and/or
- to keep the intervals between treatments to avoid selection pressure resulting from under-application in the late stages of persistence of action.

Within the term "resistance", natural resistance is understood as a naturally occurring insensitivity of a pathogen to a group of active ingredients, e.g. fungicides. In contrast, in the case of acquired resistance a pathogen is sensitive to the active ingredient, e.g. a fungicide, before the latter is marketed and used and the selection pressure generated by the active ingredient (e.g. fungicide) reveals and selects a resistant population. According to the scientific definition "resistance" refers to a genetic change predating the active ingredient (e.g. fungicidal) treatment in the plot, which, in response to the selection pressure exerted by this treatment, brings about a reduction in the sensitivity of the pathogen (e.g. fungus) to this active ingredient (e.g. fungicide).

In context with the present invention the term "resistance" comprises natural resistance as well as acquired resistance as described herein and comprises laboratory resistance, which is detected in the laboratory even though the active ingredient (e.g. fungicide) is still effective in the field, as well as practical resistance in the field, which refers to a loss of efficacy observed in the fields and probably confirmed in the laboratory. Especially with respect to resistance against fungi "efficacy of a fungicide" relates to its capacity to inhibit a specific enzyme reaction and "resistance" relates to a loss of fungicidal efficacy, which means, the function concerned is no longer inhibited. In the field of resistance to fungicides, different types of resistance have been described and are comprised from the present invention: within "disruptive resistance" a single target mutation (originating in a single gene) is responsible for a sudden (and probably complete) loss of sensitivity to the fungicide, even if the amount applied is increased, and within "progressive resistance" a sensitivity shift with gradual changes occurs, wherein several mutations (originating in one or more genes) are involved and which results in a slow erosion of sensitivity and thus in a variable degree of resistance.

As key mechanisms for resistance are described:

- the target is modified at the site of action of the active ingredient (e.g. fungicide) and therefore the enzyme reaction involved is not inhibited,
- increased production of the target and therefore the enzyme reaction involved is no longer sufficiently inhibited,
- the active ingredient (e.g. fungicide) does not reach the target (metabolism, transport, penetration, elimination etc.),

- the cell sets up a system to offset the target activity of the fungicide.

Therein, as a primary cause of resistance the physical modification of the target at the active ingredient's (e.g. fungicide's) site of action is considered.
Accordingly, in context with the present invention the term "resistance management" means to prevent and/or delay the development of insensitivity of a pathogen (resistance) to an active ingredient or an active compound composition and thus to maintain the efficacy of such active ingredient or active compound composition against the pathogens to be treated.
In principle, well-known standard techniques such as e.g. pyrosequencing for analyzing DNA sequences can be used to detect and identify gene mutations and thus help to correlate such gene mutations to resistance. Thus, DNA analyzes can in principle be helpful in identifying (potentially) resistance relevant gene mutations. Such techniques are well known to a skilled person and widely practiced in the field of resistance management in crops.
Further, in context with the present invention plant physiology effects comprise the following:

Abiotic stress tolerance, comprising temperature tolerance, drought tolerance and recovery after drought stress, water use efficiency (correlating to reduced water consumption), flood tolerance, ozone stress and UV tolerance, tolerance towards chemicals like heavy metals, salts, pesticides (safener) etc..

Biotic stress tolerance, comprising increased fungal resistance and increased resistance against nematodes, viruses and bacteria. In context with the present invention, biotic stress tolerance preferably comprises increased fungal resistance and increased resistance against nematodes
Increased plant vigor, comprising plant health / plant quality and seed vigor, reduced stand failure, improved appearance, increased recovery, improved greening effect and improved photosynthetic efficiency.
Effects on plant hormones and/or functional enzymes.
Effects on growth regulators (promoters), comprising earlier germination, better emergence, more developed root system and/or improved root growth, increased ability of tillering, more productive tillers, earlier flowering, increased plant height and/or biomass, shorting of stems, improvements in shoot growth, number of kernels/ear, number of ears/$m^2$, number of stolons and/or number of flowers, enhanced harvest index, bigger leaves, less dead basal leaves, improved phyllotaxy, earlier maturation / earlier fruit finish, homogenous riping, increased duration of grain filling, better fruit finish, bigger fruit/vegetable size, sprouting resistance and reduced lodging.
Increased yield, referring to total biomass per hectare, yield per hectare, kernel/fruit weight, seed size and/or hectolitre weight as well as to increased product quality, comprising:

improved processability relating to size distribution (kernel, fruit, etc.), homogenous riping, grain moisture, better milling, better vinification, better brewing, increased juice yield, harvestability, digestibility, sedimentation value, falling number, pod stability, storage stability, improved fiber length/strength/uniformity, increase of milk and/or meet quality of silage fed animals, adaption to cooking and frying;

further comprising improved marketability relating to improved fruit/grain quality, size distribution (kernel, fruit, etc.), increased storage / shelf-life, firmness / softness, taste (aroma, texture, etc.), grade (size, shape, number of berries, etc.), number of berries/fruits per bunch, crispness, freshness, coverage with wax, frequency of physiological disorders, colour, etc.;

further comprising increased desired ingredients such as e.g. protein content, fatty acids, oil content, oil quality, aminoacid composition, sugar content, acid content (pH), sugar/acid ratio (Brix), polyphenols, starch content, nutritional quality, gluten content/index, energy content, taste, etc.;

and further comprising decreased undesired ingredients such as e.g. less mycotoxines, less aflatoxines, geosmin level, phenolic aromas, lacchase, polyphenol oxidases and peroxidases, nitrate content etc.

Sustainable agriculture, comprising nutrient use efficiency, especially nitrogen (N)-use efficiency, phosphours (P)-use efficiency, water use efficiency, improved transpiration, respiration and/or $CO_2$ assimilation rate, better nodulation, improved Ca-metabolism etc..
Delayed senescence, comprising improvement of plant physiology which is manifested, for example, in a longer grain filling phase, leading to higher yield, a longer duration of green leaf colouration of the plant and thus comprising colour (greening), water content, dryness etc.. Accordingly, in the context of the present invention, it has been found that the specific inventive application of the active compound combination makes it possible to prolong the green leaf area duration, which delays the maturation (senescence) of the plant. The main advantage to the farmer is a longer

grain filling phase leading to higher yield. There is also an advantage to the farmer on the basis of greater flexibility in the harvesting time.

Therein "sedimentation value" is a measure for protein quality and describes according to Zeleny (Zeleny value) the degree of sedimentation of flour suspended in a lactic acid solution during a standard time interval. This is taken as a measure of the baking quality. Swelling of the gluten fraction of flour in lactic acid solution affects the rate of sedimentation of a flour suspension. Both a higher gluten content and a better gluten quality give rise to slower sedimentation and higher Zeleny test values. The sedimentation value of flour depends on the wheat protein composition and is mostly correlated to the protein content, the wheat hardness, and the volume of pan and hearth loaves. A stronger correlation between loaf volume and Zeleny sedimentation volume compared to SDS sedimentation volume could be due to the protein content influencing both the volume and Zeleny value (Czech J. Food Sci. Vol. 21, No. 3: 91-96, 2000).

Further the "falling number" as mentioned herein is a measure for the baking quality of cereals, especially of wheat. The falling number test indicates that sprout damage may have occurred. It means that changes to the physical properties of the starch portion of the wheat kernel has already happened.

Therein, the falling number instrument analyzes viscosity by measuring the resistance of a flour and water paste to a falling plunger. The time (in seconds) for this to happen is known as the falling number. The falling number results are recorded as an index of enzyme activity in a wheat or flour sample and results are expressed in time as seconds. A high falling number (for example, above 300 seconds) indicates minimal enzyme activity and sound quality wheat or flour. A low falling number (for example, below 250 seconds) indicates substantial enzyme activity and sprout-damaged wheat or flour.

The term "more developed root system" / "improved root growth" refers to longer root system, deeper root growth, faster root growth, higher root dry/fresh weight, higher root volume, larger root surface area, bigger root diameter, higher root stability, more root branching, higher number of root hairs, and/or more root tips and can be measured by analyzing the root architecture with suitable methodologies and Image analysis programmes (e.g. WinRhizo).

The term "crop water use efficiency" refers technically to the mass of agriculture produce per unit water consumed and economically to the value of product(s) produced per unit water volume consumed and can e.g. be measured in terms of yield per ha, biomass of the plants, thousand-kernel mass, and the number of ears per m2.

The term "nitrogen-use efficiency" refers technically to the mass of agriculture produce per unit nitrogen consumed and economically to the value of product(s) produced per unit nitrogen consumed, reflecting uptake and utilization efficiency.

Improvement in greening / improved colour and improved photosynthetic efficiency as well as the delay of senescence can be measured with well-known techniques such as a HandyPea system (Hansatech). Fv/Fm is a parameter widely used to indicate the maximum quantum efficiency of photosystem II (PSII). This parameter is widely considered to be a selective indication of plant photosynthetic performance with healthy samples typically achieving a maximum Fv/Fm value of approx. 0.85. Values lower than this will be observed if a sample has been exposed to some type of biotic or abiotic stress factor which has reduced the capacity for photochemical quenching of energy within PSII. Fv/Fm is presented as a ratio of variable fluorescence (Fv) over the maximum fluorescence value (Fm). The Performance Index is essentially an indicator of sample vitality. (See e.g. Advanced Techniques in Soil Microbiology, 2007, 11, 319-341; Applied Soil Ecology, 2000, 15, 169-182.)

The improvement in greening / improved colour and improved photosynthetic efficiency as well as the delay of senescence can also be assessed by measurement of the net photosynthetic rate (Pn), measurement of the chlorophyll content, e.g. by the pigment extraction method of Ziegler and Ehle, measurement of the photochemical efficiency (Fv/Fm ratio), determination of shoot growth and final root and/or canopy biomass, determination of tiller density as well as of root mortality.

Within the context of the present invention preference is given to improving plant physiology effects which are selected from the group comprising: enhanced root growth / more developed root system, improved greening, improved water use efficiency (correlating to reduced water consumption), improved nutrient use efficiency, comprising especially improved nitrogen (N)-use efficiency, delayed senescence and enhanced yield.

Within the enhancement of yield preference is given as to an improvement in the sedimentation value and the falling number as well as to the improvement of the protein and sugar content - especially with plants selected from the group of cereals (preferably wheat).

Preferably the novel use of the fungicidal compositions of the present invention relates to a combined use of a) preventively and/or curatively controlling pathogenic fungi and/or nematodes, with or without resistance management, and b) at least one of enhanced root growth, improved greening, improved water use efficiency, delayed senescence and enhanced yield. From group b) enhancement of root system, water use efficiency and N-use efficiency is particularly preferred.

The combination ratio of the binary and/or ternary compositions according to the present invention is preferably to be chosen such that a synergistic composition is obtained.

In the binary fungicidal compositions according to the invention the compounds (A) and (B) are present in a

synergistically effective weight ratio of (A):(B) in a range of 100: 1 to 1:100, preferably in a weight ratio of 50:1 to 1:50, most preferably in a weight ratio of 20:1 to 1:20. Further ratios of (A):(B) which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2. For the binary fungicidal compositions an amount of (A) : (B) weight ratio of from 1 : 0.5 to 1 : 2, more preferably of from 1 : 1 is preferred.

In the ternary fungicidal compositions according to the invention the compounds (A) and (B) or the compounds (A) and (C) or the compounds (B) and (C) are present in a synergistically effective weight ratio of A:B or A:C or B:C in a range of 100:1 to 1:100, preferably in a weight ratio of 50:1 to 1:50, most preferably in a weight ratio of 20:1 to 1:20. Further ratios of A:B or A:C or B:C which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2. For the ternary compositions an amount of (A) : (B) : (C) weight ratio of from 1 : 0.5 : 1 to 1 : 1.5 : 3, more preferably of 1 : 1 : 2 is preferred.

The compositions and the fungicidal compositions of the present invention may further comprise at least one other additional component such as auxiliaries, solvents, carriers or supports, filler, surfactants or extenders, all being agriculturally acceptable.

According to the invention the term "support" or "carrier" is to be understood as meaning a natural or synthetic, organic or inorganic substance which is mixed or combined with the active compounds for better applicability, in particular for application to plants or plant parts or seeds. The support or carrier, which may be solid or liquid, is generally inert and should be suitable for use in agriculture. Suitable solid or liquid carriers / supports include for example ammonium salts and natural ground minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such supports or carriers. Solid supports / carriers suitable for granules are: for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks. Suitable liquefied gaseous extenders or carriers are liquids which are gaseous at ambient temperature and under atmospheric pressure, for example aerosol propellants, such as butane, propane, nitrogen and carbon dioxide. Tackifiers, such as carboxymethylcellulose and natural and synthetic polymers in the form of powders, granules and latices, such as gum arabic, polyvinyl alcohol, polyvinyl acetate, or else natural phospholipids, such as cephalins and lecithins and synthetic phospholipids can be used in the formulations. Other possible additives are mineral and vegetable oils and waxes, optionally modified. If the extender used is water, it is also possible for example, to use organic solvents as auxiliary solvents. Suitable liquid solvents are essentially: aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethyl sulphoxide, and also water.

In the present specification, the term "surfactant" comprises an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the above compounds containing sulphate, sulphonate and phosphate functions. The presence of at least one surfactant is generally essential when the active material and/or the inert support are water-insoluble and when the vector agent for the application is water. Preferably, surfactant content may be comprised between 5% and 40% by weight of the composition.

Additional components may also be included, e.g. protective colloids, adhesives, thickeners, thixotropic agents, penetration agents, stabilisers, sequestering agents. More generally, the active materials can be combined with any solid or liquid additive, which complies with the usual formulation techniques.

It is further possible to use colourants such as inorganic pigments, for example iron oxide, titanium oxide, Prussian blue, and organic dyes, such as alizarin dyes, azo dyes and metal phthalocyanine dyes, and trace nutrients, such as salts of iron, manganese, boron, copper, cobalt, molybdenum and zinc.

In general, the compositions according to the invention may contain from 0.05 to 99% (by weight) of active material, preferably 10 to 70% by weight.

Compositions according to the present invention can be used in various forms such as aerosol dispenser, capsule suspension, cold fogging concentrate, dustable powder, emulsifiable concentrate, emulsion oil in water, emulsion

water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder.

These compositions include not only compositions which are ready to be applied to the plant or seed to be treated by means of a suitable device, such as a spraying or dusting device, but also concentrated commercial compositions which must be diluted before they are applied to the crop.

The fungicidal compositions of the present invention can be used for improving growth in crops as defined herein. Thus, according to a further aspect of the present invention, there is provided a method for improving growth in crops according to the aforementioned definition, the method being characterised in that the fungicidal composition as hereinbefore defined is applied to the seed, the plant and/or to the fruit of the plant and/or to the soil in which the plant grows or in which it is supposed to grow.

A further aspect of the present invention relates to a method of treating plants, including transgenic plants, in need of better growth, increased harvest yields, a better developed root system, a larger leaf area, greener leaves and/or stronger shoots comprising applying to said plants the fungicidal compositions according to the present invention.

In the context of the present invention the term "plant" is to be understood as meaning all plants and plant populations, such as wanted and unwanted wild plants or crop plants (including naturally occurring crop plants). Crop plants can be plants which can be obtained by conventional breeding and optimization methods or by biotechnological and genetic engineering methods or combinations of these methods, including the transgenic plants and including plant cultivars which can or cannot be protected by plant variety protection rights. Parts of plants are to be understood as meaning all above-ground and below-ground parts and organs of the plants, such as shoot, leaf, flower and root, examples which may be mentioned being leaves, needles, stems, trunks, flowers, fruit bodies, fruits and seeds and also roots, tubers and rhizomes. Plant parts also include harvested material and vegetative and generative propagation material, for example seedlings or seedlings pricking out, plants pricking out, tubers, rhizomes, cuttings and seeds (including seeds of transgenic plants). Preference is given to the treatment of the plants and the above-ground and below-ground parts and organs of the plants, such as shoot, leaf, flower and root, examples which may be mentioned being leaves, needles, stems, trunks, flowers, and fruits, such as ears.

The following plants are considered to be particularly suitable target crops for applying the method according to the invention:

Alfafa,

Anacardiaceae sp. (mango);

beet, for example sugar beet and fodder beet;

cereals, for example wheat, barley, rye, oats, rice, maize, triticale and millet/sorghum;

citrus fruit, for example oranges, lemons, mandarins, grapefruits and tangerines;

cucurbits, for example pumpkin/squash, gherkins, calabashes, cucumbers and melons;

fibre plants, for example cotton, flax, hemp and jute, cannabis;

Latex plants;

Lauraceae sp. (e.g. avocado, cinnamon, camphor),

legumes, for example beans, lentils, peas and soybeans, common beans and broad beans;

Malvaceae sp. (e.g. okra, cocoa);

Manihoteae sp. (for instance Manihot esculenta, manioc),

oil crops, for example Brassica oil seeds such as Brassica napus (e.g. canola, rapeseed), Brassica rapa, B. juncea (e.g. (field) mustard) and Brassica carinata, Arecaceae sp. (e.g. oilpalm, coconut), mustard, poppies, Oleaceae sp.

(e.g. olive tree, olives), sunflowers, castor oil plants;

Papaveraceae (e.g. poppy),

pome fruit for example apples, pears and quince,

Ribesioidae sp., soft fruits for example strawberries, raspberries, blackberries, blueberries, red and black currant and gooseberry;

Rubiaceae sp. (for instance coffee)

Solanaceae sp. (e.g. tomatoes, potatoes, peppers, bell peppers, capsicum, aubergines, eggplant, tobacco),

Stevia rebaudiana;

stone fruit for example peaches, nectarines, cherries, plums, common plums, apricots;

Theobroma sp. (for instance Theobroma cacao: cocoa)

vegetables, for example spinach, lettuce, Asparagaceae (e.g. asparagus), Cruciferae sp. (e.g. white cabbage, red cabbage, broccoli, cauliflower, Brussels sprouts, pak choi, kohlrabi, radishes, horseradish, cress and chinese cabbage), onions, bell peppers, artichokes and chicory - including root chicory, endive or common chicory, leeks and onions; Umbelliferae sp. (e.g. carrots, parsley, celery and celeriac);

Vitis sp. (for instance Vitis vinifera: grape vine, raisins, table grapes)

Musaceae sp. (e.g. banana trees, bananas and plantations),

nuts of various botanical taxa such as peanuts, Juglandaceae sp.(Walnut, Persian Walnut (Juglans regia), Butternut (Juglans), Hickory, Shagbark Hickory, Pecan (Carya), Wingnut (Pterocarya)), Fagaceae sp. (Chestnut (Castanea), Chestnuts, including Chinese Chestnut, Malabar chestnut, Sweet Chestnut, Beech (Fagus), Oak (Quercus), Stone-oak, Tanoak (Lithocarpus)); Betulaceae sp. (Alder (Alnus), Birch (Betula), Hazel, Filbert (Corylus), Hornbeam), Leguminosae sp. (for instance peanuts, peas and beans beans - such as climbing beans and broad beans), Asteraceae sp. (for instance sunflower seed), Almond, Beech, Butternut, Brazil nut, Candlenut, Cashew, Colocynth, Cotton seed, Cucurbita ficifolia, Filbert, Indian Beech or Pongam Tree, Kola nut, Lotus seed, Macadamia, Mamoncillo, Maya nut, Mongongo, Oak acorns, Ogbono nut, Paradise nut, Pili nut, Pine nut, Pistacchio, Pumpkin seed, water Caltrop; soybeans (Glycine sp., Glycine max);

spices like Ajwain (Trachyspermum ammi), Allspice (Pimenta dioica), Alkanet (Anchusa arvensis), Amchur - mango powder (Mangifera), Angelica (Angelica archangelica), Anise (Pimpinella anisum), Aniseed myrtle (Syzygium anisatum), Annatto (Bixa orellana L.), Apple mint (Mentha suaveolens), Artemisia vulgaris/Mugwort, Asafoetida (Ferula assafoetida), Berberis, Banana, Basil (Ocimum basilicum), Bay leaves, Bistort (Persicaria bistorta"), Black cardamom, Black cumin, Blackcurrant, Black limes, Bladder wrack (Fucus vesiculosus), Blue Cohosh, Blue-leaved Mallee (Eucalyptus polybractea), Bog Labrador Tea (Rhododendron groenlandicum), Boldo (Peumus boldus), Bolivian Coriander (Porophyllum ruderale), Borage (Borago officinalis), Calamus, Calendula, Calumba (Jateorhiza calumba), Chamomile, Candle nut, Cannabis, Caper (Capparis spinosa), Caraway, Cardamom, Carob Pod, Cassia, Casuarina, Catnip, Cat's Claw, Catsear, Cayenne pepper, Celastrus Paniculatus - Herb., Celery salt, Celery seed, Centaury, Chervil (Anthriscus cerefolium), Chickweed, Chicory, Chile pepper, Chili powder, Cinchona, Chives (Allium schoenoprasum), Cicely (Myrrhis odorata), Cilantro (see Coriander) (Coriandrum sativum), Cinnamon (and Cassia), Cinnamon Myrtle (Backhousia myrtifolia), Clary, Cleavers, Clover, Cloves, Coffee, Coltsfoot, Comfrey, Common Rue, Condurango, Coptis, Coriander, Costmary (Tanacetum balsamita), Couchgrass, Cow Parsley (Anthriscus sylvestris), Cowslip, Cramp Bark (Viburnum opulus), Cress, Cuban Oregano (Plectranthus amboinicus), Cudweed, Cumin, Curry leaf (Murraya koenigii), Damiana (Turnera aphrodisiaca, T. diffusa), Dandelion (Taraxacum officinale), Demulcent, Devil's claw (Harpagophytum procumbens), Dill seed, Dill (Anethum graveolens), Dorrigo Pepper (Tasmannia stipitata), Echinacea -, Echinopanax Elatum, Edelweiss, Elderberry, Elderflower, Elecampane, Eleutherococcus senticosus, Emmenagogue, Epazote (Chenopodium ambrosioides), Ephedra -, Eryngium foetidum, Eucalyptus, Fennel (Foeniculum vulgare), Fenugreek, Feverfew, Figwort, Filé powder, Five-spice powder (Chinese), Fo-ti-tieng, Fumitory, Galangal, Garam masala, Garden cress, Garlic chives, Garlic, Ginger (Zingiber officinale), Ginkgo

biloba, Ginseng, Ginseng, Siberian (Eleutherococcus senticosus), Goat's Rue (Galega officinalis), Goada masala, Golden Rod, Golden Seal, Gotu Kola, Grains of paradise (Aframomum melegueta), Grains of Selim (Xylopia aethiopica), Grape seed extract, Green tea, Ground Ivy, Guaco, Gypsywort, Hawthorn (Crataegus sanguinea), Hawthorne Tree, Hemp, Herbes de Provence, Hibiscus, Holly, Holy Thistle, Hops, Horehound, Horseradish, Horsetail (Equisetum telmateia), Hyssop (Hyssopus officinalis), Jalap, Jasmine, Jiaogulan (Gynostemma pentaphyllum), Joe Pye weed (Gravelroot), John the Conqueror, Juniper, Kaffir Lime Leaves (Citrus hystrix, C. papedia), Kaala masala, Knotweed, Kokam, Labrador tea, Lady's Bedstraw, Lady's Mantle, Land cress, Lavender (Lavandula spp.), Ledum, Lemon Balm (Melissa Officinalis), Lemon basil, Lemongrass (Cymbopogon citratus, C. flexuosus, and other species), Lemon Ironbark (Eucalyptus staigeriana), Lemon mint, Lemon Myrtle (Backhousia citriodora), Lemon Thyme, Lemon verbena (Lippia citriodora), Licorice - adaptogen, Lime Flower, Limnophila aromatica, Lingzhi, Linseed, Liquorice, Long pepper, Lovage (Levisticum officinale), Luohanguo, Mace, Mahlab, Malabathrum, Manchurian Thorn Tree (Aralia manchurica)]], Mandrake, Marjoram (Origanum majorana), Marrubium vulgare, Marsh Labrador Tea, Marshmallow, Mastic, Meadowsweet, Mei Yen, Melegueta pepper (Aframomum melegueta), Mint (Mentha spp.), Milk thistle (Silybum), Bergamot (Monarda didyma), Motherwort, Mountain Skullcap, Mullein (Verbascum thapsus), Mustard, Mustard seed, Nashia inaguensis, Neem, Nepeta, Nettle, Nigella sativa, Nigella (Kolanji, Black caraway), Noni, Nutmeg (and Mace) Marijuana, Oenothera (Oenothera biennis et al), Olida (Eucalyptus olida), Oregano (Origanum vulgare, O. heracleoticum, and other species), Orris root, Osmorhiza, Olive Leaf (used in tea and as herbal supplement), Panax quinquefolius, Pandan leaf, Paprika, Parsley (Petroselinum crispum), Passion Flower, Patchouli, Pennyroyal, Pepper (black, white, and green), Peppermint, Peppermint Gum (Eucalyptus dives), Perilla, Plantain, Pomegranate, Ponch phoran, Poppy seed, Primrose (Primula) - candied flowers, tea, Psyllium, Purslane, Quassia, Quatre épices, Ramsons, Ras el-hanout, Raspberry (leaves), Reishi, Restharrow, Rhodiola rosea, Riberry (Syzygium luehmannii), Rocket/Arugula, Roman chamomile, Rooibos, Rosehips, Rosemary (Rosmarinus officinalis), Rowan Berries, Rue, Safflower, Saffron, Sage (Salvia officinalis), Saigon Cinnamon, St John's Wort, Salad Burnet (Sanguisorba minor or Poterium sanguisorba), Salvia, Sichuan Pepper (Sansho), Sassafras, Savory (Satureja hortensis, S. Montana), Schisandra (Schisandra chinensis), Scutellaria costaricana, Senna (herb), Senna obtusifolia, Sesame seed, Sheep Sorrel, Shepherd's Purse, Sialagogue, Siberian Chaga, Siberian ginseng (Eleutherococcus senticosus), Siraitia grosvenorii (luohanguo), Skullcap, Sloe Berries, Smudge Stick, Sonchus, Sorrel (Rumex spp.), Southernwood, Spearmint, Speedwell, Squill, Star anise, Stevia, Strawberry Leaves, Suma (Pfaffia paniculata), Sumac, Summer savory, Sutherlandia frutescens, Sweet grass, Sweet cicely (Myrrhis odorata), Sweet woodruff, Szechuan pepper (Xanthoxylum piperitum), Tacamahac, Tamarind, Tandoori masala, Tansy, Tarragon (Artemisia dracunculus), Tea, Teucrium polium, Thai basil, Thistle, Thyme, Toor Dall, Tormentil, Tribulus terrestris, Tulsi (Ocimum tenuiflorum), Turmeric (Curcuma longa), Uva Ursi also known as Bearberry, Vanilla (Vanilla planifolia), Vasaka, Vervain, Vetiver, Vietnamese Coriander (Persicaria odorata), Wasabi (Wasabia japonica), Watercress, Wattleseed, Wild ginger, Wild Lettuce, Wild thyme, Winter savory, Witch Hazel, Wolfberry, Wood Avens, Wood Betony, Woodruff, Wormwood, Yarrow, Yerba Buena, Yohimbe, Za'atar, Zedoary Root.

Preferably the treatment is directed to cereals as defined above, as well as to corn and/or soybeans. Preferably, the cereals are selected from the group consisting of wheat and barley.

This invention now provides advantageous uses of the compositions and the fungicidal compositions according to the present invention for controlling nematodes infesting crops selected from the group consisting of vegetables, in particular tomato and cucurbits, potato, corn, soy, cotton, tobacco, coffee, fruits, in particular, citrus fruits, pine apples and bananas, and grapes and for increasing yield.

Particularly useful transgenic plants which may be treated according to the invention are plants containing transformation events, or a combination of transformation events, and that are listed for example in the databases for various national or regional regulatory agencies including Event 1143-14A (cotton, insect control, not deposited, described in WO 2006/128569); Event 1143-51B (cotton, insect control, not deposited, described in WO 2006/128570); Event 1445 (cotton, herbicide tolerance, not deposited, described in US-A 2002-120964 or WO 02/034946); Event 17053 (rice, herbicide tolerance, deposited as PTA-9843, described in WO 2010/117737); Event 17314 (rice, herbicide tolerance, deposited as PTA-9844, described in WO 2010/117735); Event 281-24-236 (cotton, insect control - herbicide tolerance, deposited as PTA-6233, described in WO 2005/103266 or US-A 2005-216969); Event 3006-210-23 (cotton, insect control - herbicide tolerance, deposited as PTA-6233, described in US-A 2007-143876 or WO 2005/103266); Event 3272 (corn, quality trait, deposited as PTA-9972, described in WO 2006/098952 or US-A 2006-230473); Event 40416 (corn, insect control - herbicide tolerance, deposited as ATCC PTA-11508, described in WO 2011/075593); Event 43A47 (corn, insect control - herbicide tolerance, deposited as ATCC PTA-11509, described in WO 2011/075595); Event 5307 (corn, insect control, deposited as ATCC PTA-9561, described in WO 2010/077816); Event ASR-368 (bent grass, herbicide tolerance, deposited as ATCC PTA-4816, described in US-A 2006-162007 or WO 2004/053062); Event B16 (corn, herbicide tolerance, not deposited, described in US-A 2003-126634); Event BPS-CV127-9 (soybean, herbicide tolerance, deposited as NCIMB No. 41603, described in WO 2010/080829); Event CE43-67B (cotton, insect control,

deposited as DSM ACC2724, described in US-A 2009-217423 or WO2006/128573); Event CE44-69D (cotton, insect control, not deposited, described in US-A 2010-0024077); Event CE44-69D (cotton, insect control, not deposited, described in WO 2006/128571); Event CE46-02A (cotton, insect control, not deposited, described in WO 2006/128572); Event COT102 (cotton, insect control, not deposited, described in US-A 2006-130175 or WO 2004/039986); Event COT202 (cotton, insect control, not deposited, described in US-A 2007-067868 or WO 2005/054479); Event COT203 (cotton, insect control, not deposited, described in WO 2005/054480); Event DAS40278 (corn, herbicide tolerance, deposited as ATCC PTA-10244, described in WO 2011/022469); Event DAS-59122-7 (corn, insect control - herbicide tolerance, deposited as ATCC PTA 11384 , described in US-A 2006-070139); Event DAS-59132 (corn, insect control - herbicide tolerance, not deposited, described in WO 2009/100188); Event DAS68416 (soybean, herbicide tolerance, deposited as ATCC PTA-10442, described in WO 2011/066384 or WO 2011/066360); Event DP-098140-6 (corn, herbicide tolerance, deposited as ATCC PTA-8296, described in US-A 2009-137395 or WO 2008/112019); Event DP-305423-1 (soybean, quality trait, not deposited, described in US-A 2008-312082 or WO 2008/054747); Event DP-32138-1 (corn, hybridization system, deposited as ATCC PTA-9158, described in US-A 2009-0210970 or WO 2009/103049); Event DP-356043-5 (soybean, herbicide tolerance, deposited as ATCC PTA-8287, described in US-A 2010-0184079 or WO 2008/002872); Event EE-1 (brinjal, insect control, not deposited, described in WO 2007/091277); Event FI117 (corn, herbicide tolerance, deposited as ATCC 209031, described in US-A 2006-059581 or WO 98/044140); Event GA21 (corn, herbicide tolerance, deposited as ATCC 209033, described in US-A 2005-086719 or WO 98/044140); Event GG25 (corn, herbicide tolerance, deposited as ATCC 209032, described in US-A 2005-188434 or WO 98/044140); Event GHB119 (cotton, insect control - herbicide tolerance, deposited as ATCC PTA-8398, described in WO 2008/151780); Event GHB614 (cotton, herbicide tolerance, deposited as ATCC PTA-6878, described in US-A 2010-050282 or WO 2007/017186); Event GJ11 (corn, herbicide tolerance, deposited as ATCC 209030, described in US-A 2005-188434 or WO 98/044140); Event GM RZ13 (sugar beet, virus resistance , deposited as NCIMB-41601, described in WO 2010/076212); Event H7-1 (sugar beet, herbicide tolerance, deposited as NCIMB 41158 or NCIMB 41159, described in US-A 2004-172669 or WO 2004/074492); Event JOPLIN1 (wheat, disease tolerance, not deposited, described in US-A 2008-064032); Event LL27 (soybean, herbicide tolerance, deposited as NCIMB41658, described in WO 2006/108674 or US-A 2008-320616); Event LL55 (soybean, herbicide tolerance, deposited as NCIMB 41660, described in WO 2006/108675 or US-A 2008-196127); Event LLcotton25 (cotton, herbicide tolerance, deposited as ATCC PTA-3343, described in WO 03/013224 or US-A 2003-097687); Event LLRICE06 (rice, herbicide tolerance, deposited as ATCC-23352, described in US 6,468,747 or WO 00/026345); Event LLRICE601 (rice, herbicide tolerance, deposited as ATCC PTA-2600, described in US-A 2008-2289060 or WO 00/026356); Event LY038 (corn, quality trait, deposited as ATCC PTA-5623, described in US-A 2007-028322 or WO 2005/061720); Event MIR162 (corn, insect control, deposited as PTA-8166, described in US-A 2009-300784 or WO 2007/142840); Event MIR604 (corn, insect control, not deposited, described in US-A 2008-167456 or WO 2005/103301); Event MON15985 (cotton, insect control, deposited as ATCC PTA-2516, described in US-A 2004-250317 or WO 02/100163); Event MON810 (corn, insect control, not deposited, described in US-A 2002-102582); Event MON863 (corn, insect control, deposited as ATCC PTA-2605, described in WO 2004/011601 or US-A 2006-095986); Event MON87427 (corn, pollination control, deposited as ATCC PTA-7899, described in WO 2011/062904); Event MON87460 (corn, stress tolerance, deposited as ATCC PTA-8910, described in WO 2009/111263 or US-A 2011-0138504); Event MON87701 (soybean, insect control, deposited as ATCC PTA-8194, described in US-A 2009-130071 or WO 2009/064652); Event MON87705 (soybean, quality trait - herbicide tolerance, deposited as ATCC PTA-9241, described in US-A 2010-0080887 or WO 2010/037016); Event MON87708 (soybean, herbicide tolerance, deposited as ATCC PTA9670, described in WO 2011/034704); Event MON87754 (soybean, quality trait, deposited as ATCC PTA-9385, described in WO 2010/024976); Event MON87769 (soybean, quality trait, deposited as ATCC PTA-8911, described in US-A 2011-0067141 or WO 2009/102873); Event MON88017 (corn, insect control - herbicide tolerance, deposited as ATCC PTA-5582, described in US-A 2008-028482 or WO 2005/059103); Event MON88913 (cotton, herbicide tolerance, deposited as ATCC PTA-4854, described in WO 2004/072235 or US-A 2006-059590); Event MON89034 (corn, insect control, deposited as ATCC PTA-7455, described in WO 2007/140256 or US-A 2008-260932); Event MON89788 (soybean, herbicide tolerance, deposited as ATCC PTA-6708, described in US-A 2006-282915 or WO 2006/130436); Event MS11 (oilseed rape, pollination control - herbicide tolerance, deposited as ATCC PTA-850 or PTA-2485, described in WO 01/031042); Event MS8 (oilseed rape, pollination control - herbicide tolerance, deposited as ATCC PTA-730, described in WO 01/041558 or US-A 2003-188347); Event NK603 (corn, herbicide tolerance, deposited as ATCC PTA-2478, described in US-A 2007-292854); Event PE-7 (rice, insect control, not deposited, described in WO 2008/114282); Event RF3 (oilseed rape, pollination control - herbicide tolerance, deposited as ATCC PTA-730, described in WO 01/041558 or US-A 2003-188347); Event RT73 (oilseed rape, herbicide tolerance, not deposited, described in WO 02/036831 or US-A 2008-070260); Event T227-1 (sugar beet, herbicide tolerance, not deposited, described in WO 02/44407 or US-A 2009-265817); Event T25 (corn, herbicide tolerance, not deposited, described in US-A 2001-029014 or WO 01/051654); Event T304-40 (cotton, insect control - herbicide tolerance, deposited as ATCC PTA-8171, described in US-A 2010-077501 or WO 2008/122406); Event T342-142 (cotton, insect control, not deposited, described in WO 2006/128568); Event TC 1507 (corn, insect control - herbicide tolerance,

not deposited, described in US-A 2005-039226 or WO 2004/099447); Event VIP1034 (corn, insect control - herbicide tolerance, deposited as ATCC PTA-3925., described in WO 03/052073), Event 32316 (corn,insect control-herbicide tolerance,deposited as PTA-11507, described in WO 2011/084632), Event 4114 (corn,insect control-herbicide tolerance,deposited as PTA-11506, described in WO 2011/084621).The fungicidal compositions of the present invention comprise an effective and non-phytotoxic amount of the active ingredients (A), (B) and optionally (C), with the expression "effective and non-phytotoxic amount" means an amount of the ingredients and the active compositions according to the invention which is sufficient to improve growth in crops by preventively and/or curatively controlling or destroying pathogenic fungi present or liable to appear on the crops, by notably avoiding or controlling the development of resistant strains to the active ingredients, by notably enhancing root growth and/or greening, by notably improving water use efficiency of the crops, by notably delaying senescence by notably enhancing yield and in each case does not entail any appreciable symptom of phytotoxicity for the said crops. Such an amount can vary within a wide range depending on the pathogen to be combated or controlled or the further plant physiology effects to be achieved, the type of crop, the climatic conditions and the compounds included in the fungicidal composition according to the invention. This amount can be determined by systematic field trials, which are within the capabilities of a person skilled in the art.

In the context of the present invention, the term "synergistic effect" is defined by Colby according to the article entitled "Calculation of the synergistic and antagonistic responses of herbicide combinations" Weeds, (1967), 15, pages 20-22.

The fungicidal compositions according to the present invention are suitable for the use in the treatment of plants against diseases and pathogenic fungi selected from the group consisting of:

Powdery Mildew Diseases such as *Blumeria* diseases caused for example by *Blumeria graminis*; *Podosphaera* diseases caused for example by *Podosphaera leucotricha*; *Sphaerotheca* diseases caused for example by *Sphaerotheca fuliginea*; *Uncinula* diseases caused for example by *Uncinula necator*;

Rust Diseases such as *Gymnosporangium* diseases caused for example by *Gymnosporangium sabinae*; *Hemileia* diseases caused for example by *Hemileia vastatrix*; *Phakopsora* diseases caused for example by *Phakopsora pachyrhizi* and *Phakopsora meibomiae*; *Puccinia* diseases caused for example by *Puccinia recondita*, *Puccinia graminis* or *Puccinia striiformis*; *Uromyces* diseases caused for example by *Uromyces appendiculatus*;

Oomycete Diseases such as *Albugo* diseases caused for example by *Albugo candida*; *Bremia* diseases caused for example by *Bremia lactucae*; *Peronospora* diseases caused for example by *Peronospora pisi* and *Peronospora brassicae*; *Phytophthora* diseases caused for example by *Phytophthora infestans*;

*Plasmopara* diseases caused for example by *Plasmopara viticola*; *Pseudoperonospora* diseases caused for example by *Pseudoperonospora humuli* and *Pseudoperonospora cubensis*; *Pythium* diseases caused for example by *Pythium ultimum*;

Leaf spot, Leaf blotch and Leaf Blight Diseases such as *Alternaria* diseases caused for example by *Alternaria solani*; *Cercospora* diseases caused for example by *Cercospora beticola*; *Cladiosporium* diseases caused for example by *Cladiosporium cucumerinum*; *Cochliobolus* diseases caused for example by *Cochliobolus sativus* (Conidiaform: *Drechslera,* Syn: *Helminthosporium*) or *Cochliobolus miyabeanus*; *Colletotrichum* diseases caused for example by *Colletotrichum lindemuthianum*; *Cycloconium* diseases caused for example by *Cycloconium oleaginum*; *Diaporthe* diseases caused for example by *Diaporthe citri*; *Elsinoe* diseases caused for example by *Elsinoe fawcettii*; *Gloeosporium* diseases caused for example by *Gloeosporium laeticolour*; *Glomerella* diseases caused for example by *Glomerella cingulata*; *Guignardia* diseases caused for example by *Guignardia bidwellii*; *Leptosphaeria* diseases caused for example by *Leptosphaeria maculans* and *Leptosphaeria nodorum*; *Magnaporthe* diseases caused for example by *Magnaporthe grisea*; *Mycosphaerella* diseases caused for example by *Mycosphaerella graminicola*, *Mycosphaerella arachidicola* and *Mycosphaerella fijiensis*; *Phaeosphaeria* diseases caused for example by *Phaeosphaeria nodorum*; *Pyrenophora* diseases caused for example by *Pyrenophora teres* or *Pyreizophora tritici repentis*; *Ramularia-* diseases caused for example by *Ramularia collo-cygni* or *Ramularia areola*; *Rhynchosporium* diseases caused for example by *Rhynchosporium secalis*; *Septoria* diseases caused for example by *Septoria apii* and *Septoria lycopersici*; *Tiphula* diseases caused for example by *Thyphula incarnata*; *Venturia* diseases caused for example by *Venturia inaequalis*;

Root-, Sheath and Stem Diseases such as *Corticium* diseases caused for example by *Corticium graminearum*; *Fusarium* diseases caused for example by *Fusarium oxysporum*; *Gaeumannomyces* diseases caused for example by *Gaeumannomyces graminis*; *Rhizoctonia* diseases caused for example by *Rhizoctonia solani*; *Sarocladium* diseases caused for example by *Sarocladium oryzae*; *Sclerotium* diseases caused for example by *Sclerotium oryzae*;

*Tapesia* diseases caused for example by *Tapesia acuformis*; *Thielaviopsis* diseases caused for example by *Thielaviopsis basicola*;

Ear and Panicle Diseases including Maize cob such as *Alternaria* diseases caused for example by *Alternaria spp*.; *Aspergillus* diseases caused for example by *Aspergillus flavus*; *Cladosporium* diseases caused for example by *Cladiosporium cladosporioides*; *Claviceps* diseases caused for example by *Claviceps purpurea*; *Fusarium* diseases caused for example by *Fusarium culmorum*; *Gibberella* diseases caused for example by *Gibberella zeae*; *Monographella* diseases caused for example by *Monographella nivalis*;

Smut- and Bunt Diseases such as *Sphacelotheca* diseases caused for example by *Sphacelotheca reiliana*; *Tilletia* diseases caused for example by *Tilletia caries*; *Urocystis* diseases caused for example by *Urocystis occulta*; *Ustilago* diseases caused for example by *Ustilago nuda*;

Fruit Rot and Mould Diseases such as *Aspergillus* diseases caused for example by *Aspergillus flavus*; *Botrytis* diseases caused for example by *Botrytis cinerea*; *Penicillium* diseases caused for example by *Penicillium expansum* and *Penicillium purpurogenum*; *Rhizopus* diseases caused by example by *Rhizopus stolonifer. Sclerotinia* diseases caused for example by *Sclerotinia sclerotiorum*; *Verticillium* diseases caused for example by *Verticillium alboatrum*;

Seed- and Soilborne Decay, Mould, Wilt, Rot and Damping-off diseases such as *Alternaria* diseases caused for example by *Alternaria brassicicola*; *Aphanomyces* diseases caused for example by *Aphanomyces euteiches*; *Ascochyta* diseases caused for example by *Ascochyta lentis*; *Aspergillus* diseases caused for example by *Aspergillus flavus*; *Cladosporium* diseases caused for example by *Cladosporium herbarum*; *Cochliobolus* diseases caused for example by *Cochliobolus sativus*; (Conidiaform: *Drechslera*, *Bipolaris* Syn: *Helminthosporium*); *Colletotrichum* diseases caused for example by *Colletotrichum coccodes*; *Fusarium* diseases caused for example by *Fusarium culmorum*; *Gibberella* diseases caused for example by *Gibberella zeae*; *Macrophomina* diseases caused for example by *Macrophomina phaseolina*; *Microdochium* diseases caused for example by *Microdochium nivale*; *Monographella* diseases caused for example by *Monographella nivalis*; *Penicillium* diseases caused for example by *Penicillium expansum*; *Phoma* diseases caused for example by *Phoma lingam*; *Phomopsis* diseases caused for example by *Phomopsis sojae*; *Phytophthora* diseases caused for example by *Phytophthora cactorum*; *Pyrenophora* diseases caused for example by *Pyrenophora graminea*; *Pyricularia* diseases caused for example by *Pyricularia oryzae*; *Pythium* diseases caused for example by *Pythium ultimum*; *Rhizoctonia* diseases caused for example by *Rhizoctonia solani*; *Rhizopus* diseases caused for example by *Rhizopus oryzae*; *Sclerotium* diseases caused for example by *Sclerotium rolfsii*; *Septoria* diseases caused for example by *Septoria nodoium*; *Typhula* diseases caused for example by *Tiphula incarnata*; *Verticillium* diseases caused for example by *Verticillium dahliae*;

Canker, Broom and Dieback Diseases such as *Nectria* diseases caused for example by *Nectria galligena*;

Blight Diseases such as *Monilinia* diseases caused for example by *Monilinia laxa*;

Leaf Blister or Leaf Curl Diseases including deformation of blooms and fruits such as *Exobasidium* diseases caused for example by *Exobasidium vexans.*

*Taphrina* diseases caused for example by *Taphrina deformans*;

Decline Diseases of Wooden Plants such as *Esca* disease caused for example by *Phaeomoniella clamydospora*, *Phaeoacremonium aleophilum* and *Fomitiporia mediterranea*; *Ganoderma* diseases caused for example by *Ganoderma boninense*; *Rigidoporus* diseases caused for example by *Rigidoporus lignosus*

Diseases of Flowers and Seeds such as *Botrytis* diseases caused for example by *Botrytis cinerea*;

Diseases of Tubers such as *Rhizoctonia* diseases caused for example by *Rhizoctonia solani; Helminthosporium* diseases caused for example by *Helminthosporium solani*;

Club root diseases such as *Plasmodiophora* diseases, cause for example by *Plamodiophora brassicae.*

Diseases caused by Bacterial Organisms such as *Xanthomonas* species for example *Xanthomonas campestris pv. oryzae*; *Pseudomonas* species for example *Pseudomonas syringae pv. lachrymans*; *Erwinia* species for example *Erwinia amylovora.*

The following diseases especially relate to soya beans:

Fungal diseases on leaves, stems, pods and seeds caused, for example, by *alternaria* leaf spot (*Alternaria spec. atrans tenuissima*), anthracnose (*Colletotrichum gloeosporoides dematium var. truncatum*), brown spot (*Septoria glycines*), *cercospora* leaf spot and blight (*Cercospora kikuchii*), *choanephora* leaf blight (*Choanephora infundibulifera trispora* (Syn.)), *dactuliophora* leaf spot (*Dactuliophora glycines*), downy mildew (*Peronospora manshurica*), *drechslera* blight (*Drechslera glycini*), frogeye leaf spot (*Cercospora sojina*), *leptosphaerulina* leaf spot (*Leptosphaerulina trifolii*), *phyllostica* leaf spot (*Phyllosticta sojaecola*), pod and stem blight (*Phomopsis sojae*), powdery mildew (*Microsphaera diffusa*), *pyrenochaeta* leaf spot (*Pyrenochaeta glycines*), *rhizoctonia* aerial, foliage, and web blight (*Rhizoctoizia solani*), rust (*Phakopsora pachyrhizi Phakopsora meibomiae*), scab (*Sphaceloma glycines*), *stemphylium* leaf blight (*Stemphylium botryosum*), target spot (*Corynespora cassiicola*).

Fungal diseases on roots and the stem base caused, for example, by black root rot (*Calonectria crotalariae*), charcoal rot (*Macrophomina phaseolina*), *fusarium* blight or wilt, root rot, and pod and collar rot (*Fusarium oxysporum*, *Fusarium orthoceras*, *Fusarium semitectum*, *Fusarium equiseti*), *mycoleptodiscus* root rot (*Mycoleptodiscus terrestris*), *neocosmospora* (*Neocosmopspora vasinfecta*), pod and stem blight (*Diaporthe phaseolorum*), stem canker (*Diapoithe phaseolorum var. caulivora*), *phytophthora* rot (*Phytophthora megasperma*), brown stem rot (*Phialophora gregata*), *pythium* rot (*Pythium aphanidermatum, Pythium irregulare*, *Pythium debaryanum*, *Pythium myriotylum, Pythium ultimum*), *rhizoctonia* root rot, stem decay, and damping-off (*Rhizoctotzia solani*), *sclerotinia* stem decay (*Sclerotinia sclerotiorum*), *sclerotinia* Southern blight (*Sclerotinia rolfsii*), *thielaviopsis* root rot (*Thielaviopsis basicola*).

Preference is given to controlling the following diseases of cereals, especially of wheat, and barley:

Fungal diseases on leaves and stems of wheat are, for example, eyespot (caused by *Tapesia* / *Oculimacula* / *Pseudocercosporella species*), Septoria leaf blotch (caused by *Septoria tritici*), leaf spot and glume blotch (caused by *Leptosphaeria nodorum*), brown rust (caused by *Puccinia triticiana*), stripe rust (caused by *Puccinia striiformis*), tan spot (caused by *Pyrenophora* /*Drechslera triti-repentis*), powdery mildew (caused by *Blumeria graminis* / *Etysiphe graminis*), and ear blight (caused by *Fusarium spp.*). Fungal diseases on leaves and stems of barley are, for example, eyespot (caused by *Tapesia* / *Oculimacula* / *Pseudocercosporella species*), leaf blotch (caused by *Rhynchosporium secalis*), net blotch (caused by *Pyrenophora* / *Drechslera teres*), brown rust (caused by *Puccinia hordei*), powdery mildew (caused by *Blumeria graminis* / *Etysiphe graminis*), and Ramularia leaf spot (caused by *Ramularia collo-cygni*).

Preferably the fungicidal compositions of the present invention are used for controlling pathogenic fungi, selected from the group consisting of *Pyrenophora* (including *Pyrenophora tritici-repentis*), *Septoria* (including *Septoria nodorum, Septoria tritici*), *Puccinia, Erysiphe* (synonym: *Blumeria*), *Leptosphaeria* (including *Leptosphaeria nodorum*) and *Pseudocercosporella* (synonym: *Tapesia* / *Oculimacula*). Most preferred is the treatment of *Septoria, Pyrenophora* and *Leptosphaeria*, especially *Pyrenophora tritici-repentis, Septoria nodorum, Septoria tritici* and *Leptosphaeria nodorum*.

It is also possible to control resistant strains of the organisms mentioned above.

In a preferred embodiment of the present invention the fungicidal compositions are used for the treatment of cereals, especially wheat, against *Pyrenophora* (especially *Pyrenophora tritici-repentis*), *Septoria* (especially *Septoria tritici*), *Puccinia, Erysiphe* (synonym: *Blumeria*), *Leptosphaeria* (especially *Leptosphaeria nodorum*), *Pseudocercosporella* (synonym: *Tapesia* / *Oculimacula*), with *Septoria, Pyrenophora* and *Leptosphaeria* being most preferred.

It is even more preferred to use the fungicidal compositions for the treatment of early and/or late leaf diseases and/or ear diseases of cereals.

The method of treating plants according to the present invention is characterized in that in the treatment of leaves from 0.1 to 10 000 g fungicidal composition per ha and in the treatment of seed from 2 to 200 g compositions or fungicidal composition per 100 kg of seed are employed. It is clearly understood that the doses indicated above are given as illustrative examples of the invention. A person skilled in the art will know how to adapt the application doses according to the nature of the crop, the disease, the pathogenic fungi and/or nematodes to be treated or any other growth improving effect to be achieved.

Preferred dosages comprise 75 g/ha of compound A, 75 g/ha of the further SDH inbibitor (preferably benzovindiflupyr) and, if present, 150 g/ha of the triazole fungicide (preferably epoxiconazole).

Seed Treatment

The invention further comprises a method for treating seed.

The invention further relates to seed which has been treated by one of the methods described in the previous paragraph. The inventive seeds are employed in methods for the protection of seed from harmful microorganisms. In

these methods, seed treated with at least one inventive active ingredient is used.

The inventive mixtures or compositions are also suitable for treating seed. A large part of the damage to crop plants caused by harmful organisms is triggered by the infection of the seed during storage or after sowing, and also during and after germination of the plant. This phase is particularly critical since the roots and shoots of the growing plant are particularly sensitive, and even minor damage may result in the death of the plant. There is therefore a great interest in protecting the seed and the germinating plant by using appropriate compositions.

The control of phytopathogenic fungi by treating the seed of plants has been known for a long time and is the subject of constant improvements. However, the treatment of seed entails a series of problems which cannot always be solved in a satisfactory manner. For instance, it is desirable to develop methods for protecting the seed and the germinating plant, which dispense with, or at least significantly reduce, the additional deployment of crop protection compositions after planting or after emergence of the plants. It is also desirable to optimize the amount of the active ingredient used so as to provide the best possible protection for the seed and the germinating plant from attack by phytopathogenic fungi, but without damaging the plant itself by the active ingredient employed. In particular, methods for the treatment of seed should also take account of the intrinsic fungicidal properties of transgenic plants in order to achieve optimal protection of the seed and the germinating plant with a minimum expenditure of crop protection compositions.

The present invention therefore also relates to a method for protection of seed and germinating plants from attack by phytopathogenic fungi, by treating the seed with an inventive composition. The invention likewise relates to the use of the inventive compositions for treatment of seed to protect the seed and the germinating plant from phytopathogenic fungi. The invention further relates to seed which has been treated with an inventive composition for protection from phytopathogenic fungi.

The control of phytopathogenic fungi which damage plants post-emergence is effected primarily by treating the soil and the above-ground parts of plants with crop protection compositions. Owing to the concerns regarding a possible influence of the crop protection compositions on the environment and the health of humans and animals, there are efforts to reduce the amount of active ingredients deployed.

One of the advantages of the present invention is that the particular systemic properties of the inventive mixtures and compositions mean that treatment of the seed with these mixtures and compositions not only protects the seed itself, but also the resulting plants after emergence, from phytopathogenic fungi. In this way, the immediate treatment of the crop at the time of sowing or shortly thereafter can be dispensed with.

It is likewise considered to be advantageous that the inventive mixtures or compositions can especially also be used with transgenic seed, in which case the plant growing from this seed is capable of expressing a protein which acts against pests. By virtue of the treatment of such seed with the inventive mixtures or compositions, merely the expression of the protein, for example an insecticidal protein, can control certain pests. Surprisingly, a further synergistic effect can be observed in this case, which additionally increases the effectiveness for protection against attack by pests.

The inventive compositions are suitable for protecting seed of any plant variety which is used in agriculture, in greenhouses, in forests or in horticulture and viticulture. In particular, this is the seed of cereals (such as wheat, barley, rye, triticale, sorghum/millet and oats), maize, cotton, soya beans, rice, potatoes, sunflower, bean, coffee, beet (for example sugar beet and fodder beet), peanut, oilseed rape, poppy, olive, coconut, cocoa, sugar cane, tobacco, vegetables (such as tomato, cucumbers, onions and lettuce), turf and ornamentals (see also below). The treatment of the seed of cereals (such as wheat, barley, rye, triticale and oats), maize and rice is of particular significance. Particularly preferred are the seeds of soybean.

As also described below, the treatment of transgenic seed with the inventive mixtures or compositions is of particular significance. This relates to the seed of plants containing at least one heterologous gene which enables the expression of a polypeptide or protein having insecticidal properties. The heterologous gene in transgenic seed can originate, for example, from microorganisms of the species Bacillus, Rhizobium, Pseudomonas, Serratia, Trichoderma, Clavibacter, Glomus or Gliocladium. This heterologous gene preferably originates from Bacillus sp., in which case the gene product is effective against the European maize borer and/or the Western maize rootworm. The heterologous gene more preferably originates from Bacillus thuringiensis.

In the context of the present invention, the inventive composition is applied to the seed alone or in a suitable formulation. Preferably, the seed is treated in a state in which it is sufficiently stable for no damage to occur in the course of treatment. In general, the seed can be treated at any time between harvest and sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15 % by weight. Alternatively, it is also possible to use seed which, after drying, for example, has been treated with water and then dried again.

When treating the seed, care must generally be taken that the amount of the inventive composition applied to the seed and/or the amount of further additives is selected such that the germination of the seed is not impaired, or that the resulting plant is not damaged. This has to be borne in mind in particular in the case of active ingredients which can have phytotoxic effects at certain application rates.

The inventive compositions can be applied directly, i.e. without containing any other components and without having been diluted. In general, it is preferable to apply the compositions to the seed in the form of a suitable formulation. Suitable formulations and methods for seed treatment are known to those skilled in the art and are described, for example, in the following documents: US 4,272,417, US 4,245,432, US 4,808,430, US 5,876,739, US 2003/0176428 A1, WO 2002/080675, WO 2002/028186.

The mixtures or compositions usable in accordance with the invention can be converted to the customary seed dressing formulations, such as solutions, emulsions, suspensions, powders, foams, slurries or other coating compositions for seed, and also ULV formulations.

These formulations are prepared in a known manner, by mixing the active ingredients or mixtures with customary additives, for example customary extenders and also solvents or diluents, dyes, wetting agents, dispersants, emulsifiers, antifoams, preservatives, secondary thickeners, adhesives, gibberellins and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients. Preference is given to using alkyl naphthalenesulphonates, such as diisopropyl or diisobutyl naphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Suitable nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The gibberellins which may be present in the seed dressing formulations usable in accordance with the invention may preferably be gibberellins A1, A3 (= gibberellic acid), A4 and A7; particular preference is given to using gibberellic acid. The gibberellins are known (cf. R. Wegler "Chemie der Pflanzenschutz- und Schädlingsbekämpfungsmittel" [Chemistry of the Crop Protection Compositions and Pesticides], vol. 2, Springer Verlag, 1970, p. 401-412).

The seed dressing formulations usable in accordance with the invention can be used, either directly or after previously having been diluted with water, for the treatment of a wide range of different seed, including the seed of transgenic plants. In this case, additional synergistic effects may also occur in interaction with the substances formed by expression.

For treatment of seed with the seed dressing formulations usable in accordance with the invention, or the preparations prepared therefrom by adding water, all mixing units usable customarily for the seed dressing are useful. Specifically, the procedure in the seed dressing is to place the seed into a mixer, to add the particular desired amount of seed dressing formulations, either as such or after prior dilution with water, and to mix everything until the formulation is distributed homogeneously on the seed. If appropriate, this is followed by a drying process.

Mycotoxins

In addition, the inventive treatment can reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can

be produced, for example, by the following fungi: Fusarium spec., such as F. acuminatum, F. asiaticum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sam¬bucinum, F. scirpi, F. semitectum, F. solani, F. sporotrichoides, F. langsethiae, F. subglutinans, F. tricinctum, F. verticillioides etc., and also by Aspergillus spec., such as A. flavus, A. parasiticus, A. nomius, A. ochraceus, A. clavatus, A. terreus, A. versicolor, Penicillium spec., such as P. verrucosum, P. viridicatum, P. citrinum, P. expansum, P. claviforme, P. roqueforti, Claviceps spec., such as C. purpurea, C. fusiformis, C. paspali, C. africana, Stachybotrys spec. and others.

Material Protection

The inventive mixtures or compositions can also be used in the protection of materials, for protection of industrial materials against attack and destruction by harmful microorganisms, for example fungi and insects.

In addition, the inventive mixtures or compositions can be used as antifouling compositions, alone or in combinations with other active ingredients.

Industrial materials in the present context are understood to mean inanimate materials which have been prepared for use in industry. For example, industrial materials which are to be protected by inventive mixtures or compositions from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The inventive mixtures or compositions may prevent adverse effects, such as rotting, decay, discoloration, decoloration or formation of mould.

In the case of treatment of wood the compounds/compositions according to the invention may also be used against fungal diseases liable to grow on or inside timber. The term "timber" means all types of species of wood, and all types of working of this wood intended for construction, for example solid wood, high density wood, laminated wood, and plywood. The method for treating timber according to the invention mainly consists in contacting one or more compounds according to the invention or a composition according to the invention; this includes for example direct application, spraying, dipping, injection or any other suitable means.

In addition, the inventive compounds can be used to protect objects which come into contact with saltwater or brackish water, especially hulls, screens, nets, buildings, moorings and signalling systems, from fouling.

The inventive method for controlling harmful fungi can also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, can be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The inventive mixtures or compositions may prevent adverse effects, such as rotting, decay, discoloration, decoloration or formation of mould.

Microorganisms capable of degrading or altering the industrial materials include, for example, bacteria, fungi, yeasts, algae and slime organisms. The inventive mixtures or compositions preferably act against fungi, especially moulds, wood-discoloring and wood-destroying fungi (Ascomycetes, Basidiomycetes, Deuteromycetes and Zygomycetes), and against slime organisms and algae. Examples include microorganisms of the following genera: Alternaria, such as Alternaria tenuis; Aspergillus, such as Aspergillus niger; Chaetomium, such as Chaetomium globosum; Coniophora, such as Coniophora puetana; Lentinus, such as Lentinus tigrinus; Penicillium, such as Penicillium glaucum; Polyporus, such as Polyporus versicolor; Aureobasidium, such as Aureobasidium pullulans; Sclerophoma, such as Sclerophoma pityophila; Trichoderma, such as Trichoderma viride; Ophiostoma spp., Ceratocystis spp., Humicola spp., Petriella spp., Trichurus spp., Coriolus spp., Gloeophyllum spp., Pleurotus spp., Poria spp., Serpula spp. and Tyromyces spp., Cladosporium spp., Paecilomyces spp. Mucor spp., Escherichia, such as Escherichia coli; Pseudomonas, such as Pseudomonas aeruginosa; Staphylococcus, such as Staphylococcus aureus, Candida spp. and Saccharomyces spp., such as Saccharomyces cerevisae.

Antimycotic Activity

In addition, the inventive mixtures or compositions also have very good antimycotic activity. They have a very broad antimycotic activity spectrum, especially against dermatophytes and yeasts, moulds and diphasic fungi (for example

against Candida species, such as C. albicans, C. glabrata), and Epidermophyton floccosum, Aspergillus species, such as A. niger and A. fumigatus, Trichophyton species, such as T. mentagrophytes, Microsporon species such as M. canis and M. audouinii. The list of these fungi by no means constitutes a restriction of the mycotic spectrum covered, and is merely of illustrative character.

The inventive mixtures or compositions can therefore be used both in medical and in non-medical applications. The advanced fungicidal activity of the compositions according to the invention is evident from the example below. While the individual active compounds exhibit weaknesses with regard to the fungicidal activity, the combinations have an activity which exceeds a simple addition of activities.

A synergistic effect of fungicides is always present when the fungicidal activity of the compositions exceeds the total of the activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):

If

X is the efficacy when active compound A is applied at an application rate of m ppm (or g/ha),

Y is the efficacy when active compound B is applied at an application rate of n ppm (or g/ha),

Z is the efficacy when active compound B is applied at an application rate of r ppm (or g/ha),

E1 is the efficacy when the active compounds A and B are applied at application rates of m and n ppm (or g/ha), respectively, and

E2 is the efficacy when the active compounds A, B and C are applied at application rates of m, n and r ppm (or g/ha), respectively, and

then

$$E_1 = X + Y - \frac{X \cdot Y}{100}$$

and for a ternary mixture:

$$E_2 = X + Y + Z - \left( \frac{X \cdot Y + X \cdot Z + Y \cdot Z}{100} \right) + \frac{X \cdot Y \cdot Z}{10000}$$

The degree of efficacy, expressed in % is denoted. 0 % means an efficacy which corresponds to that of the control while an efficacy of 100 % means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

The invention is illustrated by the following example. However the invention is not limited to the example.

Example

Septoria tritici-test (wheat) / preventive

| | |
|---|---|
| Solvent: | 49 parts by weight ofN,N-dimethylacetamide |
| Emulsifier: | 1 part by weight of alkylaryl polyglycol ether |

To produce a suitable preparation of active compound, 1 part by weight of active compound or compositions is mixed with the stated amounts of solvent and emulsifier, and the concentrate is diluted with water to the desired concentration.

To test for preventive activity, young plants are sprayed with the preparation of active compound or compositions at the stated rate of application.

After the spray coating has been dried, the plants are sprayed with a spore suspension of Septoria tritici. The plants remain for 48 hours in an incubation cabinet at approximately 20 °C and a relative atmospheric humidity of approximately 100% and afterwards for 60 hours at approximately 15 °C in a translucent incubation cabinet at a relative atmospheric humidity of approximately 100%.

The plants are placed in the greenhouse at a temperature of approximately 15 °C and a relative atmospheric humidity of approximately 80%.

The test is evaluated 21 days after the inoculation. 0% means an efficacy which corresponds to that of the untreated control, while an efficacy of 100% means that no disease is observed.

The table below clearly shows that the observed activity of the compositions according to the invention is greater than the calculated activity, i.e. a synergistic effect is present.

Table

| Septoria tritici-test (wheat) / preventive | | | |
|---|---|---|---|
| Active compounds | Application rate of active compound in ppm a.i. | Efficacy in % found* | calc.** |
| (I) N-[1-(2,4-dichlorophenyl)-1-methoxypropan-2-yl]-3-(difluoromethyl)-1-methyl-1H-pyrazole-4-carboxamide | 60 | 57 | |
| (IIa) Isopyrazam (B.4) | 60 | 0 | |
| (IIb) Benzovindiflupyr (B.10) | 60 | 0 | |
| (III) Epoxiconazole (C.9) | 60 | 14 | |
| (I) + (IIa) 1:1 | 60 + 60 | 71 | 57 |
| (I) + (IIb) 1:1 | 60 + 60 | 57 | 57 |
| (I) + (III) 1:1 | 60 + 60 | 93 | 63 |
| (IIa) + (III) 1:1 | 60 + 60 | 57 | 14 |
| (IIb) + (III) 1:1 | 60 + 60 | 71 | 14 |
| (I) + (IIa) + (III) 1:1:1 | 60 + 60 + 60 | 100 | 63 |
| (I) + (IIb) + (III) 1:1:1 | 60 + 60 + 60 | 100 | 63 |
| * found = activity found<br>** calc. = activity calculated using Colby's formula | | | |

## Claims

1. Fungicidal ternary compositions comprising

(A) the compound of the general formula (I)

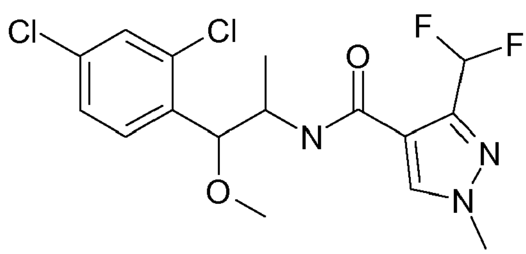

(I)

and agrochemically acceptable salts/isomers/enantiomers/tautomers/N-oxides of this compound,
B) one fungicide selected from the group of succinate dehydrogenase inhibitors (SDHIs) consisting of bixafen (B.1), penflufen (B.2), sedaxane (B.3), isopyrazam (comprising mixtures of syn-epimeric racemate 1RS,4SR,9RS and anti-epimeric racemate 1RS,4SR,9SR, anti-epimeric racemate 1RS,4SR,9SR, anti-epimeric enantiomer 1R,4S,9S, anti-epimeric enantiomer 1S,4R,9R, syn epimeric racemate 1RS,4SR,9RS, syn-epimeric enantiomer 1R,4S,9R, syn-epimeric enantiomer 1S,4R,9S) (B.4), penthiopyrad (B.5), furametpyr (B.6), boscalid (B.7), fluxapyroxad (B.8), N-[1-(2,4-dichlorophenyl)-1-methoxypropan-2-yl]-3-(difluoromethyl)-1-methyl-1H-pyrazole-4-carboxamide (B.9), N-[9-(dichloromethylen)-1,2,3,4-tetrahydro-1,4-methanonaphthalen-5-yl]-3-(difluoromethyl)-1-methyl-1H-pyrazol-4-carboxamide (B.10), N-[(1S,4R)-9-(dichloromethylen)-1,2,3,4-tetrahydro-1,4-methanonaphthalen-5-yl]-3-(difluoromethyl)-1-methyl-1H-pyrazol-4-carboxamide (B.11), N-[(1R,4S)-9-(dichloromethylen)-1,2,3,4-tetrahydro-1,4-methanonaphthalen-5-yl]-3-(difluoromethyl)-1-methyl-1H-pyrazol-4-carboxamide (B.12), 3-(difluoromethyl)-1-methyl-N-[2-(1,1,2,2-tetrafluoroethoxy)phenyl]-1H-pyrazol-4-carboxamide (B. 13), 3-(difluoromethyl)-N-[4-fluoro-2-(1,1,2,3,3,3-hexafluoropropoxy)phenyl]-1-methyl-1H-pyrazol-4-carboxamide (B.14), 3-(difluoromethyl)-1-methyl-N-[2-(1,1,2,3,3,3-hexafluoropropoxy)phenyl]-1-methyl-1H-pyrazol-4-carboxamide (B.15), 3-(difluoromethyl)-1-methyl-N-[2-(3-Cl-1,1,2-trifluoroethoxy)phenyl]-1H-pyrazol-4-carboxamide (B.16); and
C) one fungicide selected from the group of ergosterol biosynthesis inhibitors consisting of azaconazole (C.1), bitertanol (C.2), bromuconazole (C.3), cyproconazole (C.4), diclobutrazol (C.5), difenoconazole (C.6), diniconazole (C.7), diniconazole-M (C.8), epoxiconazole (C.9), etaconazole (C.10), fenbuconazole (C.11), fluquinconazole (C.12), flusilazole (C.13), flutriafol (C.14), furconazole (C.15), furconazole-cis (C.16), hexaconazole (C.17), imibenconazole (C.18), ipconazole (C.19), metconazole (C.20), myclobutanil (C.21), paclobutrazol (C.22), penconazole (C.23), propiconazole (C.24), prothioconazole (C.25), quinconazole (C.26), simeconazole (C.27), tebuconazole (C.28), tetraconazole (C.29), triadimefon (C.30), triadimenol (C.31), triticonazole (C.32), uniconazole (C.33), uniconazole-P (C.34), voriconazole (C.35), 1-(4-chlorophenyl)-2-(1H-1,2,4-triazol-1-yl)cycloheptanol (C.36).

**2.** Fungicidal ternary compositions according to claim 1, wherein the group of succinate dehydrogenase inhibitors (SDHIs) consists of of bixafen (B.1), isopyrazam (B.4), penthiopyrad (B.5), boscalid (B.7) and fluxapyroxad (B.8), N-[9-(dichloromethylen)-1,2,3,4-tetrahydro-1,4-methanonaphthalen-5-yl]-3-(difluoromethyl)-1-methyl-1H-pyrazol-4-carboxamide (B.10).

**3.** Fungicidal ternary compositions according to claim 1 or 2, wherein the group of ergosterol biosynthesis inhibitors consists of cyproconazole (C.4), epoxiconazole (C.9), propiconazole (C.24), prothioconazole (C.25) and tebuconazole (C.28).

**4.** Compositions comprising the fungicides according to any of claims 1 to 3 and further comprising auxiliaries, solvents, carriers, surfactants and/or extenders.

**5.** Method for improving growth in crops, **characterized in that** compositions according to any of claims 1 to 4 are applied to the seed, the plant, to fruits of plants or to the soil on which the plant grows or is supposed to grow, each including seeds of transgenic plants and transgenic plants.

**6.** Method according to claim 5, **characterized in that** in the treatment of leaves from 0.1 to 10 000 g compositions /ha and in the treatment of seed from 2 to 200 g compositions per 100 kg of seed are employed.

**7.** Method of treating plants, including transgenic plants, in need of better growth, increased harvest yields, a better developed root system, a larger leaf area, greener leaves and/or stronger shoots comprising applying to said plants the compositions according to claim 1 or 2 or compositions according to claim 3.

**8.** Use of a fungicidal composition according to any of claims 1 to 4 for improving growth in crops, wherein the improvement is **characterized by** at least one of the effects of the group consisting of preventively and/or curatively controlling pathogenic fungi, resistance management, and improved plant physiology effects selected from enhanced root growth, improved greening, improved water use efficiency, improved nitrogen-use efficiency, delayed senescence and enhanced yield.

**9.** Use according to claim 8, wherein resistance management is defined as prevention and/or delay of the development of insensitivity of pathogenic fungi to the fungicidal composition as defined in any of claims 1 to 4.

**10.** Use according to any of claims 8 or 9, wherein the pathogenic fungi are selected from the group consisting of *Tapesia* / *Oculimacula* / *Pseudocercosporella species, Septoria tritici, Leptosphaeria nodorum, Puccinia triticina*, *Puccinia striiformis, Pyrenophora* / *Drechslera triti-repentis*, *Blumeria graminis* / *Blumeria graminis, Fusarium spp*., *Rhynchosporium secalis, Pyrenophora* / *Drechslera teres*, *Puccinia hordei,* and *Ramularia collo-cygni*.

**11.** Use according to any of claims 8 to 10 for treatment of wheat, barley, rye, oats, rice, maize, triticale and millet/sorghum.

Europäisches Patentamt
European Patent Office
Office européen des brevets

# EUROPEAN SEARCH REPORT

Application Number
EP 13 19 9261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br><br>Y | WO 2010/000612 A1 (SYNGENTA PARTICIPATIONS AG [CH]; HAAS ULRICH JOHANNES [CH]; WALTER HAR) 7 January 2010 (2010-01-07)<br>* abstract *<br>* page 1, paragraph 3 - page 2 *<br>* table 1; compound 1.001 *<br>* examples B13-B17 *<br>----- | 1,3,8,10<br><br><br>1-11 | INV.<br>A01N43/56<br>A01N45/02<br>A01N43/653<br>A01N43/40<br>A01P3/00 |
| Y | CN 103 222 465 A (SHAANXI SUNGER ROAD BIO SCI CO) 31 July 2013 (2013-07-31)<br>* abstract *<br>* tables 1-1 to 1-6 *<br>----- | 1-11 | |
| Y | WO 2008/131901 A1 (SYNGENTA PARTICIPATIONS AG [CH]; TOBLER HANS [CH]; WALTER HARALD [CH];) 6 November 2008 (2008-11-06)<br>* abstract *<br>* page 1, paragraph 3 - page 7 *<br>* page 12, line 4 - line 5; compounds A-1.1 *<br>* tables B5.5, B6.4, B7.1, B7.2, B7.3 *<br>----- | 1-11 | TECHNICAL FIELDS SEARCHED (IPC)<br>A01N |

The present search report has been drawn up for all claims

1

| Place of search | Date of completion of the search | Examiner |
|---|---|---|
| Munich | 29 April 2014 | Molina de Alba, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 19 9261

This annex lists the patent family members relating to the patent documents cited in the above-mentioned European search report. The members are as contained in the European Patent Office EDP file on
The European Patent Office is in no way liable for these particulars which are merely given for the purpose of information.

29-04-2014

| Patent document cited in search report | Publication date | Patent family member(s) | Publication date |
|---|---|---|---|
| WO 2010000612 A1 | 07-01-2010 | AR 072394 A1 | 25-08-2010 |
| | | AU 2009265880 A1 | 07-01-2010 |
| | | CA 2729485 A1 | 07-01-2010 |
| | | CN 102076216 A | 25-05-2011 |
| | | CO 6321191 A2 | 20-09-2011 |
| | | EA 201100124 A1 | 30-08-2011 |
| | | EP 2306833 A1 | 13-04-2011 |
| | | JP 2011526277 A | 06-10-2011 |
| | | KR 20110025703 A | 10-03-2011 |
| | | MA 32422 B1 | 01-06-2011 |
| | | TW 201002204 A | 16-01-2010 |
| | | US 2011112124 A1 | 12-05-2011 |
| | | WO 2010000612 A1 | 07-01-2010 |
| CN 103222465 A | 31-07-2013 | NONE | |
| WO 2008131901 A1 | 06-11-2008 | AR 066291 A1 | 12-08-2009 |
| | | AT 490685 T | 15-12-2010 |
| | | AT 498311 T | 15-03-2011 |
| | | AT 501637 T | 15-04-2011 |
| | | AT 510452 T | 15-06-2011 |
| | | AT 518422 T | 15-08-2011 |
| | | AT 521236 T | 15-09-2011 |
| | | AT 521237 T | 15-09-2011 |
| | | AT 522139 T | 15-09-2011 |
| | | AT 523084 T | 15-09-2011 |
| | | AT 547003 T | 15-03-2012 |
| | | AU 2008243404 A1 | 06-11-2008 |
| | | CA 2682983 A1 | 06-11-2008 |
| | | CA 2842787 A1 | 06-11-2008 |
| | | CA 2842859 A1 | 06-11-2008 |
| | | CA 2842862 A1 | 06-11-2008 |
| | | CA 2842864 A1 | 06-11-2008 |
| | | CA 2842868 A1 | 06-11-2008 |
| | | CA 2842873 A1 | 06-11-2008 |
| | | CA 2842878 A1 | 06-11-2008 |
| | | CA 2842879 A1 | 06-11-2008 |
| | | CA 2842883 A1 | 06-11-2008 |
| | | CA 2842899 A1 | 06-11-2008 |
| | | CN 101677558 A | 24-03-2010 |
| | | CN 102715167 A | 10-10-2012 |
| | | CN 102726405 A | 17-10-2012 |
| | | CN 102726406 A | 17-10-2012 |
| | | CN 102726407 A | 17-10-2012 |
| | | CN 102726408 A | 17-10-2012 |
| | | CN 102726409 A | 17-10-2012 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 13 19 9261

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2014

| Patent document cited in search report | Publication date | Patent family member(s) | Publication date |
|---|---|---|---|
| | | CN 102726417 A | 17-10-2012 |
| | | CN 102726422 A | 17-10-2012 |
| | | CN 102742576 A | 24-10-2012 |
| | | CN 102742577 A | 24-10-2012 |
| | | CO 6241074 A2 | 20-01-2011 |
| | | CR 11072 A | 27-01-2010 |
| | | DK 2150113 T3 | 28-02-2011 |
| | | DK 2193714 T3 | 21-11-2011 |
| | | DK 2193715 T3 | 19-12-2011 |
| | | DK 2193716 T3 | 16-05-2011 |
| | | DK 2193717 T3 | 01-08-2011 |
| | | DK 2196088 T3 | 12-12-2011 |
| | | DK 2196089 T3 | 06-06-2011 |
| | | DK 2201839 T3 | 21-11-2011 |
| | | DK 2204093 T3 | 02-01-2012 |
| | | DK 2206431 T3 | 07-05-2012 |
| | | DK 2229814 T3 | 20-08-2012 |
| | | EA 200970999 A1 | 30-04-2010 |
| | | EA 201100996 A1 | 28-02-2012 |
| | | EA 201100997 A1 | 28-02-2012 |
| | | EA 201100998 A1 | 30-12-2011 |
| | | EA 201100999 A1 | 28-02-2012 |
| | | EA 201101000 A1 | 28-02-2012 |
| | | EA 201101001 A1 | 28-02-2012 |
| | | EA 201101003 A1 | 30-01-2012 |
| | | EA 201101004 A1 | 28-02-2012 |
| | | EA 201101005 A1 | 28-02-2012 |
| | | EC SP099697 A | 30-11-2009 |
| | | EG 25749 A | 25-06-2012 |
| | | EP 2150113 A1 | 10-02-2010 |
| | | EP 2193714 A1 | 09-06-2010 |
| | | EP 2193715 A1 | 09-06-2010 |
| | | EP 2193716 A1 | 09-06-2010 |
| | | EP 2193717 A1 | 09-06-2010 |
| | | EP 2196088 A1 | 16-06-2010 |
| | | EP 2196089 A1 | 16-06-2010 |
| | | EP 2201839 A1 | 30-06-2010 |
| | | EP 2204093 A1 | 07-07-2010 |
| | | EP 2206431 A1 | 14-07-2010 |
| | | EP 2229814 A1 | 22-09-2010 |
| | | ES 2356414 T3 | 07-04-2011 |
| | | ES 2360025 T3 | 31-05-2011 |
| | | ES 2361656 T3 | 21-06-2011 |
| | | ES 2365839 T3 | 11-10-2011 |
| | | ES 2370695 T3 | 21-12-2011 |
| | | ES 2371154 T3 | 28-12-2011 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 13 19 9261

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2014

| Patent document cited in search report | Publication date | Patent family member(s) | Publication date |
|---|---|---|---|
| | | ES 2372371 T3 | 19-01-2012 |
| | | ES 2372578 T3 | 24-01-2012 |
| | | ES 2373213 T3 | 01-02-2012 |
| | | ES 2381440 T3 | 28-05-2012 |
| | | ES 2387744 T3 | 01-10-2012 |
| | | GE P20125583 B | 25-07-2012 |
| | | GE P20135765 B | 25-02-2013 |
| | | GE P20135766 B | 25-02-2013 |
| | | GE P20135767 B | 25-02-2013 |
| | | GE P20135768 B | 25-02-2013 |
| | | GE P20135769 B | 25-02-2013 |
| | | GE P20135770 B | 25-02-2013 |
| | | GE P20135771 B | 25-02-2013 |
| | | GE P20135772 B | 25-02-2013 |
| | | GE P20135773 B | 25-02-2013 |
| | | GE P20135774 B | 25-02-2013 |
| | | HK 1135569 A1 | 08-04-2011 |
| | | HK 1144755 A1 | 28-10-2011 |
| | | HK 1144756 A1 | 16-09-2011 |
| | | HK 1144757 A1 | 06-01-2012 |
| | | HK 1144758 A1 | 06-01-2012 |
| | | HK 1145272 A1 | 06-01-2012 |
| | | HK 1145273 A1 | 19-08-2011 |
| | | HK 1145606 A1 | 06-01-2012 |
| | | HK 1145775 A1 | 06-01-2012 |
| | | HK 1145940 A1 | 13-07-2012 |
| | | HK 1145941 A1 | 21-09-2012 |
| | | HR P20110112 T1 | 31-03-2011 |
| | | HR P20110291 T1 | 31-05-2011 |
| | | HR P20110362 T1 | 30-06-2011 |
| | | HR P20110519 T1 | 31-08-2011 |
| | | HR P20110787 T1 | 30-11-2011 |
| | | HR P20110795 T1 | 30-11-2011 |
| | | HR P20110857 T1 | 31-12-2011 |
| | | HR P20110868 T1 | 31-12-2011 |
| | | HR P20110884 T1 | 31-12-2011 |
| | | HR P20120347 T1 | 31-05-2012 |
| | | HR P20120653 T1 | 30-09-2012 |
| | | JP 5351143 B2 | 27-11-2013 |
| | | JP 2010524990 A | 22-07-2010 |
| | | KR 20100015888 A | 12-02-2010 |
| | | MA 31382 B1 | 03-05-2010 |
| | | NZ 580186 A | 31-03-2011 |
| | | NZ 589393 A | 29-04-2011 |
| | | NZ 589394 A | 29-04-2011 |
| | | NZ 589395 A | 29-04-2011 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 13 19 9261

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2014

| Patent document cited in search report | Publication date | Patent family member(s) | Publication date |
|---|---|---|---|
| | | NZ 589396 A | 29-04-2011 |
| | | NZ 589397 A | 29-04-2011 |
| | | NZ 589398 A | 29-04-2011 |
| | | NZ 589402 A | 31-03-2011 |
| | | NZ 589403 A | 31-03-2011 |
| | | NZ 589404 A | 29-04-2011 |
| | | NZ 589405 A | 29-04-2011 |
| | | PL 2193714 T3 | 31-01-2012 |
| | | PL 2193715 T3 | 29-02-2012 |
| | | PL 2196088 T3 | 29-02-2012 |
| | | PL 2201839 T3 | 31-01-2012 |
| | | PL 2204093 T3 | 29-02-2012 |
| | | PL 2206431 T3 | 31-07-2012 |
| | | PT 2150113 E | 16-02-2011 |
| | | PT 2193714 E | 09-11-2011 |
| | | PT 2193715 E | 19-12-2011 |
| | | PT 2193716 E | 19-04-2011 |
| | | PT 2193717 E | 15-07-2011 |
| | | PT 2196088 E | 12-12-2011 |
| | | PT 2196089 E | 23-05-2011 |
| | | PT 2201839 E | 15-11-2011 |
| | | PT 2204093 E | 20-12-2011 |
| | | PT 2206431 E | 07-05-2012 |
| | | PT 2229814 E | 06-08-2012 |
| | | RS 51634 B | 31-08-2011 |
| | | RS 51750 B | 31-10-2011 |
| | | RS 51805 B | 31-12-2011 |
| | | RS 51922 B | 29-02-2012 |
| | | RS 51959 B | 29-02-2012 |
| | | RS 51978 B | 29-02-2012 |
| | | RS 52009 B | 30-04-2012 |
| | | RS 52042 B | 30-04-2012 |
| | | RS 52054 B | 30-04-2012 |
| | | RS 52303 B | 31-12-2012 |
| | | RS 52414 B | 28-02-2013 |
| | | SI 2150113 T1 | 31-03-2011 |
| | | SI 2193714 T1 | 30-12-2011 |
| | | SI 2193715 T1 | 30-12-2011 |
| | | SI 2193716 T1 | 31-05-2011 |
| | | SI 2193717 T1 | 30-09-2011 |
| | | SI 2196088 T1 | 30-12-2011 |
| | | SI 2196089 T1 | 30-06-2011 |
| | | SI 2201839 T1 | 30-12-2011 |
| | | SI 2204093 T1 | 31-01-2012 |
| | | SI 2206431 T1 | 31-05-2012 |
| | | SI 2229814 T1 | 28-09-2012 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 13 19 9261

This annex lists the patent family members relating to the patent documents cited in the above-mentioned European search report. The members are as contained in the European Patent Office EDP file on
The European Patent Office is in no way liable for these particulars which are merely given for the purpose of information.

29-04-2014

| Patent document cited in search report | Publication date | Patent family member(s) | Publication date |
|---|---|---|---|
| | | TW 200901884 A | 16-01-2009 |
| | | US 2010216640 A1 | 26-08-2010 |
| | | US 2014024532 A1 | 23-01-2014 |
| | | WO 2008131901 A1 | 06-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010000612 A
- WO 2011048120 A
- WO 201104812 A
- WO 2006128569 A
- WO 2006128570 A
- US 2002120964 A
- WO 02034946 A
- WO 2010117737 A
- WO 2010117735 A
- WO 2005103266 A
- US 2005216969 A
- US 2007143876 A
- WO 2006098952 A
- US 2006230473 A
- WO 2011075593 A
- WO 2011075595 A
- WO 2010077816 A
- US 2006162007 A
- WO 2004053062 A
- US 2003 A
- US 126634 A
- WO 2010080829 A
- US 2009217423 A
- WO 2006128573 A
- US 20100024077 A
- WO 2006128571 A
- WO 2006128572 A
- US 2006 A
- US 130175 A
- WO 2004039986 A
- US 2007067868 A
- WO 2005054479 A
- WO 2005054480 A
- WO 2011022469 A
- US 2006070139 A
- WO 2009100188 A
- WO 2011066384 A
- WO 2011066360 A
- US 2009137395 A
- WO 2008112019 A
- US 2008312082 A
- WO 2008054747 A
- US 20090210970 A
- WO 2009103049 A
- US 20100184079 A
- WO 2008002872 A
- WO 2007091277 A
- US 2006059581 A
- WO 98044140 A
- US 2005086719 A
- US 2005188434 A
- WO 2008151780 A
- US 2010050282 A
- WO 2007017186 A
- WO 2010076212 A
- US 2004172669 A
- WO 2004074492 A
- US 2008064032 A
- WO 2006108674 A
- US 2008320616 A
- WO 2006108675 A
- US 2008196127 A
- WO 03013224 A
- US 2003097687 A
- US 6468747 B
- WO 00026345 A
- US 20082289060 A
- WO 00026356 A
- US 2007028322 A
- WO 2005061720 A
- US 2009300784 A
- WO 2007142840 A
- US 2008167456 A
- WO 2005103301 A
- US 2004250317 A
- WO 02100163 A
- US 2002102582 A
- WO 2004011601 A
- US 2006095986 A
- WO 2011062904 A
- WO 2009111263 A
- US 20110138504 A
- US 2009130071 A
- WO 2009064652 A
- US 20100080887 A
- WO 2010037016 A
- WO 2011034704 A
- WO 2010024976 A
- US 20110067141 A
- WO 2009102873 A
- US 2008028482 A
- WO 2005059103 A
- WO 2004072235 A
- US 2006059590 A
- WO 2007140256 A
- US 2008260932 A
- US 2006282915 A
- WO 2006130436 A

- WO 01031042 A
- WO 01041558 A
- US 2003188347 A
- US 2007 A
- US 292854 A
- WO 2008114282 A
- WO 02036831 A
- US 2008070260 A
- WO 0244407 A
- US 2009265817 A
- US 2001029014 A
- WO 01051654 A
- US 2010077501 A
- WO 2008122406 A
- WO 2006128568 A
- US 2005039226 A
- WO 2004099447 A
- WO 03052073 A
- WO 2011084632 A
- WO 2011084621 A
- US 4272417 A
- US 4245432 A
- US 4808430 A
- US 5876739 A
- US 20030176428 A1
- WO 2002080675 A
- WO 2002028186 A


**Non-patent literature cited in the description**


- **AVENOT, H F et al.** *Crop Protection,* 2010, vol. 29, 643-651
- **AVENOT, H F et al.** *Pest Manag Sci,* 2011, wileyonlinelibrary.com
- *Czech J. Food Sci.,* 2000, vol. 21 (3), 91-96
- *Advanced Techniques in Soil Microbiology,* 2007, vol. 11, 319-341
- *Applied Soil Ecology,* 2000, vol. 15, 169-182
- **COLBY.** Calculation of the synergistic and antagonistic responses of herbicide combinations. *Weeds,* 1967, vol. 15, 20-22
- **R. WEGLER.** Chemie der Pflanzenschutz- und Schädlingsbekämpfungsmittel. Springer Verlag, 1970, vol. 2, 401-412
- **COLBY, S.R.** Calculating Synergistic and Antagonistic Responses of Herbicide Combinations. *Weeds,* 1967, vol. 15, 20-22
- **TAMMES.** Isoboles, a graphic representation of synergism in pesticides. *Neth. J. Plant Path.,* 1964, vol. 70, 73-80